# EUROPEAN PATENT SPECIFICATION

(11) **EP 2 684 887 B1**
(45) Date of publication and mention of the grant of the patent: **17.06.2015**
(21) Application number: 12305854.7
(22) Date of filing: 13.07.2012
(51) Int. Cl.: C07F 5/02

(54) **New process for preparing arylboranes by arylation of organoboron compounds**
Neues Verfahren zur Herstellung von Arylboranen durch Arylierung von bororganischen Verbindungen
Nouveau procédé de préparation d'arylboranes par arylation de composés organo-borés

(43) Date of publication of application: 15.01.2014
(73) Proprietor: UNIVERSITE DE BORDEAUX, 33000 Bordeaux (FR); Centre National de la Recherche Scientifique, 75794 Paris Cedex 16 (FR)
(72) Inventor: Pucheault, Mathieu Jonathan Damien, 33360 Camblanes Et Meynac (FR); Marciasini, Ludovic Daniel Alain, 33400 Talence (FR); Vaultier, Michel, 35410 Chateaugiron (FR)
(74) Representative: Grosset-Fournier, Chantal Catherine

(56) References cited:
- IBRAHEEM A I MKHALID ET AL: "C-H activation for the construction of C-B bonds", CHEMICAL REVIEWS, AMERICAN CHEMICAL SOCIETY, US, vol. 110, no. 2, 1 January 2010 (2010-01-01), pages 890-931, XP002640883, ISSN: 0009-2665, DOI: 10.1021/CR900206P [retrieved on 2009-12-22]
- WILLIS D M ET AL: "Palladium-catalyzed borylation of aryldiazonium tetrafluoroborate salts. A new synthesis of arylboronic esters", TETRAHEDRON LETTERS, ELSEVIER, AMSTERDAM, NL, vol. 41, no. 45, 4 November 2000 (2000-11-04), pages 8683-8686, XP004236058, ISSN: 0040-4039, DOI: 10.1016/S0040-4039(00)01573-2
- YANG H ET AL: "Cyclic amide bioisosterism: Strategic application to the design and synthesis of HCV NS5B polymerase inhibitors", BIOORGANIC & MEDICINAL CHEMISTRY LETTERS, PERGAMON, ELSEVIER SCIENCE, GB, vol. 20, no. 15, 1 August 2010 (2010-08-01), pages 4614-4619, XP027263633, ISSN: 0960-894X [retrieved on 2010-06-08]

## Description

The present invention relates to a new process for preparing arylboranes by arylation of organoboron compounds.

Boronic acids and esters are often prepared by a condensation reaction between an organomagnesium or an organolithium compound and a trialkylborate. This reaction requires specific conditions, in particular low temperatures, is not general and often expensive: it is thus difficult to implement it on an industrial scale. They are intermediates in a wide variety of research and industrial applications, for instance, in the synthesis of pharmaceuticals via cross-coupling reactions (N. Miyaura, A. Suzuki, Chem. Rev., 1995, 95, 2457). A simple synthetic methodology allowing for the direct attachment of aromatics to boron is thus an important challenge.

Methods avoiding the use of organometallics have been recently developed, using palladium activation of carbon-halide bond (Miyaura borylation) or iridium activation of Aryl-H (Hartwig borylation). Palladium activation is, for instance, described in : T. Ishiyama, M. Murata, N. Miyaura, J Org Chem 1995, 60, 7508-7510 ; T. Ishiyama, Y. Itoh, T. Kitano, N. Miyaura, Tetrahedron Letters 1997, 38, 3447-3450 ; T. Ishiyama, K. Ishida, N. Miyaura, Tetrahedron 2001, 57, 9813-9816 ; T. Ishiyama, N. Miyaura, Journal of Organometallic Chemistry 2000, 611, 392-402. Iridium activation is, for instance, described in : EP 1 500 659 ; T. M. Boller, J. M. Murphy, M. Hapke, T. Ishiyama, N. Miyaura, J. F. Hartwig, J. Am. Chem. Soc. 2005, 127, 14263-14278 ; J. F. Hartwig, K. S. Cook, M. Hapke, C. D. Incarvito, Y. Fan, C. E. Webster, M. B. Hall, J. Am. Chem. Soc. 2005, 127, 2538-2552 ; J. M. Murphy, X. Liao, J. F. Hartwig, J. Am. Chem. Soc. 2007 **;** J. M. Murphy, C. C. Tzschucke, J. F. Hartwig, Org. Lett. 2007, 9, 757-760 ; I. A. I. Mkhalid, J. H. Barnard, T. B. Marder, J. M. Murphy, J. F. Hartwig, Chemical Reviews 2009, 110, 890-931. Both methods use traditional pinacolborane or pinacolatodiboron as boron source, and are tolerant towards functional groups. But it is noteworthy that both methods use rather expensive complexes of transition metals, possibly toxic, half of the boron material being lost in the case of pinacolatodiboron. Their use in the last steps of a pharmaceuticals manufactoring must therefore be avoided.

Aminoboranes such as diisopropylaminoborane iPr₂N-BH₂ have been used since 2003 as borylation agents in palladium catalysed transformation of aryl bromides, iodides and triflates, by Vaultier et al : US 7 179 940 ; L. Euzenat, D. Horhant, Y. Ribourdouille, C. Duriez, G. Alcaraz, M. Vaultier, Chem. Commun. 2003, 2280-2281 ; L. Euzenat, D. Horhant, C. Brielles, G. Alcaraz, M. Vaultier, J. Organomet. Chem. 2005, 690, 2721-2724 ; L. Marciasini, N. Richy, M. Vaultier, M. Pucheault, Chem. Comm. 2012, 48*.* Diisopropylaminoborane is stable, easily prepared, handled and stored. Besides, arenediazonium salts, stable in the form of tetrafluoroborates, are easily available from corresponding anilines and have additionally successfully been used for metal-catalysed borylation reaction using pinacolatodiboron as coupling agents (D. M. Willis, R. M. Strongin, Tetrahedron Letters 2000, 41, 8683-8686; J. Zhang, X. Wang, H. Yu, J. Ye, Synlett 2012, 9, 1394-1396).

US2004/0133028 A1 discloses in example 72 a reaction of 4-methoxybenzenediazonium tetrafluoroborate with HB(pin) in dioxane in the presence of triethylamine and PdCl₂(dppf) to form 2-(4-methoxyphenyl)-4,4,5,5-tetramethyl-1,3,2-dioxaborolane.

Up to now, there is no simple process of arylation of a B-H bond involving mild conditions and low cost reagents.

One of the aims of the invention is to provide a new process for the preparation of arylboranes by arylation of a B-H bond.

Another aim of the invention is to provide a new access to aminoarylboranes and to arylboronates under mild conditions.

Another aim of the invention is to provide organoboron compounds which can be used as intermediates for the synthesis of various organoboron compounds by appropriate functionalization.

Another aim of the invention is to provide a process which can be implemented in a flow reactor with good yields.

The invention relates to the use of an arenediazonium salt or a heteroarenediazonium salt, and an organoboron compound containing at least one boron-hydrogen bond, in the absence of base,
for the implementation of a process involving an arylation reaction leading to an arylborane compound.

The inventors have unexpectedly found that a B-H bond can be arylated without using any additive. If there is an additive, its amount is less than 5%. The process can be in particular implemented without the presence of a base, and without the presence of an acid, provided that the solvent is appropriate. The term "base" designates a substance, other than an aminoborane, that can accept a proton.

"Arenediazonium salt" designates a compound containing an aromatic ring substituted by a diazonium -N₂⁺ group, in the form of a salt. The aromatic ring may be a heteroaromatic ring. "Organoboron compound" or "organoborane" refers to a compound containing a boron atom. "Arylation reaction" means that the B-H bond of the organoborane is replaced by a B-Ar bond, wherein Ar is the aromatic ring or, possibly, the heteroaromatic ring, brought to the boron by the arenediazonium salt, possibly by the heteroarenediazonium salt. The arylation reaction is thus responsible for the creation of a B-Ar compound, designated by the term "arylborane".

If the organoboron reagent contains 2 B-H bonds, only one is replaced by an aryl or heteroaryl group.

In this reaction, N₂ is a leaving group, which released from the arenediazonium salt, is found to be an accurate measurement of the arylborane formation.

According to an embodiment, the invention relates to the use of an arenediazonium salt or a heteroarenediazonium salt, for the preparation of an arylborane, wherein the aryl group Ar has from 6 to 26 carbon atoms, the aryl group being possibly a heteroaryl group containing one or several heteroatom(s) chosen among O, N or S, and having from 4 to 26 carbon atoms, in particular said arylborane being :
▪ an aminoarylborane of following formula 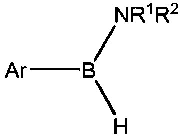 wherein the amino group is a -NR¹R² group, wherein R¹ and R², identical or different, represent:
   - linear alkyls having from 1 to 20 carbon atoms, branched alkyls having from 3 to 20 carbon atoms or cycloalkyls having 3 to 20 carbon atoms,
   - phenyls possibly substituted on the aromatic ring by halogen(s), hydroxy, alkoxy, alkyl groups having from 1 to 10 carbon atoms,
   R¹ and R² possibly forming an alkylene group corresponding to the formula -CR³R⁴-(CH₂)ₙ-CR⁵R⁶, in which n is ranging from 0 to 4, and the R³ to R⁶ substituents are chosen,
   independently of one another, among hydrogen and alkyl groups having from 1 to 20 carbon atoms, in particular said alkylene being 1,1,5,5-tetramethylpentylene,
   - benzyls having from 7 to 20 carbon atoms, wherein
      - the aromatic ring is possibly substituted by halogen(s), hydroxy, alkoxy, alkyl groups having from 1 to 10 carbon atoms,
      - and/or the carbon atom of the methylene group linked to the nitrogen atom, is possibly substituted by an alkyl group having from 1 to 10 carbon atoms, in particular by a methyl group, said carbon atom being possibly chiral,
▪ a dialkoxyarylborane (arylboronic ester) of following formula 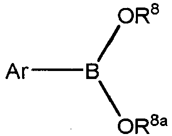 wherein the alkoxy groups are -OR⁸ and -OR^{8a}, wherein R⁸ and R^{8a}, identical or different, represent:
   - a linear alkyl having from 1 to 20 carbon atoms,
   - a branched alkyl having from 3 to 20 carbon atoms,
   - a cycloalkyl having from 3 to 20 carbon atoms, possibly substituted by one or several halogen atom(s),
   - a phenyl possibly substituted by halogen(s), hydroxy, alkoxy groups having from 1 to 5 carbon atoms,
   - a benzyl having from 7 to 20 carbon atoms, wherein
      - the aromatic ring is possibly substituted by halogen(s), hydroxy, alkoxy, alkyl groups having from 1 to 10 carbon atoms,
      - and/or the carbon atom of the methylene group linked to the nitrogen atom, is possibly substituted by an alkyl group having from 1 to 10 carbon atoms, in particular by a methyl group, said carbon atom being possibly chiral,
      - or an acetoxy group having from 1 to 20 carbon atoms,
      the alkoxy groups -OR⁸ and -OR^{8a} being in particular connected by a 2 to 4 carbons chain and possibly forming a 5 or 6 membered ring including the boron atom and the two oxygen atoms, the ring being therefore a 5 to 7 membered ring originated from a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
   - an alkoxyaminoarylborane of following formula 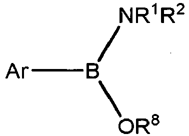 wherein
      - the amino group is a -NR¹R² group, R¹ and R² having the above mentioned meanings,
      - the alkoxy group is a -OR⁸ group, R⁸ having the above mentioned meanings,
   - a diaminoarylborane of following formula 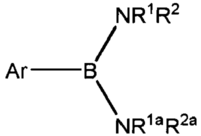 wherein the amino groups are -NR¹R² and -NR^{1a}R^{2a} groups, R¹ and R² having the above mentioned meanings, R^{1a} being identical or different from R¹, and R^{2a} being identical or different from R², R^{1a} and R^{2a} being identical or different,
      said arylborane being in particular an aminoarylborane or a cyclic diaminoarylborane. "Aryl group Ar" designates an aromatic group such as a phenyl group, for instance. "Heteroaryl group" means that the aromatic ring contains one or several heteroatom(s) chosen among O, N or S.
      The arylation reaction, performed in the invention, provides access to several categories of arylboranes.
▪ "Aminoarylborane" designates an organoboron compound in which the boron atom is at the oxidation state (III) and is bonded to one H, to one amino group and to one aryl group, possibly a heteroaryl group.

The preferred arylboranes reagents are aminoarylboranes wherein the nitrogen of the amino group is hindered at its a position, the amino group having the meanings mentioned above and being in particular a group chosen among:
- diisopropylamino : 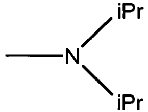
- N,N-dicyclohexylamino : 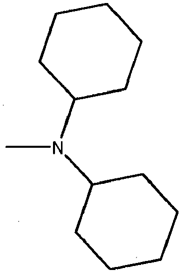
- 2,2,6,6-tetramethylpiperidino : 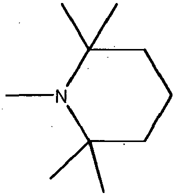
- [(methylbenzyl)(isopropyl)]amino, possibly chiral or racemic :

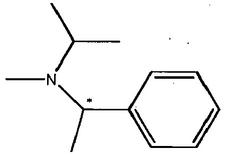

▪ "Dialkoxyarylborane (arylboronic ester)" designates an organoboron compound in which the boron atom is at the oxidation state (III) and is bonded to 2 alkoxy groups and to one aryl group, possibly one heteroaryl group.
   In the formula : 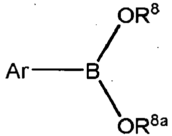 "the alkoxy groups -OR⁸ and -OR^{8a} being in particular connected by a 2 to 4 carbons chain and possibly forming a 5 or 6 membered ring including the boron atom and the two oxygen atoms" corresponds to an advantageous case, illustrated in particular by the boronate groups of formulae: 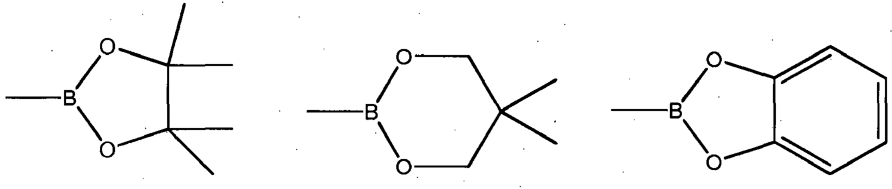 respectively derivated from pinacol, 2,2-dimethylpropane-1,4-diol, or catechol.
▪ "Alkoxyaminoarylborane " designates an organoboron compound in which the boron atom is at the oxidation state (III) and is bonded to one alkoxy group, to one amino group, and to one aryl group, possibly one heteroaryl group.
▪ "Diaminoarylborane" designates an organoboron compound in which the boron atom is at the oxidation state (III) and is bonded to two amino groups, and to one aryl group, possibly one heteroaryl group.

According to an embodiment, the invention relates to the use of activating means or not, wherein the activating means are chosen among activating agents, preferably a complex of a transition metal or a salt of a transition metal or a salt of a transition metal complex or radical generating means, preferably by light irradiation or a radical initiator.

The arylation reaction occurs with activating means, but also without activating means, which was unexpected.

"Activating means" designates activation by means of a chemical species or a physical parameter, such as exposure to light, in particular to UV-light.

"Activating agent" designates a chemical species able to catalyse the arylation reaction or able to be modified in the reaction medium to give *in situ* the catalyst of the arylation reaction. This activating agent can be considered as an additive. Its molar percentage is less than 5%.

The activating agents used in the process of the invention generally contain a transition metal. They are provided in the form of a complex wherein ligands and/or anions are bound to the metal.

The use of an activating agent is not absolutely necessary in most cases, but it increases the yield in arylborane.

The invention relates to the use of an aprotic polar solvent, in particular chosen among acetonitrile, propionitrile, butyronitrile, ethylacetate, isopropylacetate, dioxane, dimethylacetamide (DMAc), acetone, N-methyl-2-pyrrolidone (NMP), 2-methoxy-2-methylpropane (MTBE) or tetrahydrofuran (THF), or a mixture thereof, in particular acetonitrile.

The arylation reaction is advantageously performed in an aprotic polar solvent due to the high solubility of the arenediazonium salts in such a solvent. The arylation reaction proceeds faster than the competitive reduction of the arenediazonium salts into the corresponding anilines. Aprotic polar solvents such as acetonitrile, propionitrile, butyronitrile, ethylacetate, isopropylacetate, dioxane, dimethylacetamide (DMAc), acetone, N-methyl-2-pyrrolidone (NMP), 2-methoxy-2-methylpropane (MTBE) or tetrahydrofuran (THF), or a mixture thereof, are therefore preferred, in particular acetonitrile.

The reaction is unsuccessful in an apolar solvent such as toluene or heptane, most likely due to the poor solubility of the arenediazonium salts in such a solvent.

According to a particular embodiment, the invention relates to the use of an arenediazonium salt or a heteroarenediazonium salt of the formula Ar-N₂A,
wherein
▪ A represents an anion chosen among chloride, bromide, iodide, hexafluorophosphate, bistrifluoromethylsulfonylamidure, alkylsulfonates, arylsulfonates, alkylsulfates, alkylcarboxylates, trifluoroacetate, triflates or tetrafluoroborate, preferably the tetrafluoroborate anion,
▪ Ar is chosen among the aromatic groups including:
   ▪ an aryl group, preferably a phenyl, a naphtalenyl, an anthracenyl, a phenanthrenyl, a biphenyl group, said aryl group being possibly mono or polysubstituted, in particular di or trisubstituted, the substituents, identical or different, being chosen independently of one another,
   ▪ a heteroaryl group, preferably pyridine, pyrazine, imidazole, pyrazole, oxazole, isoquinoline, thiophene, benzothiophene, furane, benzofurane, isoindole, optionnally carrying at least one substituent,
      said substituent(s) carried by the aryl or by the heteroaryl group, being chosen among
      □ - F, -Cl, -Br or -I,
      □ -SO₂-NH₂, or a salt thereof, -SO₂-R⁹,
      □ -NO₂,
      -CF₃,
      □ -CN,
      □ -R¹⁰, a linear alkyl having from 1 to 20 carbon atoms, a branched alkyl having from 3 to 20 carbon atoms or a cycloalkyl having from 3 to 20 carbon atoms,
      □ an alkoxy group -OR¹¹,
      □ -OSi^{t}BuPh₂ of following formula 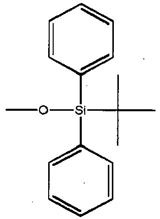
      □ -OSi^{t}BuMe₂ of following formula 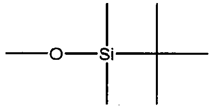
      □ an alkylthio group -SR¹²,
      □ a carboxylic group -COOH, or an ester group -COOR¹³, or an amido group -CO-NH₂ or a salt thereof, -CO-NR¹⁴R^{14a},
      □ a keto group -CO-R¹⁵, possibly protected as an acetal or thioacetal,
      □ an amino group -NR¹⁶R^{16a} or a salt thereof,
      □ an aldehyde group possibly protected as an acetal or thioacetal,
      □ a trialkylsilyl group -SiR¹⁷₃,
      □ a benzyl group having from 7 to 20 carbon atoms, wherein
         - the aromatic ring is possibly substituted by halogen(s), hydroxy, alkoxy, alkyl groups having from 1 to 10 carbon atoms, or by an amino or a diazonium group,
         - and/or the carbon atom of the methylene group linked to the nitrogen atom, is possibly substituted by an alkyl group having from 1 to 10 carbon atoms, in particular by a methyl group, said carbon atom being possibly chiral,
      □ a borylated group in which boron is a B(III) boron atom (oxidation state III), said group being in particular a dialkoxyboryl group of formula 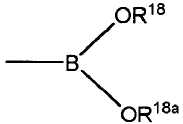
   wherein
   R¹⁸ and R^{18a}, identical or different, represent:
   - linear alkyls having from 1 to 20 carbon atoms,
   - branched alkyls having from 3 to 20 carbon atoms,
   - cycloalkyls having from 3 to 20 carbon atoms, possibly substituted by one or several halogen atom(s),
   - phenyls possibly substituted by halogen(s), hydroxy, alkoxy groups having from 1 to 5 carbon atoms,
   - benzyls having from 7 to 20 carbon atoms, wherein
   - the aromatic ring is possibly substituted by halogen(s), hydroxy, alkoxy, alkyl groups having from 1 to 10 carbon atoms,
   - and/or the carbon atom of the methylene group linked to the nitrogen atom, is possibly substituted by an alkyl group having from 1 to 10 carbon atoms, in particular by a methyl group, said carbon atom being possibly chiral,
   - or acetoxy groups having from 1 to 20 carbon atoms,
      the alkoxy groups -OR¹⁸ and -OR^{18a} being in particular connected by a 2 to 4 carbons chain and possibly forming a ring including the boron atom and the two oxygen atoms, the ring being therefore a 5 to 7 membered ring originated from a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
      □ a borylated group in which boron is a B(IV) boron atom (oxidation state IV), being in particular :
▪ a trifluoroborate group,
▪ a trihydroxyborate group,
▪ a trialkoxyborate group, -B(OR^{a})₃, wherein R^{a} is an alkyl group having from 1 to 10 carbon atoms, (OR^{a})₃ possibly forming two rings between the three oxygen atoms, originating from a triol chosen among 1,2,3-propane triol (glycerol) or 1,1,1-tris(hydroxymethyl)ethane (2-(hydroxymethyl)-2-methyl-1,3-propanediol),
▪ a boratrane generated from an aminodiol containing from 3 to 20 carbon atoms, said aminodiol forming, with the boron atom, rings of 5 or 6 members and aminodiol being a N,N-bis(hydroxyalkyl)alkylamine of the formula HO-R^{b}-NR^{c}-R^{b}'-OH,
   wherein
   R^{b} and R^{b'}, identical or different, are linear alkylene groups having 2 or 3 carbon atoms, or branched alkylene groups having from 3 to 5 carbon atoms,
   R^{c} is a hydrogen atom or an alkyl group having 1 to 4 carbon atoms,
▪ a MIDA borate group originated from 2,2'-(méthylazanediyl)diacetic acid and having the following formula 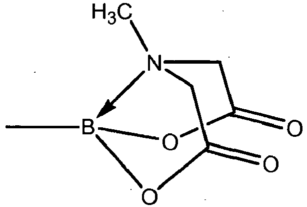
   □ a combination of the above,
   wherein
• R¹⁰ and R¹⁷ represent linear alkyls having from 1 to 20 carbon atoms, branched alkyls having from 3 to 20 carbon atoms or cycloalkyls having 3 to 20 carbon atoms,
• R⁹, R¹¹, R¹², R¹³, R¹⁴, R^{14a} R¹⁵ R¹⁶ and R^{16a} represent linear alkyls having from 1 to 20 carbon atoms, branched alkyls having from 3 to 20 carbon atoms or cycloalkyls having 3 to 20 carbon atoms, possibly substituted by one or several halogen atom(s), or phenyls possibly substituted by halogen(s), hydroxy, alkoxy groups having from 1 to 5 carbon atoms, or benzyls having from 7 to 20 carbon atoms, wherein the aromatic ring is possibly substituted by halogen(s), hydroxy, alkoxy, alkyl groups having from 1 to 10 carbon atoms, and/or the carbon atom of the methylene group linked to the nitrogen atom, is possibly substituted by an alkyl group having from 1 to 10 carbon atoms, in particular by a methyl group, said carbon atom being possibly chiral.

The preferred anion is the tetrafluoroborate anion. Arenediazonium tetrafluoroborate salts are either synthesized *in situ* from cheap and readily available anilines, or they can be isolated and stored.The aromatic ring can be mono, di or trisubstituted, in ortho, meta or para position(s). The arylation reaction works with arenediazonium salts wherein aryl group bears donating groups and with arenediazonium salts wherein aryl group bears withdrawing groups. Thus, the following arenediazonium salts have been used :

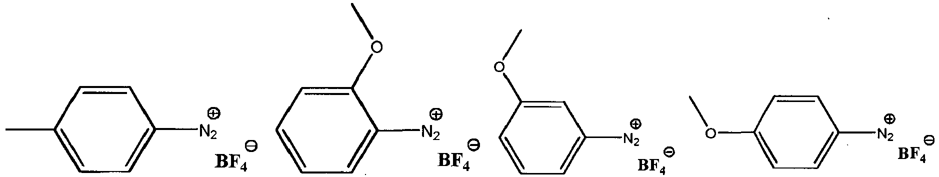

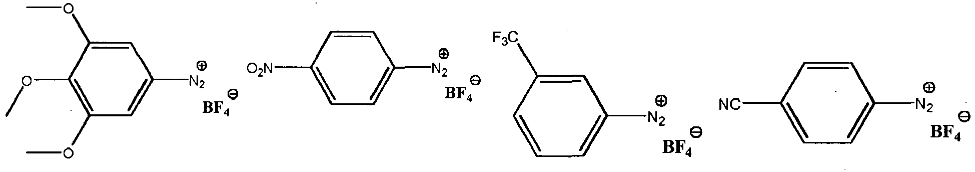

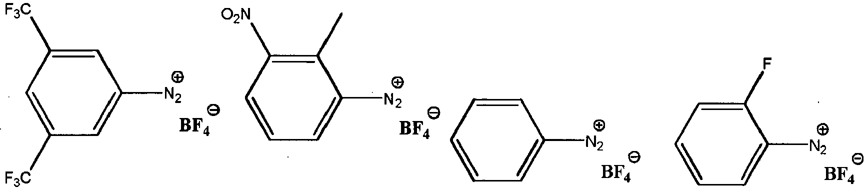

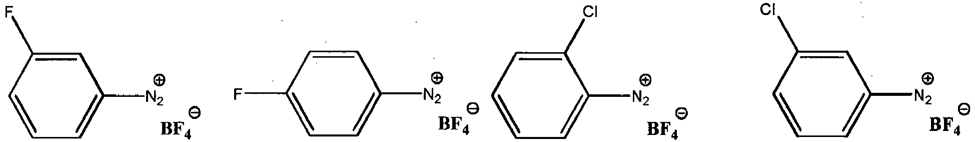

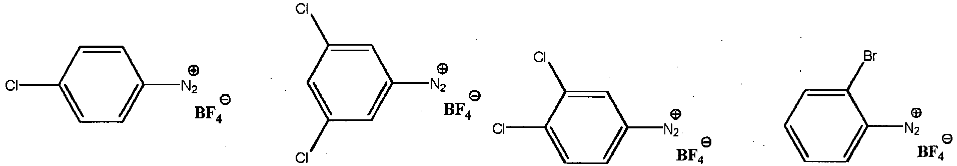

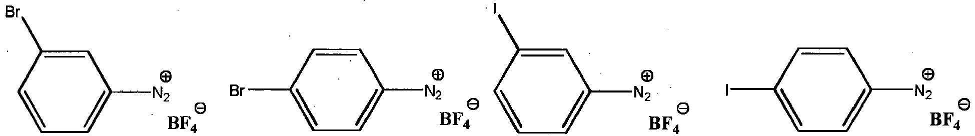

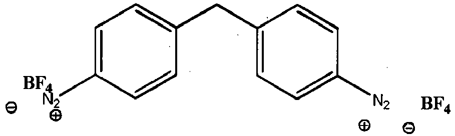

The aromatic ring can possibly be substituted by a borylated group, wherein boron is a B(III) or a B(IV).
- Among the borylated groups where boron atom is in oxidation state III, the following groups are preferably chosen: 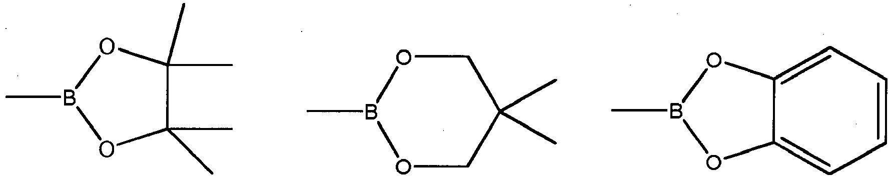 respectively derivated from pinacol, 2,2-dimethylpropane-1,4-diol, or catechol.
- among the borylated groups where boron atom is in oxidation state IV, the following groups are preferably chosen :
   ▪ a trifluoroborate group -BF₃⁻,
   ▪ a trihydroxyborate group -B(OH)₃⁻,
   ▪ a trialkoxyborate group, preferably chosen among the following tricyclic groups: 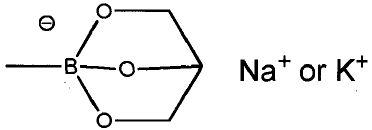 derived from 1,2,3-propane triol (glycerol), or 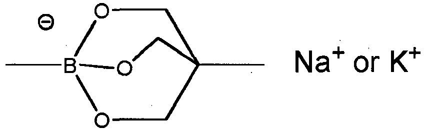 derived from 2-(hydroxymethyl)-2-methyl-1,3-propanediol,
   ▪ a boratrane group, preferably derived from the diethanolamine, of the following formula: 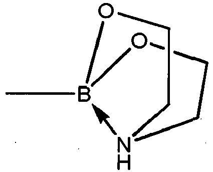
   ▪ a MIDA borate group originated from 2,2'-(methylazanediyl)diacetic acid, usable as an intermediate in Suzuki coupling reactions, and having the following formula :

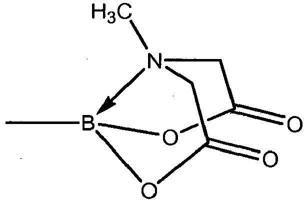

According to a particular embodiment, the invention relates to the use of an organoboron compound to be arylated containing at least one boron-hydrogen bond and being an organoborane of the general following formula I 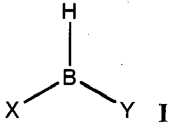 wherein
▪ X represents:
   □ -H,
   □ -NR¹R²,
   □ -R⁷,
   □ -OR⁸,
   wherein
   • R¹ and R², identical or different, represent:
      - linear alkyls having from 1 to 20 carbon atoms, branched alkyls having from 3 to 20 carbon atoms or cycloalkyls having 3 to 20 carbon atoms,
      - benzyls having from 7 to 20 carbon atoms, wherein
      - the aromatic ring is possibly substituted by halogen(s), hydroxy, alkoxy, alkyl groups having from 1 to 10 carbon atoms,
      - and/or the carbon atom of the methylene group linked to the nitrogen atom, is possibly substituted by an alkyl group having from 1 to 10 carbon atoms, in particular by a methyl group, said carbon atom being possibly chiral,
      - phenyls possibly substituted on the aromatic ring by halogen(s), hydroxy, alkoxy groups having from 1 to 5 carbon atoms,
      R¹ and R² possibly forming an alkylene group corresponding to the formula -CR³R⁴-(CH₂)ₙ-CR⁵R⁶, in which n is ranging from 0 to 4, and the R³ to R⁶ substituents are chosen, independently of one another, among hydrogen and alkyl groups having from 1 to 20 carbon atoms in particular said alkylene being 1,1,5,5-tetramethylpentylene,
   • R⁷ represents a linear alkyl having from 1 to 20 carbon atoms, a branched alkyl having from 3 to 20 carbon atoms or a cycloalkyl having from 3 to 20 carbon atoms,
   • R⁸ represents:
      - a linear alkyl having from 1 to 20 carbon atoms,
      - a branched alkyl having from 3 to 20 carbon atoms,
      - a cycloalkyl having from 3 to 20 carbon atoms, possibly substituted by one or several halogen atom(s),
      - a phenyl possibly substituted by halogen(s), hydroxy, alkoxy groups having from 1 to 5 carbon atoms,
      - a benzyl having from 7 to 20 carbon atoms, wherein
         - the aromatic ring is possibly substituted by halogen(s), hydroxy, alkoxy, alkyl groups having from 1 to 10 carbon atoms,
         - and/or the carbon atom of the methylene group linked to the nitrogen atom, is possibly substituted by an alkyl group having from 1 to 10 carbon atoms, in particular by a methyl group, said carbon atom being possibly chiral,
      - or an acetoxy group having from 1 to 20 carbon atoms,
▪ Y represents:
   □ -H,
   □ -NR^{1a}R^{2a},
   □ -R^{7a},
   □ -OR^{8a},
      wherein
      - R^{1a} and R^{2a}, identical or different, represent:
         - linear alkyls having from 1 to 20 carbon atoms, branched alkyls having from 3 to 20 carbon atoms or cycloalkyls having from 3 to 20 carbon atoms,
         - benzyls having from 7 to 20 carbon atoms, wherein
            - the aromatic ring is possibly substituted by halogen(s), hydroxy, alkoxy, alkyl groups having from 1 to 10 carbon atoms,
            - and/or the carbon atom of the methylene group linked to the nitrogen atom, is possibly substituted by an alkyl group having from 1 to 10 carbon atoms, in particular by a methyl group, said carbon atom being possibly chiral,
         - phenyls possibly substituted on the aromatic ring by halogen(s), hydroxy, alkoxy groups having from 1 to 5 carbon atoms,
   R^{1a} and R^{2a} possibly forming an alkylene group corresponding to the formula -CR^{3a}R^{4a}-(CH₂)ₙ-CR^{5a}R^{6a}, in which n is ranging from 0 to 4, and the R^{3a} to R^{6a} substituents are chosen, independently of one another, among hydrogen and alkyl groups having from 1 to 20 carbon atoms in particular said alkylene being 1,1,5,5-tetramethylpentylene,
   • R^{7a} represents a linear alkyl having from 1 to 20 carbon atoms, a branched alkyl having from 3 to 20 carbon atoms or a cycloalkyl having from 3 to 20 carbon atoms,
   • R^{8a} represents:
      - a linear alkyl having from 1 to 20 carbon atoms,
      - a branched alkyl having from 3 to 20 carbon atoms,
      - a cycloalkyl having from 3 to 20 carbon atoms, possibly substituted by one or several halogen atom(s),
      - a phenyl possibly substituted by halogen(s), hydroxy, alkoxy groups having from 1 to 5 carbon atoms,
      - a benzyl having from 7 to 20 carbon atoms, wherein
         - the aromatic ring is possibly substituted by halogen(s), hydroxy, alkoxy, alkyl groups having from 1 to 10 carbon atoms,
         - and/or the carbon atom of the methylene group linked to the nitrogen atom, is possibly substituted by an alkyl group having from 1 to 10 carbon atoms, in particular by a methyl group, said carbon atom being possibly chiral,
      - or an acetoxy group having from 1 to 20 carbon atoms,
X and Y being independently chosen, provided that if X=H then Y≠H, and if X=-OR⁸ and Y=-OR^{8a}, then the alkoxy groups -OR⁸ and -OR^{8a} are in particular connected by a 2 to 4 carbons chain and possibly form a ring including the boron atom and the two oxygen atoms, the ring being therefore a 5 to 7 membered ring originated from a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol.

According to a particular embodiment, the invention relates to the use of an organoboron compound of type I containing two boron-hydrogen bonds and being an aminoborane of general formula II 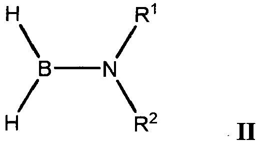 wherein
R¹ and R² have the above mentioned meanings.

According to a particular advantageous embodiment, the invention relates to the use of the organoboron compound of type I containing one boron-hydrogen bond and being a dialkoxyborane (boronic ester) of general formula III 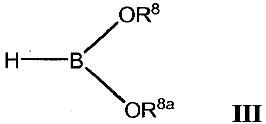 wherein
R⁸ and R^{8a} have the above mentioned meanings.

According to a particular embodiment, the invention relates to the use of an activating agent to perform the arylation reaction, the activating agent containing a transition metal belonging, in particular, to the group IV, VIII, IX, X or XI, being in particular a metallocene or a salt thereof chosen among:
- a titanocene, in particular (tBuCp)₂TiCl₂, CpTiCl₃, Cp₂TiCl₂, Cp*₂TiCl₂, Cp*TiCl₃, Cp₂Ti(CO)₂, TiCp₂, preferably Cp₂TiCl₂,
   wherein
   - tBu is a tertiobutyl group,
   - Cp is a cyclopentadienyl group, optionally substituted by a halogen, an alkyl group having 1 to 10 carbon atoms, an aromatic or heteroaromatic group having 5 to 12 carbon atoms, a vinyl group having 2 to 10 carbon atoms, an allyl group having 3 to 10 carbon atoms, an alkylammonium salt having from 1 to 10 carbon atoms,
   - Cp* is a 1,2,3,4,5-pentamethylcyclopentadienyl group,
- a zirconocene, in particular (indenyl)₂ZrCl₂, Cp₂ZrHCl (Schwartz's reagent), (tBuCp)₂ZrCl₂, preferably Cp₂ZrHCl,
   wherein indenyl is a benzocyclopentadienyl group,
- a ferrocene, in particular Cp₂Fe, BrCpFeCp, Cp*₂Fe, AcCpFeCp, *n*-BuCpFeCp, , *t-*BuCpFeCp, vinylCpFeCp, preferably Cp₂Fe,
- a ruthenocene, in particular Cp₂Ru, Cp*₂Ru, or a ruthenium complex, in particular Ru(acac)₃, wherein acac represents acetylacetonate,
- a cobaltocene, in particular Cp₂Co, [Cp₂Co]PF₆ (cobaltocenium hexafluorophosphate), Cp*₂Co,
- a nickelocene, in particular Cp₂Ni, Cp*₂Ni,
- a copper complex, in particular [Cu(OH)tmeda]₂, Cu(salen),
   wherein
   - tmeda represents tetramethylethylenediamine,
   - salen represents 2,2'-ethylenebis(nitrilomethylidene)diphenol,
- a palladium complex, in particular Pd(acac)₂ (palladium diacetylacetonate), (CH₂=CH-CH₂PdCl)₂ (allylpalladium chloride), or a palladium salt in particular Pd(OAc)₂, Pd(CN)₂,
the activating agent being preferably chosen among metallocenes, in particular ferrocenes, titanocenes, or zirconocenes, preferably Cp₂Fe, Cp₂TiCl₂ or Cp₂ZrHCl.

A "metallocene" is a compound containing a metal center in the oxidation state (II), and typically two cyclopentadienyl anions (Cp⁻, C₅H₅⁻), the resulting formula being (C₅H₅)₂M.

A metallocene forms a sandwich structure as represented in the scheme below:

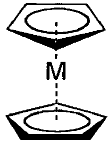

In this scheme, the two pentagons are the cyclopentadienyl anions with circles inside them indicating they are aromatically stabilized.

By substituting the cyclopentadienyl group, this parent metallocene gives rise to analogues. For instance, Cp may be replaced by Cp*, which is 1,2,3,4,5-pentamethylcyclopentadienyl group.

The complex of a transition metal is preferably an iron, titanium or zirconium compound stabilized by ligands, preferably Cp or a derivative of Cp, such as Cp*, mentioned above.

The metallocenes preferably used are: Cp₂Fe, Cp₂TiCl₂ or Cp₂ZrHCl.
- Cp₂Fe is the "ferrocene", (C₅H₅)₂Fe, systematically named bis(η⁵-cyclopentadienyl)iron(II). It is represented below:

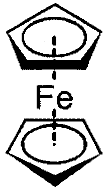

The Cp group may be substituted by one or several alkyl groups, such as methyl, n-Butyl, by an acetyl group or by a vinyl group, for instance.
- Cp₂TiCl₂, dichloridobis(η⁵- cyclopentadienyl) titanium(IV), is called titanocene dichloride, of formula (η⁵-C₅H₅)₂TiCl₂ represented below: 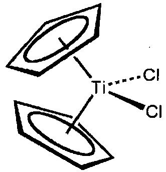
- Schwartz's reagent (chloridobis(η⁵-cyclopentadienyl)hydridozirconium) is the common name for (C₅H₅)₂ZrHCl, or Cp₂ZrHCl, sometimes described as zirconocene hydrochloride. It is represented below:

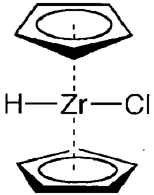

The present invention relates to a new process for the preparation of an arylborane compound containing at least one B-H bond, by arylation of a B-H bond, which comprises:
(1) a step of contacting an arenediazonium salt or a heteroarenediazonium salt with an organoboron compound containing at least one B-H bond, in a reaction medium containing a solvent, in the absence of base,
   for the preparation of an arylborane compound,
(2) a possible step of recovery
   and purification of said arylborane compound obtained at the step (1).

The term "base" does not include "aminoborane".

The "reaction medium" designates the mixture containing the arenediazonium or heteroarenediazonium salt, the organoboron compound and the solvent. The organoboron compound contains one or two B-H bond(s). One hydrogen bound to the boron is replaced by the aryl or heteroaryl group. This is represented in the equation below:

B-H → B-Ar

After arylation reaction, there is a "possible step of recovery" which means that, depending on the nature of the obtained product at the step (1), the product can be isolated or purified, or can be modified *i.e,* refunctionalized at the boron atom, to give a more stable compound.

According to an embodiment, the process for the preparation of an arylborane compound containing at least one B-H bond, by arylation of a B-H bond, comprises:
(1) a step of contacting an arenediazonium salt or a heteroarenediazonium salt with an organoboron compound containing at least one B-H bond, in a reaction medium containing a solvent, in the absence of base,
   in the presence of an activating agent,
   said activating agent containing a transition metal belonging, in particular, to the group IV, VIII, IX, X or XI, being in particular a metallocene or a salt thereof chosen among:
   - a titanocene, in particular (tBuCp)₂TiCl₂, CpTiCl₃, Cp₂TiCl₂, Cp*₂TiCl₂, Cp*TiCl₃, Cp₂Ti(CO)₂, TiCp₂, preferably Cp₂TiCl₂,
      wherein
      - tBu is a tertiobutyl group,
      - Cp is a cyclopentadienyl group, optionally substituted by a halogen, an alkyl group having 1 to 10 carbon atoms, an aromatic or heteroaromatic group having 5 to 12 carbon atoms, a vinyl group having 2 to 10 carbon atoms, an allyl group having 3 to 10 carbon atoms, an alkylammonium salt having from 1 to 10 carbon atoms,
      - Cp* is a 1,2,3,4,5-pentamethylcyclopentadienyl group,
   - a zirconocene, in particular (indenyl)₂ZrCl₂, Cp₂ZrHCl (Schwartz's reagent), (tBuCp)₂ZrCl₂, preferably Cp₂ZrHCl,
      wherein indenyl is a benzocyclopentadienyl group,
   - a ferrocene, in particular Cp₂Fe, BrCpFeCp, Cp*₂Fe, AcCpFeCp, *n*-BuCpFeCp, , *t-*BuCpFeCp, vinylCpFeCp, preferably Cp₂Fe,
   - a ruthenocene, in particular Cp₂Ru, Cp*₂Ru, or a ruthenium complex, in particular Ru(acac)3, wherein acac represents acetylacetonate,
   - a cobaltocene, in particular Cp₂Co, [Cp₂Co]PF₆ (cobaltocenium hexafluorophosphate), Cp*₂Co,
   - a nickelocene, in particular Cp₂Ni, Cp*₂Ni,
   - a copper complex, in particular[Cu(OH)tmeda]₂, Cu(salen),
      wherein
      - tmeda represents tetramethylethylenediamine,
      - salen represents 2,2'-ethylenebis(nitrilomethylidene)diphenol,
   - a palladium complex, in particular Pd(acac)₂ (palladium diacetylacetonate), (CH₂=CH-CH₂PdCl)₂ (allylpalladium chloride), or a palladium salt in particular Pd(OAc)₂, Pd(CN)₂,
   the activating agent being preferably chosen among metallocenes, in particular ferrocenes, titanocenes, or zirconocenes, preferably Cp₂Fe, Cp₂TiCl₂ or Cp₂ZrHCl,
   for the preparation of an arylborane compound,
(2) a possible step of recovery and purification of said arylborane compound obtained at the step (1).

In the reaction medium mentioned above, there is possibly an activating agent, preferably a metallocene, as mentioned above.

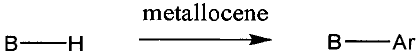

The invention relates to the preparation of an arylborane compound, wherein the aryl group Ar has from 6 to 26 carbon atoms,
the aryl group being possibly a heteroaryl group containing one or several heteroatom(s) chosen among O, N or S, and having from 4 to 26 carbon atoms, in particular said arylborane being:
▪ an aminoarylborane of following formula 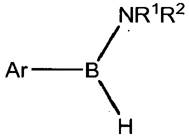 wherein the amino group is a -NR¹R² group, wherein R¹ and R², identical or different, represent:
   - linear alkyls having from 1 to 20 carbon atoms, branched alkyls having from 3 to 20 carbon atoms or cycloalkyls having from 3 to 20 carbon atoms,
   - benzyls having from 7 to 20 carbon atoms, wherein
      - the aromatic ring is possibly substituted by halogen(s), hydroxy, alkoxy, alkyl groups having from 1 to 10 carbon atoms,
      - and/or the carbon atom of the methylene group linked to the nitrogen atom, is possibly substituted by an alkyl group having from 1 to 10 carbon atoms, in particular by a methyl group, said carbon atom being possibly chiral,
   - phenyls possibly substituted on the aromatic ring by halogen(s), hydroxy, alkoxy groups having from 1 to 5 carbon atoms,
   - R¹ and R² possibly forming an alkylene group corresponding to the formula -CR³R⁴-(CH₂)ₙ-CR⁵R⁶, in which n is ranging from 0 to 4, and the R³ to R⁶ substituents are chosen, independently of one another, from hydrogen and alkyl groups having from 1 to 20 carbon atoms in particular said alkylene being 1,1,5,5-tetramethylpentylene,
▪ a dialkoxyarylborane (arylboronic ester) of following formula 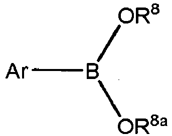 wherein the alkoxy groups are -OR⁸ and -OR^{8a}, wherein R⁸ and R^{8a}, identical or different, represent:
   - a linear alkyl having from 1 to 20 carbon atoms,
   - a branched alkyl having from 3 to 20 carbon atoms,
   - a cycloalkyl having from 3 to 20 carbon atoms, possibly substituted by one or several halogen atom(s),
   - a phenyl possibly substituted by halogen(s), hydroxy, alkoxy groups having from 1 to 5 carbon atoms,
   - a benzyl having from 7 to 20 carbon atoms, wherein
      - the aromatic ring is possibly substituted by halogen(s), hydroxy, alkoxy, alkyl groups having from 1 to 10 carbon atoms,
      - and/or the carbon atom of the methylene group linked to the nitrogen atom, is possibly substituted by an alkyl group having from 1 to 10 carbon atoms, in particular by a methyl group, said carbon atom being possibly chiral,
   - or an acetoxy group having from 1 to 20 carbon atoms,
   the alkoxy groups -OR⁸ and -OR^{8a} being in particular connected by a 2 to 4 carbons chain and possibly forming a 5 or 6 membered ring including the boron atom and the two oxygen atoms, the ring being therefore a 5 to 7 membered ring originated from a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
▪ an alkoxyaminoarylborane of following formula 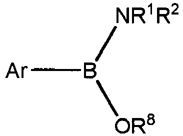 wherein
   - the amino group is a -NR¹R² group, R¹ and R² having the above mentioned meanings,
   - the alkoxy group is a -OR⁸ group, R⁸ having the above mentioned meanings,
▪ a diaminoarylborane of following formula 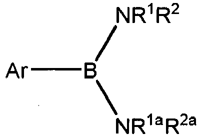 wherein the amino groups are -NR¹R² and -NR^{1a}R^{2a} groups, R¹ and R² having the above mentioned meanings, R^{1a} being identical or different from R¹, and R^{2a} being identical or different from R², R^{1a} and R^{2a} being identical or different,
said arylborane being in particular an aminoarylborane or a cyclic diaminoarylborane.

The process of the present invention comprises a step of contacting an arenediazonium salt or a heteroarenediazonium salt of formula Ar-N₂A,
wherein
▪ A represents an anion chosen among chloride, bromide, iodide, hexafluorophosphate, bistrifluoromethylsulfonylamidure, alkylsulfonates, arylsulfonates, alkylsulfates, alkylcarboxylates, trifluoroacetate, triflates or tetrafluoroborate, preferably the tetrafluoroborate anion,
▪ Ar is chosen among the aromatic groups including:
   ▪ an aryl group, preferably a phenyl, a naphtalenyl, an anthracenyl, a phenanthrenyl, a biphenyl group, said aryl group being possibly mono or polysubstituted, in particular di or trisubstituted, the substituents, identical or different, being chosen independently of one another,
   ▪ a heteroaryl group, preferably pyridine, pyrazine, imidazole, pyrazole, oxazole, isoquinoline, thiophene, benzothiophene, furane, benzofurane, isoindole, optionnally carrying at least one substituent,
      said substituent(s) carried by the aryl or by the heteroaryl group, being chosen among
      □ - F, -Cl, -Br or -I,
      □ -SO₂-NH₂, or a salt thereof, -SO₂-R⁹,
      □ -NO₂,
      □ -CF₃,
      □ -CN.
      □ -R¹⁰, a linear alkyl having from 1 to 20 carbon atoms, branched alkyl having from 3 to 20 carbon atoms or cycloalkyl having from 3 to 20 carbon atoms,
      □ an alkoxy group -OR¹¹,
      □ -OSi^{t}BuPh₂ of following formula 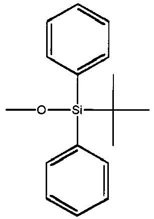
      □ -OSi^{t}BuMe₂ of following formula 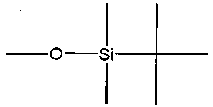
      □ an alkylthio group -SR¹²,
      □ a carboxylic group -COOH, or an ester group -COOR¹³, or an amido group -CO-NH₂ or a salt thereof, -CO-NR¹⁴R^{14a},
      □ a keto group -CO-R¹⁵, possibly protected as an acetal or thioacetal,
      □ an amino group -NR¹⁶R^{16a} or a salt thereof,
      □ an aldehyde group possibly protected as an acetal or thioacetal,
      □ a trialkylsilyl group -SiR¹⁷₃,
      □ a benzyl group having from 7 to 20 carbon atoms, wherein
         - the aromatic ring is possibly substituted by halogen(s), hydroxy, alkoxy, alkyl groups having from 1 to 10 carbon atoms, or by an amino or a diazonium group,
         - and/or the carbon atom of the methylene group linked to the nitrogen atom, is possibly substituted by an alkyl group having from 1 to 10 carbon atoms, in particular by a methyl group, said carbon atom being possibly chiral,
      □ a borylated group in which boron is a B(III) boron atom (oxidation state III), said group being in particular a dialkoxyboryl group of formula 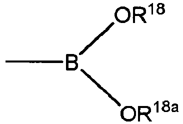
wherein
R¹⁸ and R^{18a}, identical or different, represent:
   - linear alkyls having from 1 to 20 carbon atoms,
   - branched alkyls having from 3 to 20 carbon atoms,
   - cycloalkyls having from 3 to 20 carbon atoms, possibly substituted by one or several halogen atom(s),
   - phenyls possibly substituted by halogen(s), hydroxy, alkoxy groups having from 1 to 5 carbon atoms,
   - benzyls having from 7 to 20 carbon atoms, wherein
   - the aromatic ring is possibly substituted by halogen(s), hydroxy, alkoxy, alkyl groups having from 1 to 10 carbon atoms,
   - and/or the carbon atom of the methylene group linked to the nitrogen atom, is possibly substituted by an alkyl group having from 1 to 10 carbon atoms, in particular by a methyl group, said carbon atom being possibly chiral,
   - or acetoxy groups having from 1 to 20 carbon atoms, the alkoxy groups -OR¹⁸ and -OR^{18a} being in particular connected by a 2 to 4 carbons chain and possibly forming a ring including the boron atom and the two oxygen atoms, the ring being therefore a 5 to 7 membered ring originated from a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
      □ a borylated group in which boron is a B(IV) boron atom (oxidation state IV), being in particular:
         ▪ a trifluoroborate group,
         ▪ a trihydroxyborate group,
         ▪ a trialkoxyborate group, -B(OR^{a})₃, wherein R^{a} is an alkyl group having from 1 to 10 carbon atoms, (OR^{a})₃ possibly forming two rings between the three oxygen atoms, originating from a triol chosen among 1,2,3-propane triol (glycerol) or 1,1,1-tris(hydroxymethyl)ethane (2-(hydroxymethyl)-2-methyl-1,3-propanediol),
         ▪ a boratrane generated from an aminodiol containing from 3 to 20 carbon atoms, said aminodiol forming, with the boron atom, rings of 5 or 6 members and aminodiol being a N,N-bis(hydroxyalkyl)alkylamine of the formula HO-R^{b}-NR^{c}-R^{b'}-OH,
   wherein
R^{b} and R^{b'}, identical or different, are linear alkylene groups having 2 or 3 carbon atoms, or branched alkylene groups having from 3 to 5 carbon atoms,
R^{c} is a hydrogen atom or an alkyl group having 1 to 4 carbon atoms,
   ▪ a MIDA borate group originated from 2,2'-(méthylazanediyl)diacetic acid and having the following formula 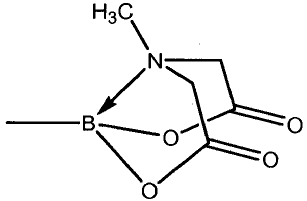
      □ a combination of the above,
      wherein
   • R¹⁰ and R¹⁷ represent linear alkyls having from 1 to 20 carbon atoms, branched alkyls having from 3 to 20 carbon atoms or cycloalkyls having 3 to 20 carbon atoms,
   • R⁹, R¹¹, R¹², R¹³, R¹⁴, R^{14a}, R¹⁵, R¹⁶ and R^{16a} represent linear alkyls having from 1 to 20 carbon atoms, branched alkyls having from 3 to 20 carbon atoms or cycloalkyls having 3 to 20 carbon atoms, possibly substituted by one or several halogen atom(s), or phenyls possibly substituted by halogen(s), hydroxy, alkoxy groups having from 1 to 5 carbon atoms, or benzyls having from 7 to 20 carbon atoms, wherein the aromatic ring is possibly substituted by halogen(s), hydroxy, alkoxy, alkyl groups having from 1 to 10 carbon atoms, and/or the carbon atom of the methylene group linked to the nitrogen atom, is possibly substituted by an alkyl group having from 1 to 10 carbon atoms, in particular by a methyl group, said carbon atom being possibly chiral,
with an organoboron compound to be arylated containing at least one boron-hydrogen bond and having the general following formula **I** 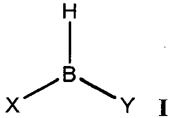 wherein
▪ X represents:
   □ -H,
   □ -NR¹R²,
   □ -R⁷,
   □ -OR⁸,
      wherein
      - R¹ and R², identical or different, represent:
         - linear alkyls having from 1 to 20 carbon atoms, branched alkyls having from 3 to 20 carbon atoms or cycloalkyls having 3 to 20 carbon atoms,
         - benzyls having from 7 to 20 carbon atoms, wherein
            - the aromatic ring is possibly substituted by halogen(s), hydroxy, alkoxy, alkyl groups having from 1 to 10 carbon atoms,
            - and/or the carbon atom of the methylene group linked to the nitrogen atom, is possibly substituted by an alkyl group having from 1 to 10 carbon atoms, in particular by a methyl group, said carbon atom being possibly chiral,
         - phenyls possibly substituted on the aromatic ring by halogen(s), hydroxy, alkoxy groups having from 1 to 5 carbon atoms,
R¹ and R² possibly forming an alkylene group corresponding to the formula -CR³R⁴-(CH₂)ₙ-CR⁵R⁶, in which n is ranging from 0 to 4, and the R³ to R⁶ substituents are chosen, independently of one another, among hydrogen and alkyl groups having from 1 to 20 carbon atoms in particular said alkylene being 1,1,5,5-tetramethylpentylene,
- R⁷ represents a linear alkyl having from 1 to 20 carbon atoms, a branched alkyl having from 3 to 20 carbon atoms or a cycloalkyl having from 3 to 20 carbon atoms,
- R⁸ represents:
   - a linear alkyl having from 1 to 20 carbon atoms,
   - a branched alkyl having from 3 to 20 carbon atoms,
   - a cycloalkyl having from 3 to 20 carbon atoms, possibly substituted by one or several halogen atom(s),
   - a phenyl possibly substituted by halogen(s), hydroxy, alkoxy groups having from 1 to 5 carbon atoms,
   - a benzyl having from 7 to 20 carbon atoms, wherein
      - the aromatic ring is possibly substituted by halogen(s), hydroxy, alkoxy, alkyl groups having from 1 to 10 carbon atoms,
      - and/or the carbon atom of the methylene group linked to the nitrogen atom, is possibly substituted by an alkyl group having from 1 to 10 carbon atoms, in particular by a methyl group, said carbon atom being possibly chiral,
   - or an acetoxy group having from 1 to 20 carbon atoms,

▪ Y represents:
   □ -H,
   □ -NR^{1a}R^{2a},
   □ -R^{7a},
   □ -OR^{8a},
wherein
• R^{1a} and R^{2a}, identical or different, represent:
   - linear alkyls having from 1 to 20 carbon atoms, branched alkyls having from 3 to 20 carbon atoms or cycloalkyls having from 3 to 20 carbon atoms,
   - benzyls having from 7 to 20 carbon atoms, wherein
      - the aromatic ring is possibly substituted by halogen(s), hydroxy, alkoxy, alkyl groups having from 1 to 10 carbon atoms,
      - and/or the carbon atom of the methylene group linked to the nitrogen atom, is possibly substituted by an alkyl group having from 1 to 10 carbon atoms, in particular by a methyl group, said carbon atom being possibly chiral,
   - phenyls possibly substituted on the aromatic ring by halogen(s), hydroxy, alkoxy groups having from 1 to 5 carbon atoms,
R^{1a} and R^{2a} possibly forming an alkylene group corresponding to the formula -CR^{3a}R^{4a}-(CH₂)ₙ-CR^{5a}R^{6a}, in which n is ranging from 0 to 4, and the R^{3a} to R^{6a} substituents are chosen, independently of one another, among hydrogen and alkyl groups having from 1 to 20 carbon atoms in particular said alkylene being 1,1,5,5-tetramethylpentylene,
• R^{7a} represents a linear alkyl having from 1 to 20 carbon atoms, a branched alkyl having from 3 to 20 carbon atoms or a cycloalkyl having from 3 to 20 carbon atoms,
• R^{8a} represents:
   - a linear alkyl having from 1 to 20 carbon atoms,
   - a branched alkyl having from 3 to 20 carbon atoms,
   - a cycloalkyl having from 3 to 20 carbon atoms, possibly substituted by one or several halogen atom(s),
   - a phenyl possibly substituted by halogen(s), hydroxy, alkoxy groups having from 1 to 5 carbon atoms,
   - a benzyl having from 7 to 20 carbon atoms, wherein
      - the aromatic ring is possibly substituted by halogen(s), hydroxy, alkoxy, alkyl groups having from 1 to 10 carbon atoms,
      - and/or the carbon atom of the methylene group linked to the nitrogen atom, is possibly substituted by an alkyl group having from 1 to 10 carbon atoms, in particular by a methyl group, said carbon atom being possibly chiral,
   - or an acetoxy group having from 1 to 20 carbon atoms,
X and Y being independently chosen, provided that if X=H then Y≠H,
and if X=-OR⁸ and Y=-OR^{8a}, then the alkoxy groups -OR⁸ and -OR^{8a} are in particular connected by a 2 to 4 carbons chain and possibly form a ring including the boron atom and the two oxygen atoms, the ring being therefore a 5 to 7 membered ring originated from a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
for the preparation of an arylborane or a heteroarylborane of following formula IV 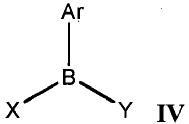 wherein
X, Y and Ar have the above mentioned meanings.

The 4 following equations represent the preparation of the 4 types of arylboranes available by the process of the invention:
▪ preparation of an aminoarylborane: 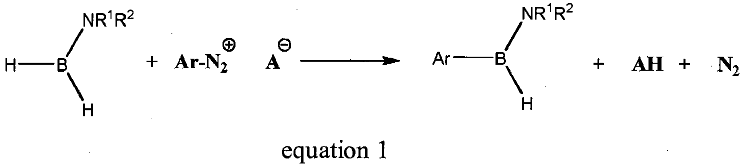
▪ preparation of an dialkoxyarylborane (arylboronic ester): 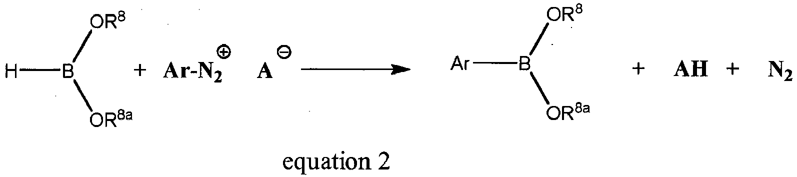
▪ preparation of an alkoxyaminoarylborane: 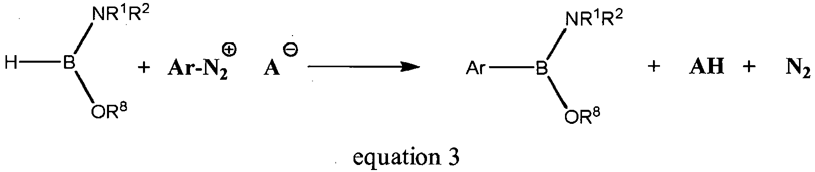
▪ preparation of an diaminoarylborane:

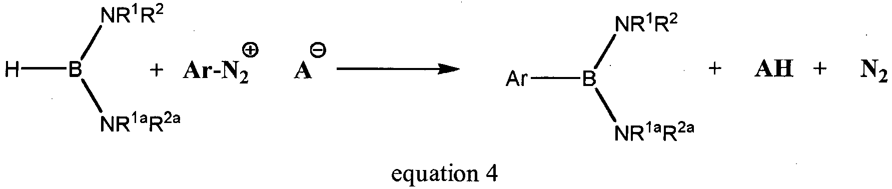

A has the above mentioned meanings.

The process particularly relates to the preparation of an aminoarylborane compound and comprises:
(1) a step of contacting an arenediazonium salt or a heteroarenediazonium salt with an aminoborane of following formula **II** 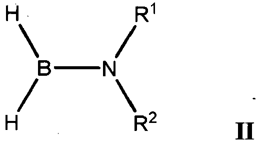 wherein R¹ and R², identical or different, have the above mentioned meanings, in a reaction medium containing a solvent, in the absence of base,
   for the preparation of an aminoarylborane compound of formula V, 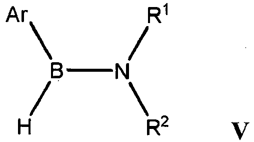 wherein Ar, R¹ and R² have the above mentioned meanings, R¹ and R² being preferably isopropyl groups,
(2) a possible step of recovery and purification of the aminoarylborane compound of formula **V** from the reaction medium.

The aminoarylboranes of formula **V** correspond to the preferred type of arylboranes available using the process of the invention. Their general preparation is represented in the above equation 1.

Compounds of formula II are easily available. An amine R¹R²NH is reacted with NaBH₄ in an acidic medium, under an inert atmosphere, to give an amine-borane complex of formula R¹R²NH.BH₃, subsequently concentrated under vacuum and isolated. The aminoborane R¹R²N-BH₂ is then obtained by heating the amine-borane complex, which results in a deshydrogenation, and the crude amonborane obtained is distilled to give the pure aminoborane which can be stored under an inert atmosphere of nitrogen or argon.

The aminoboranes thus obtained are represented below.
▪ diisopropylaminoborane, R¹=R² = iPr, 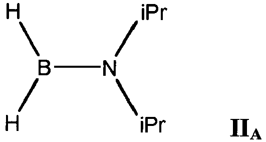 prepared from diisopropylamine,
▪ N,N-dicyclohexylaminoborane, R¹=R² = cyclohexyl, 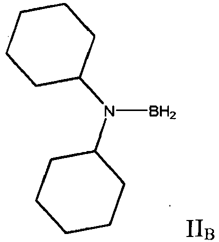 prepared from N,N-dicyclohexylamine,
▪ "R¹ and R² possibly forming an alkylene group corresponding to the formula - CR³R⁴-(CH₂)ₙ-CR⁵R⁶, in which n is ranging from 0 to 4, and the R³ to R⁶ substituents are chosen, independently of one another, among hydrogen and alkyl groups having from 1 to 20 carbon atoms, in particular said alkylene being 1,1,5,5-tetramethylpentylene"
   corresponds to the case of the 2,2,6,6-tetramethylpiperidinoborane, 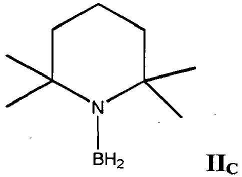 prepared from 2,2,6,6-tetramethylpiperidine,
▪ the case R¹≠R² corresponds, in particular, to [(methylbenzyl)(isopropyl)]aminoborane, R¹=iPr, R²=methylbenzyl, 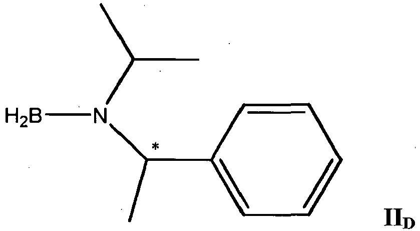 prepared from (methylbenzyl)(isopropyl)amine. In that case, the aminoborane can be optically active when the amine is chiral.

The yield in aminoboranes is at least of 90%.

Compounds II_{A}, II_{B}, II_{C} and II_{D} can then undergo an arylation reaction with an arenediazonium salt or a heteroarenediazonium salt, in a reaction medium containing a solvent, preferably acetonitrile, at room temperature, in the absence of base, with or without an activating means. The following equations describe the preparation of the aminoarylboranes of the general formula V, the aryl group having the above mentioned meanings.

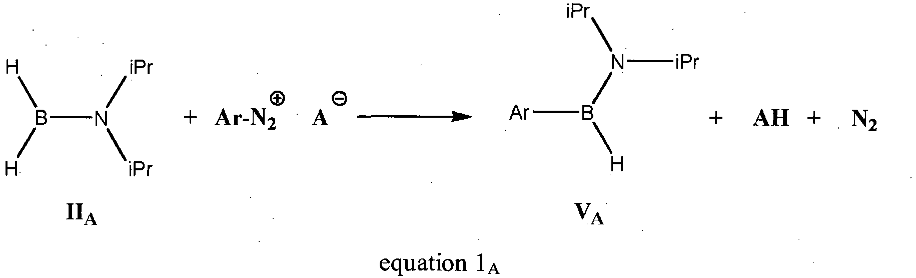

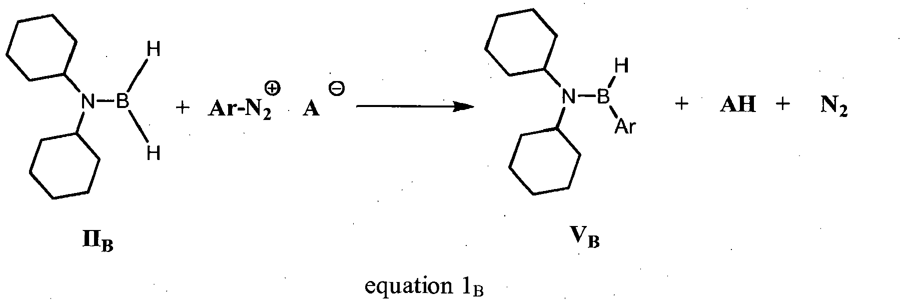

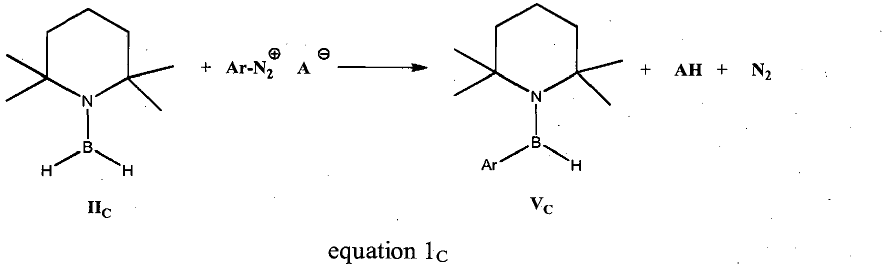

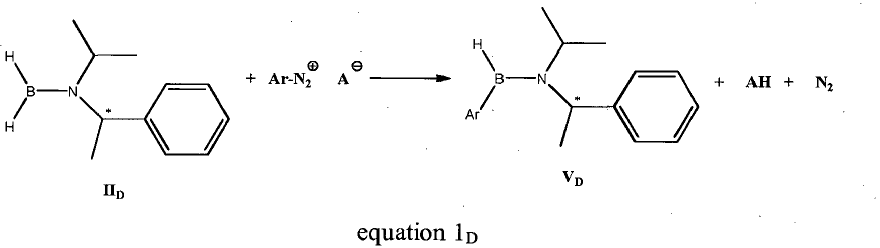

Compound **V_{D}** can be chiral when the (methylbenzyl)(isopropyl)amine used to prepare II_{D} is in its chiral form.

A has the above mentioned meanings.

According to a particularly advantageous embodiment, the process of the present invention relates to the preparation of a diisopropylaminoarylborane compound and comprises:
(1) a step of contacting an arenediazonium salt or a heteroarenediazonium salt with the diisopropylaminoborane of following formula **II_{A}** 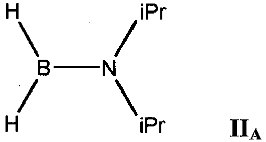 in a reaction medium containing a solvent, in the absence of base,
   for the preparation of a diisopropylaminoarylborane compound of formula **V_{A},** 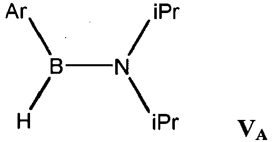 wherein Ar has the above mentioned meanings,
(2) a possible step of recovery and purification of the diisopropylaminoarylborane compound of formula **V_{A}** from the reaction medium.

The effect of the relative hindrance at the nitrogen atom in compounds II and therefore close to the boron atom, is to increase the chemioselectivity in favour of the arylation reaction. The yields are higher with hindered amines.

The compound II_{A} is advantageously used in the process.

According to a particularly advantageous embodiment, the process of the present invention relates to the preparation of a diisopropylaminoarylborane compound which comprises:
(1) a step of contacting an arenediazonium salt or a heteroarenediazonium salt with the diisopropylaminoborane of following formula **II_{A}** 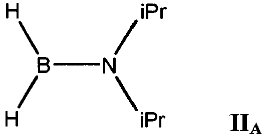 in a reaction medium containing a solvent, in the absence of base,
   in the presence of an activating agent preferably chosen among metallocenes, in particular ferrocenes, titanocenes, or zirconocenes, preferably Cp₂Fe, Cp₂TiCl₂ or Cp₂ZrHCl,
   for the preparation of a diisopropylaminoarylborane compound of formula **V_{A},** 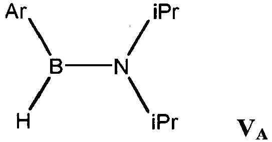 wherein Ar has the above mentioned meanings,
(2) a possible step of recovery and purification of the diisopropylaminoarylborane compound of formula **V_{A}** from the reaction medium.

The arylation reaction is carried out under mild conditions, even without any activating agent. However, the use of a small amount of activating agent (1% or even less than 1%), might increase the yield in aminoarylboranes.

The scheme below represents the reaction between diisopropylaminoborane and 4-methoxybenzenediazonium tetrafluoroborate,
- in the absence of activating agent (a),
- with ferrocene (b),
- with titanocene (c),
- and with Schwartz's reagent (d).

The yields are indicated. 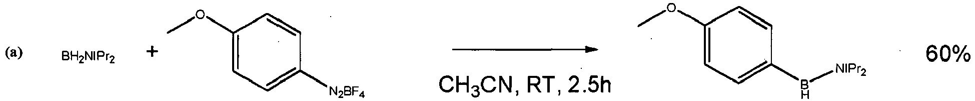 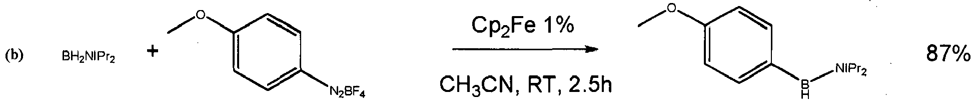 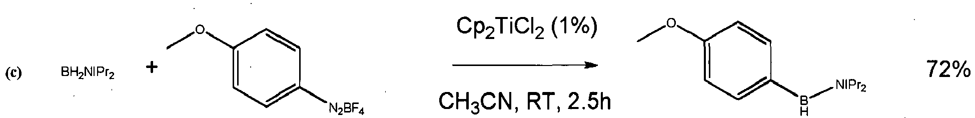 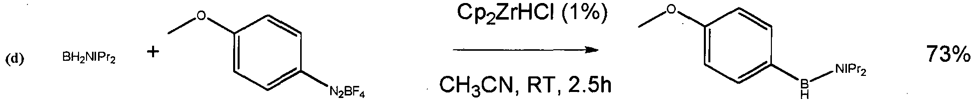 "RT" means "room temperature" *i.e.* 18-20°C.

The product is isolated and purified or is submitted to a further reaction, step (2) involving a functional change at the boron atom.

According to another embodiment, the process of the present invention relates to the preparation of a dialkoxyarylborane compound and comprises:
(1) a step of contacting an arenediazonium salt or a heteroarenediazonium salt with a dialkoxyborane of following formula **III** 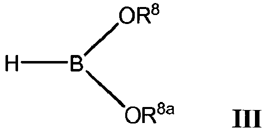 wherein R⁸ and R^{8a}, identical or different, have the above mentioned meanings, in a reaction medium containing a solvent, in the absence of base,
   for the preparation of a dialkoxyarylborane compound of formula **VI**, 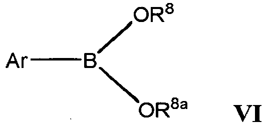 wherein
   R⁸, R^{8a} and Ar have the above mentioned meanings,
(2) a possible step of recovery and purification of the dialkoxyarylborane compound of formula **VII** from the reaction medium.

Boronic esters are extensively used as chemical building blocks and as intermediates, particularly in the Suzuki coupling. They are thus interesting compounds.

The compounds of formula **III** 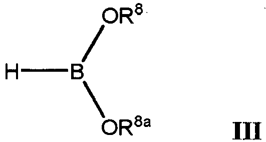 wherein "the alkoxy groups -OR⁸ and -OR^{8a} are in particular connected by a 2 to 4 carbons chain and possibly form a 5 or 6 membered ring including the boron atom and the two oxygen atoms" are advantageous because of their availability and relative stability.

Compounds III_{A}, III_{B} and III_{C} can be submitted to an arylation reaction with an arenediazonium salt or a heteroarenediazonium salt, in a reaction medium containing a solvent, preferably acetonitrile, at room temperature, in the absence of base, preferably with an activating means.

The following equations described the preparation of the dialkoxyarylboranes (boronic esters) of the general formula VI, the aryl group having the above mentioned meanings; the reagents III_{A} (pinacolborane), III_{B} and III_{C} (catecholborane) are commercially available or easy to prepare.

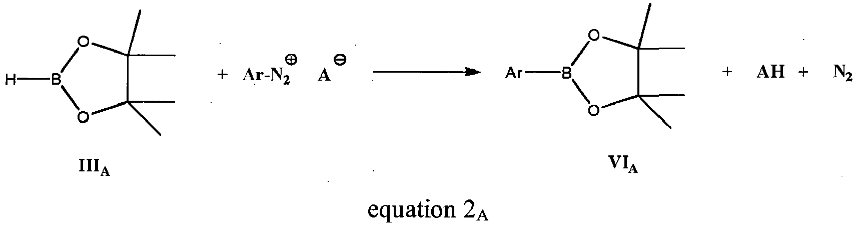

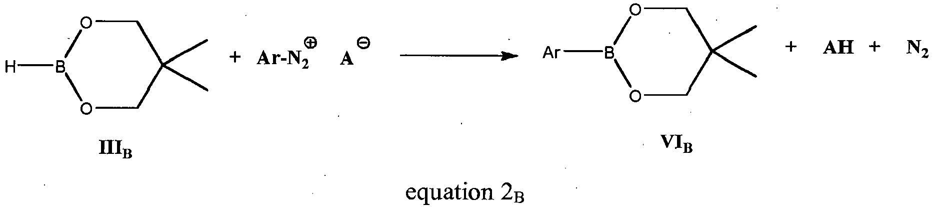

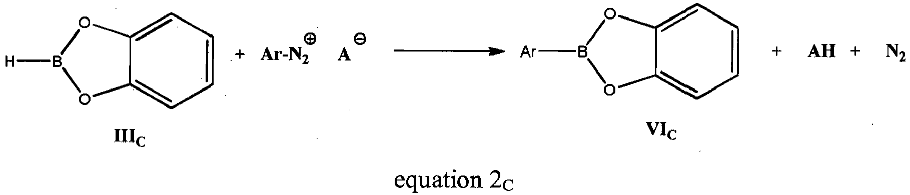

According to a particular embodiment, the process of the present invention relates to the preparation of an arylpinacolborane compound and comprises:
(1) a step of contacting an arenediazonium salt or a heteroarenediazonium salt with the pinacolborane of following formula **III_{A}** 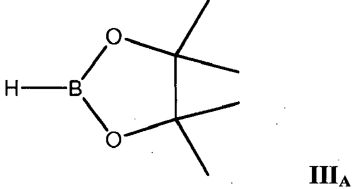 in a reaction medium containing a solvent, in the absence of base,
   for the preparation of an arylpinacolborane compound of formula **VI_{A}**, 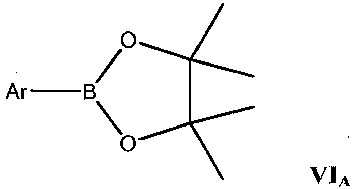 wherein Ar has the above mentioned meanings,
(2) a possible step of recovery and purification of the arylpinacolborane compound of formula **VI_{A}** from the reaction medium.

According to a particularly advantageous embodiment, the process of the present invention relates to the preparation of an arylpinacolborane compound and comprises:
(1) a step of contacting an arenediazonium salt or a heteroarenediazonium salt with the pinacolborane of following formula **III_{A}** 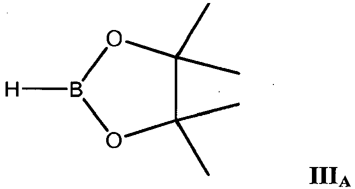 in a reaction medium containing a solvent, in the absence of base,
   in the presence of an activating agent preferably chosen among metallocenes, in particular ferrocenes, titanocenes, or zirconocenes, preferably Cp₂Fe, Cp₂TiCl₂ or Cp₂ZrHCl,
   for the preparation of an arylpinacolborane compound of formula **VI_{A},** 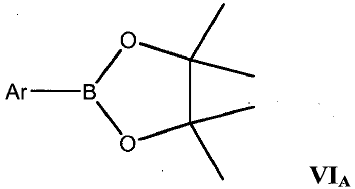 wherein Ar has the above mentioned meanings,
(2) a possible step of recovery and purification of the arylpinacolborane compound of formula **VI_{A}** from the reaction medium.

The use of an activating agent might increase the yield.

According to a particular embodiment, the activation means are radical generating means, in particular light irradiation, preferably ultraviolet light irradiation(UV), at a wavelength comprised from 180 nm to 400 nm, preferably comprised from 200 nm to 400 nm, in particular equal to about 254 nm,
or a radical initiator, chosen among azobisisobutyronitrile (AIBN), 1,1'-azobiscyclohexanecarbonitrile (ABCN), dilauroyl peroxide (DLP).

According to a particular embodiment, the solvent is aprotic and polar, in particular chosen among acetonitrile, propionitrile, butyronitrile, ethylacetate, isopropylacetate, dioxane, dimethylacetamide (DMAc), acetone, N-methyl-2-pyrrolidone (NMP), 2-methoxy-2-methylpropane (MTBE) or tetrahydrofuran (THF), or a mixture thereof,
in particular acetonitrile.
- The use of a polar solvent increases the arylation reaction rate, the chimioselectivity and therefore the yields in arylboranes. The use of an apolar solvent decreases the yields because it promotes the side reaction of reduction of the arenediazonium salt into the corresponding aniline.
   For instance, the arylation reaction of diisopropylaminoborane with 4-methoxybenzenediazonium tetrafluoroborate, in the presence of Cp₂Fe, gives 2-(4-methoxyphenyl)-4,4,5,5-tetramethyl-1,3,2-dioxaborolane with a 22% yield in THF. The yield is 87% if the solvent is acetonitrile. But there is no arylborane obtained in an apolar solvent, such as toluene.
- The use of a mixture containing an aprotic polar solvent and NMP may increase the arylation reaction rate and, thus, the yield in arylborane.

The mixture can be acetonitrile/NMP 95/5, THF/NMP 95/5.

For instance, the arylation reaction of diisopropylaminoborane with 4-methylbenzenediazonium tetrafluoroborate, in the presence of Cp*₂TiCl₂, gives 2-(4-methylphenyl)-4,4,5,5-tetramethyl-1,3,2-dioxaborolane with a 50% yield in THF. The yield increases to 74% in a mixture of THF+5% NMP.

Particularly, the step of contacting an arenediazonium salt or a heteroarenediazonium salt with an aminoborane is performed in an aprotic polar solvent, preferably acetonitrile,
at a temperature comprised from 10 °C to 60 °C, in particular comprised from 18 °C to 30°C, preferably equal to about 20 °C, during a time ranging from 1 h to 3 h, preferably 2,5 h,
for the preparation of an aminoarylborane.

An advantage of the process of the invention is that it is carried out at room temperature, in very mild conditions.

Advantageously, the step of mixing an arenediazonium salt or a heteroareneazonium salt with an aminoborane is performed in an aprotic polar solvent, preferably acetonitrile,
in the presence of an activating agent containing a transition metal, said activating agent being preferably chosen among metallocenes, in particular ferrocenes, titanocenes, or zirconocenes, preferably Cp₂Fe, Cp₂TiCl₂ or Cp₂ZrHCl,
with a molar percentage relative to the metal comprised from 0,001 % to 5 %, in particular comprised from 0,001 % to 1 %, preferably equal to about 0,001 %, or about 0,01 %, or about 0,1 % or about 1 %,
at a temperature comprised between 10 °C to 60°C, in particular comprised between 18 °C to 30 °C, preferably equal to about 20 °C, during a time ranging from 1 h to 3 h, preferably 2,5 h,
for the preparation of an aminoarylborane compound.

Another embodiment of the process relates to a step of contacting an arenediazonium salt or a heteroarenediazonium salt with a dialkoxyborane performed in an aprotic polar solvent, preferably acetonitrile,
at a temperature comprised between 20 °C to 50 °C, in particular comprised between 20 °C to 30 °C, preferably equal to about 25 °C, during a time ranging from 2 h to 4 h, preferably 2,5 h,
for the preparation of an dialkoxyarylborane.

According to a particularly advantageous embodiment, the step of mixing an arenediazonium salt or a heteroareneazonium salt with an alkoxyborane is performed in an aprotic polar solvent, preferably acetonitrile,
in the presence of an activating agent containing a transition metal, said activating agent being chosen among metallocenes, in particular ferrocenes, titanocenes, or zirconocenes, preferably Cp₂Fe, Cp₂TiCl₂ or Cp₂ZrHCl,
with a molar percentage relative to the metal comprised from 0,001 % to 5 %, in particular comprised from 0,001 % to 1 %, preferably equal to about 0,001 %, or about 0,01 %, or about 0,1 % or about 1 %,
at a temperature comprised between 20 °C to 50 °C, in particular comprised between 20 °C to 30 °C, preferably equal to about 25 °C, during a time ranging from 2 h to 4 h, preferably 2,5 h,
for the preparation of a dialkoxyarylborane compound.

According to a particular embodiment, the process of the invention comprises a step of preparation of an arenediazonium salt or of a heteroarenediazonium salt of formula Ar-N₂A, *in situ*.

The anilines are commercially available. The choice of an arenediazonium salt is thus very large. The following equation represents the oxidation reaction of an aniline with **an** alkylnitrite, preferably isoamylnitrite in the presence of trifluoroborane etherate, i,e, Et₂O-BF₃, to give a suspension or a solution of an arenediazonium tetrafluoroborate which can be used directly in the arylation reaction in the presence or not in presence of an activating agent:

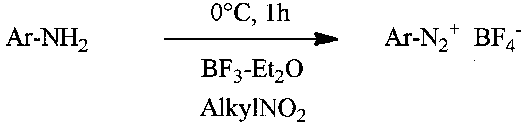

The aryl group is substituted or not, as mentioned above.

If the arenediazonium salt is isolated, the reaction is performed with NaNO₂ and HBF₄.

According to a particular embodiment, the process of the invention comprises a step (2) of recovery and purification of the aminoarylborane obtained at step (1).

The aminoarylborane can be isolated and purified by a bulb to bulb distillation.

According to a particular embodiment, the process of the invention comprises after step (1) or (2), a step (3) of treatment of the arylborane obtained at step (1) or (2), into an arylborane which is different from the one obtained at step (1) or (2),
said treatment being in particular an alcoholysis, preferably with a first alcohol, in particular methanol, said alcoholysis possibly followed
- by a transesterification with a second alcohol, preferably a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
   for the preparation of an arylboronic ester of the following formula **VI** 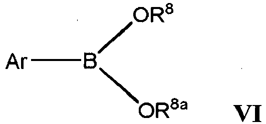 wherein R⁸, R^{8a} and Ar have the above mentioned meanings,
   in particular for the preparation of a cyclic aryldialkoxyborane,
   preferably for the preparation of an arylpinacolborane of the following formula **VI_{A}** 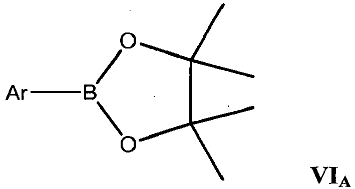 wherein Ar has the above mentioned meanings,
- or by a hydrolysis in order to obtain an arylboronic acid of formula **VII** 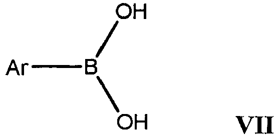 wherein Ar has the above mentioned meanings.

Thus, the boronic esters are prepared according to a tandem arylation/functional modification on the boron atom, this treatment consisting in a methanolysis followed by a transesterification.

The boronic acids are prepared by the same way as the boronic esters replacing the transesterification by an hydrolysis.

The boronic esters can be prepared in one step, by arylation of a boronate, or in two steps, via an aminoarylborane, the latter way being preferred.

The process of the present invention relates particularly to the preparation of the diisopropylaminoarylboranes of formulas represented below,
said diisopropylaminoboranes being isolated and purified, or not:

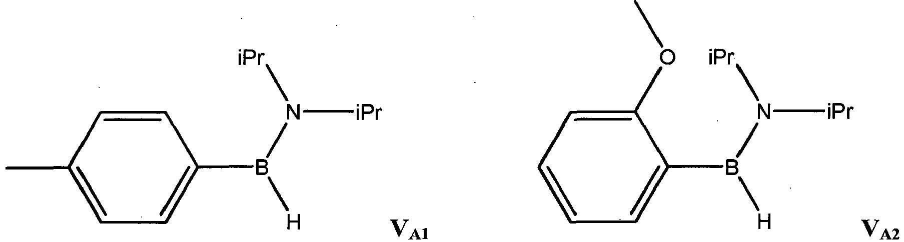

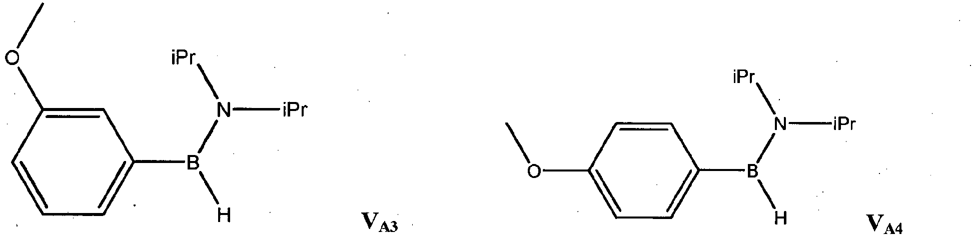

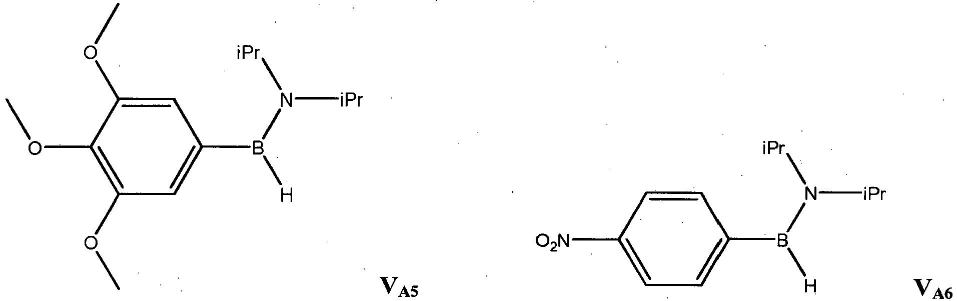

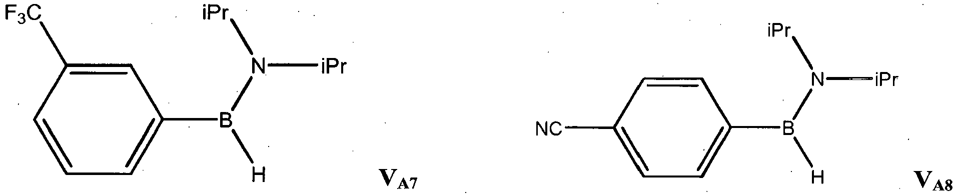

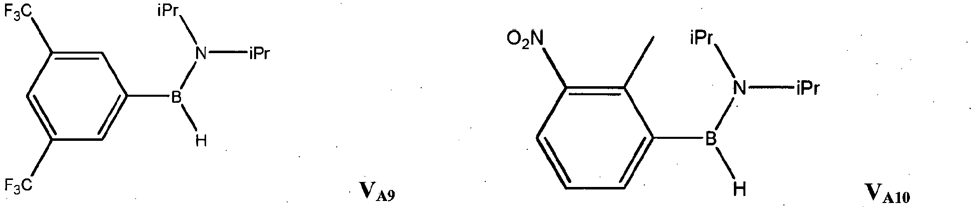

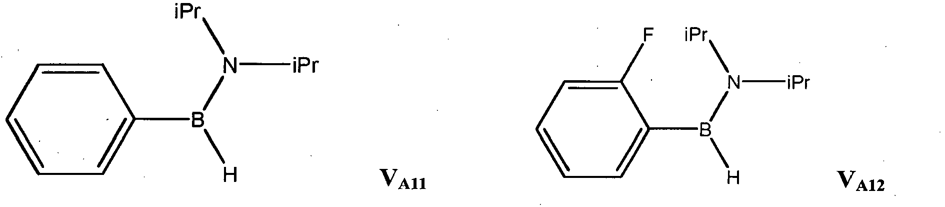

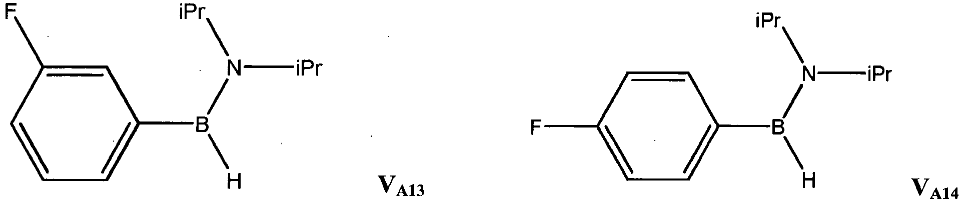

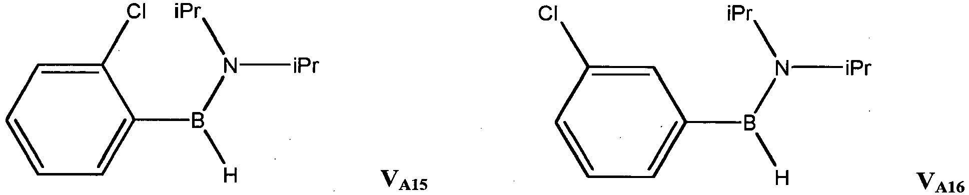

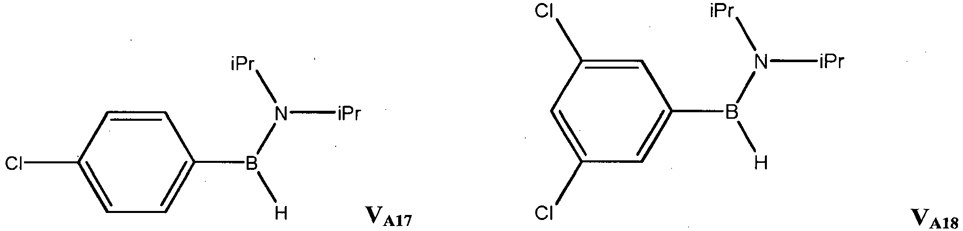

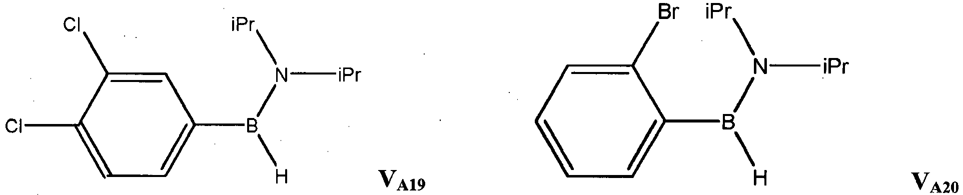

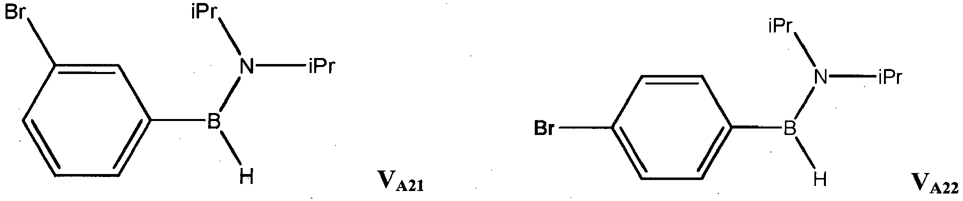

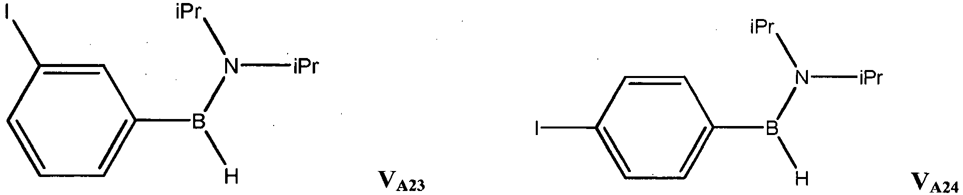

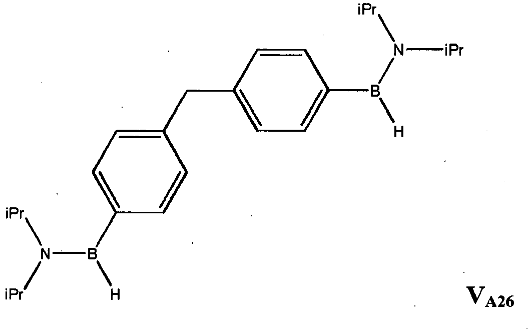

In another embodiment, the process of the present invention relates to the preparation of the arylpinacolboranes of following formula **VIA** 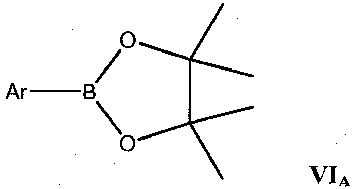 wherein Ar has the above mentioned meanings,
said arylpinacolboranes being recovered and purified, and being in particular 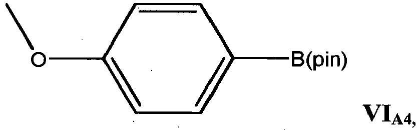 whererin -B(pin) represents:

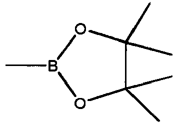

In a particular embodiment, the process of the invention comprises:
(1) a step of contacting an arenediazonium salt or a heteroarenediazonium salt with the diisopropylaminoborane of following formula **II_{A}** 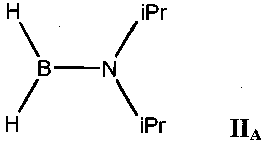 in a reaction medium containing a solvent, in the absence of base, in the presence of 0,1 % Cp₂Fe as activating agent,
   for the preparation of a diisopropylaminoarylborane compound of formula **V_{A},** 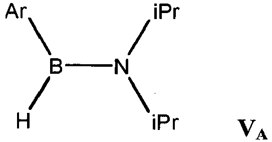 wherein compound **V_{A}** has the above mentioned meanings,
(2) a possible step of recovery and purification from the reaction medium, of the diisopropylaminoarylborane compound of formula **V_{A}** obtained at step (1),
(3) a step of treatment of the aminoarylborane of formula **V_{A}** obtained at step (1) or (2) said treatment being in particular an alcoholysis, preferably with methanol, followed by a transesterification with pinacol,
   for the preparation of an arylpinacolborane having one of the following formulae: 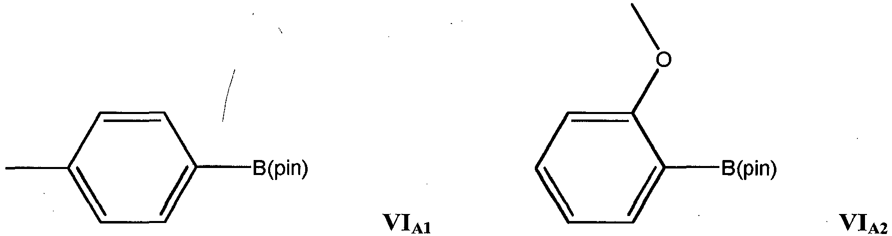 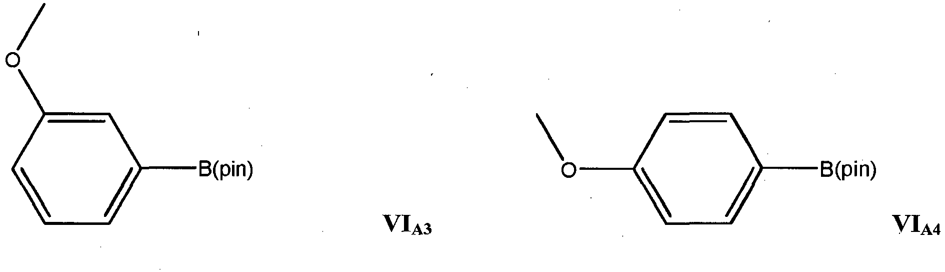 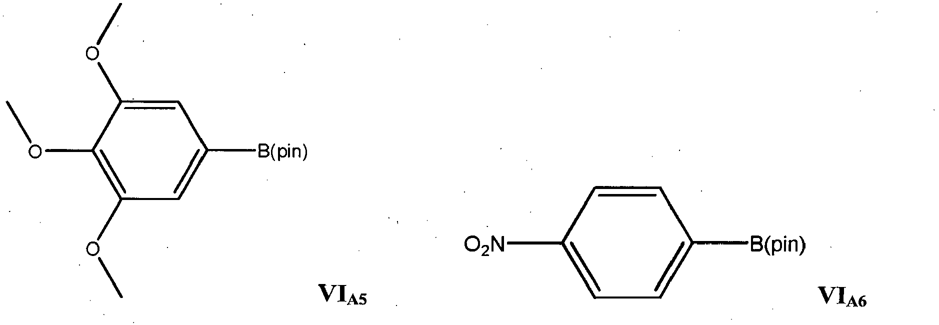 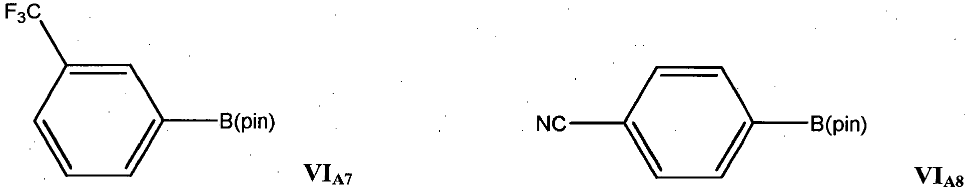 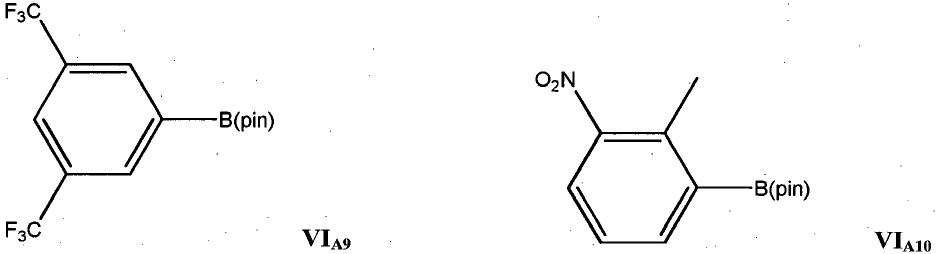 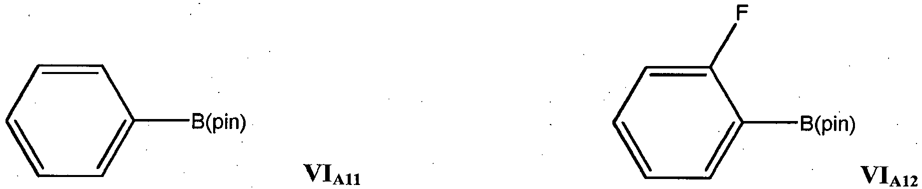 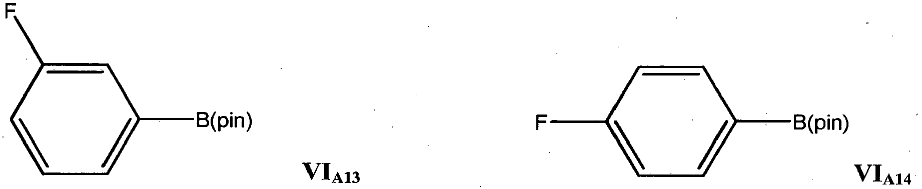 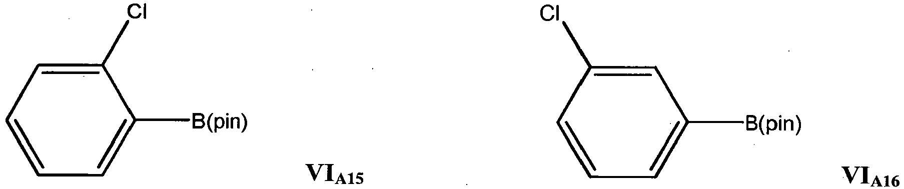 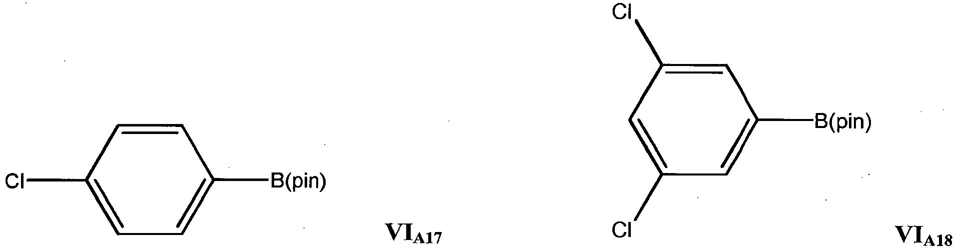 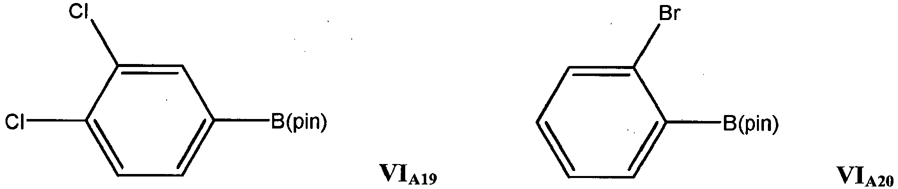 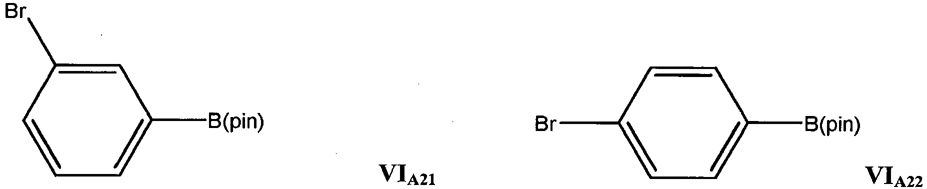 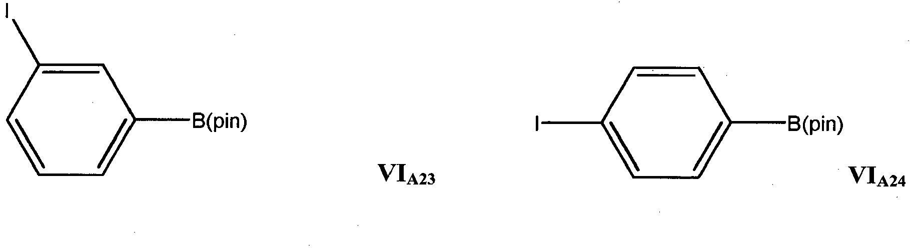 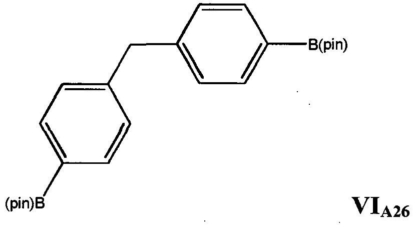 whererin -B(pin) represents:

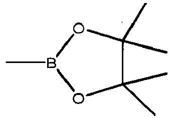

A two step procedure, step (1) being the arylation reaction followed by a step (2) of methanolysis with further transesterification, leads to stable arylboronates, with most yields comprised in the 65-90% yield range with an activating agent containing iron. No real trend could be determined between electron donating or withdrawing groups. Methyl and methoxy groups (compounds VI_{A1} to VI_{A5}) led to 47 to 87% isolated yield whereas reaction on arenediazonium salts bearing electron withdrawing groups afforded the corresponding arylboronates in 55-91% yield (compounds VI_{A6} to VI_{A10}). Fluorine and chlorine substituted arylboronates were obtained in 61-71% yield (compounds VI_{A12} to VI_{A19}). One advantage of this method is the compatibility with bromides and iodides. Few methods allow to synthesize selectively bromine or iodine substituted boron derivatives. In the process of the invention, the selectivity is very good as no reaction is observed when iodobenzene or bromobenzene are placed in the same reaction conditions. Hence, bromo- and iodo-susbtitued pinacol benzeneboronate were isolated in 65-74% yield (compounds VI_{A21} to VI_{A24}). But the reaction on 4-benzoyl substituted arenediazonium salts lead to benzophenone resulting from the competitive direct reduction of the C-N into C-H bond (compound VI_{A21}). Bis boronates were also synthesized in good yield considering that the resulting product arose from 6 consecutive reactions with an average of 91% yield per transformation (compound VI_{A26}).

In a particular embodiment, the process of the invention comprises:
(1) a step of contacting an arenediazonium salt or a heteroarenediazonium salt with an organoboron compound in a reaction medium containing a solvent, in the absence of base,
   for the preparation of an aminoarylborane of formula **V** which is not isolated
(2) a step of treatment of **V** obtained at step (1) by methanolysis, followed by a transesterification with pinacol,
   for the preparation of an arylpinacolborane of formula **VI_{A}**,
   steps (1) and (2) being performed according to a one-pot synthesis.

In a particularly advantageous embodiment, the process of the invention comprises:
(1) a step of contacting an arenediazonium salt or a heteroarenediazonium salt with an organoboron compound containing at least one B-H bond, in a reaction medium containing a solvent, in the absence of base,
   in the presence of an activating agent, under continuous flow conditions,
   in a tubular system including 2 tubings, wrapped in a circular-like form,
   - one tubing being a prereactor R1, in which a solution of the arenediazonium salt or of the heteroarenediazonium salt and a solution of the activating agent, in acetonitrile, are injected to be mixed, at a temperature comprised between 10 °C to 60 °C, in particular comprised between 20 °C to 30 °C, preferably equal to about 25 °C,
   - the second tubing being a reactor R2, in which the mixture containing the arenediazonium salt or the heteroarenediazonium salt and the activating agent is injected, as well as a solution of diisopropylaminoborane in acetonitrile, at the temperature of R1,
   the two injections being performed under continuous flow conditions and with the same rate,
(2) a step of collection of the crude at the outlet of the reactor R2,
   the crude being possibly methanolysed to give a boronic ester, which is possibly transesterified, in particular with pinacol, to give an arylpinacolborane, or hydrolysed to give an arylboronic acid.

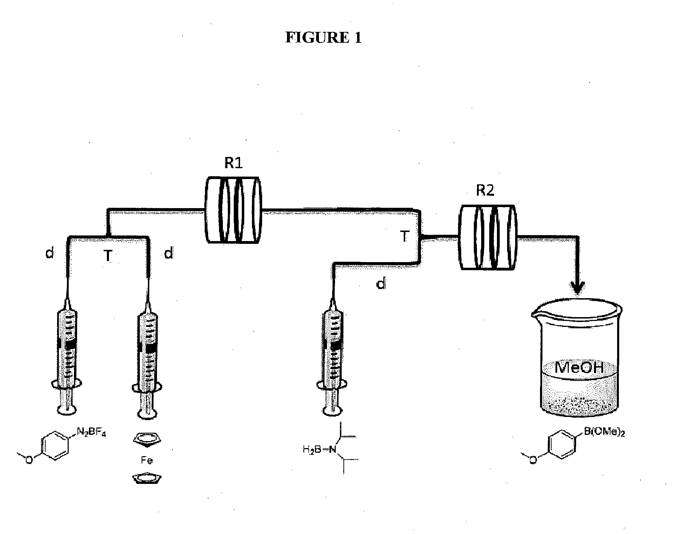

Using a tubular reactor is particularly advantageous because the method can be used on industrial scale (figure 1). One of the advantages is to work with low concentrations of reagents, thus decreasing the undesirable side reactions, and resulting in a constant final product quality and a low cost of working.

According to an embodiment, the process comprises a step of detection of an aniline possibly substituted by the same substituents as the ones of the arenediazonium salt.

Beside the arylation reaction, a competitive reaction of reduction of the arenediazonium or heteroarenediazonium salt may occur, resulting in the formation of the corresponding aniline, in a molar percentage varying from 0 to 3 percent.

Figure I represents a flow arylation reaction between diisopropylaminoborane and an aryldiazonium salt catalysed by ferrocene on a scheme showing the tubular system used in the process (see example 1).

R1 represents a pre-reactor, R2 represents a reactor, T represents a T device and "d" represents a syringe.

### EXAMPLES

### Techniques

GC-MS analysis were performed with a HP 6890 series GC-system equipped with a J&W Scientific DB-1701 capillary column, a HP 5973 mass selective detector (EI) using the following method : 70°C for 1 min then 20°C.min⁻¹ until 230 °C then 6 min at 230 °C. 1H, 11B, 13C, 19F and 31P NMR were recorded on 300 MHz Avance I and 400 MHz Avance II spectrometers. The chemical shifts (δ) and coupling constants (*J*) are expressed in ppm and Hertz respectively.

### Chemicals

Pinacol and pinacolborane were purchased from Sigma-Aldrich. Pinacol was distilled before use. Anilines were used without further purification. Diisopropylaminoborane was prepared as described in literature. All catalytic reactions were carried out under argon atmosphere unless specified. All chemicals were stored under argon. Acetonitrile was distilled over CaH₂. Silica gel (230-400 mesh) purchased from Merck was used for flash chromatography. Analytical TLC silica gel 60 F254 were used.
Ferrocene is Cp₂Fe.

### Meanings of the abbreviations

NMR: nuclear magnetic resonance, and to describe the multiplicities: s = singlet, d =doublet,
m = multiplet.
TLC: thin layer chromatography
GC-MS: gas chromatography - mass spectrum
t_{R}: retention time
wt: weight
PTFE: polytetrafluoroethylene
i.d.: internal diameter
M: mol/L
DMAc: dimethylacetamide
NMP: N-methyl-2-pyrrolidone
Cp*: 1,2,3,4,5-pentamethylcyclopentadienyl group.

### Preparation of the reagents:

### ▪ General procedure A: synthesis of aryldiazonium salt or heteroaryl diazonium salt, isolated from the reaction medium

To a suspension of aniline in water is added, at 0°C, HBF₄ (50% wt in water) and the mixture is stirred 10min at 0°C. A saturated solution of NaNO₂ in water is then slowly added and the resulting mixture is stirred for 1h at 0°C. The precipitate is collected by filtration, washed successively with cold water, cold Et₂O/MeOH 70/30 and Et₂O. The crude diazonium salt is purified by Et₂O precipitation from a saturated acetone solution, the solid is then triturated with Et₂O and dried under vacuum to afford pure arene diazonium salt or heteroarenediazonium salt.

### ▪ General procedure B: tandem diazotation/borylation sequence of aniline to aryl boronate

To a solution of aniline (1 mmol) in 3 ml of distillated acetonitrile, at 0°C, is added boron trifluoride etherate (1.5 mmol 0.4 ml) and the solution is stirred for 5 minutes. Isoamyl nitrite (1.2 mmol, 0.2 ml) is then slowly added and the solution is stirred for 15 minutes. Diisopropylamino borane (4 mmol, 0.6 ml) is then slowly added and the mixture is allowed to be stirred at room temperature for 3 hours. The reaction is then quenched, at 0°C, by the slow addition of 2 ml of distillated methanol and stirred 1 hour at room temperature. The mixture is concentrated under vacuum and a solution of pinacol (1.3 mmol, 153 mg) in 2 ml of diethyl ether is added and the mixture is stirred 4 hours at room temperature. 10 ml of diethyl ether is then added and the crude is washed three time with 6 ml of a aqueous solution of copper chloride (50 g/L). The organic phase is then filtered and died over Na₂SO₄ and concentrated under vacuum to afford pure aryl boronate.

### Example 1: synthesis of 2-(4-methoxyphenyl)-4,4,5,5-tetramethyl-1,3,2-dioxaborolane [CAS 171364-79-7], compound VI_{A4}

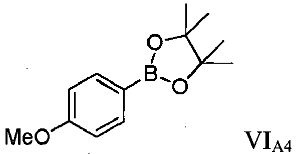

113 mg of 2-(4-methoxy-phenyl)-4,4,5,5-tetramethyl-1,3,2-dioxaborolane were obtained following the general procedure B using 123 mg of 4-methoxyaniline as a pale yellow oil, yield: 52.5%. 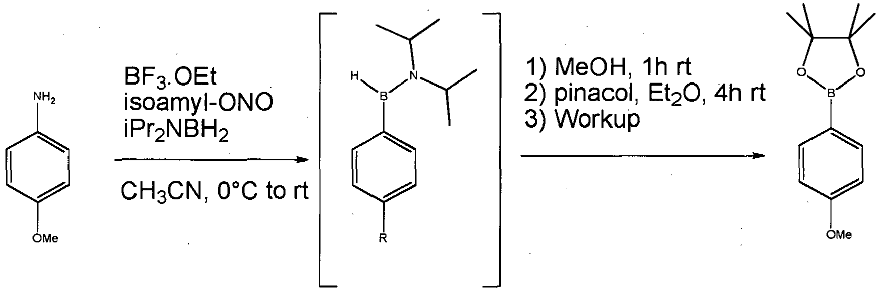 ¹H NMR (300 MHz, CDCl₃) δ 7.75 (d, *J* = 8.7 Hz, 2H) 6.90 (d, *J* = 8.7 Hz, 2H) 3.83 (s, 3H) 1.33 (s, 12H)
¹¹B NMR (100 MHz, CDCl₃) δ 31.05
¹³C NMR (75 MHz, CDCl₃) δ
MS (EI) t_{R}= 9.05 min; m/z: 234 (M⁺, 100%)

### ▪ Procedure C: synthesis of diisopropylaminoborane

To a stirred solution of diisopropylamine (70.6 mL, 0.5 mol, 1 eq) in THF (200 mL) were added at 0 °C 20.4 mL of H₂SO₄ (0.75 mol, 0.5 eq). A white precipitate appears immediately. After 15 min at 0 °C, were carefully added 28.4 g of NaBH₄ (0.75 mol, 1.1 eq) in powder. The mixture was allowed to warm to room temperature and stirred for 3h. The crude was concentrated under vacuum and the residue was taken with toluene, washed with water (4 x 100 mL). The organic phase was dried over Na₂SO₄ and concentrated under reduced pressure to give the amine-borane complex as a colorless oil. The amine-borane complex was refluxed at 210 °C with a sand bath in the presence of a bubbling device to observe the formation of hydrogen. After the completion of the dehydrogenation (about 1h30), a distillation apparatus was installed and the aminoborane was distillated under argon to give a 51g of colorless liquid (90 % yield).

### Preparation of the products:

### Example 2: general procedure D

### implementation of flow arylation reaction, between the diisopropylaminoborane and an aryl or heteroaryldiazonium salt, catalysed by ferrocene (1%) followed by methanolysis and transesterification

### (figure 1)

A 10 m segment of PTFE tubing (0.81 mm i.d., 5 ml total volume) was wrapped in a circular-like form to favoring mixing and reactor heat (R2, see figure 1). The reactor was then submerged in a water bath at the desired temperature (0, 25, 40 °C). A pre-reactor of 60cm (R1), built in the same manner in order to mix the arenediazonium salt with the ferrocene, was heated at the R2 reactor temperature. The syringes d were fixed on syringe pumps and connected to a T device with PTFE tubing (d = 23cm). The T and the reactors were connected directly. The system was purged with distillated acetonitrile and the ferrocene and the aminoborane ways were purged with the reagents themselves (10⁻² M and 2M respectively) before use. Then, the desired volume of arenediazonium salt was injected (using a 1M solution in acetonitrile) at the desired rate, followed by acetonitrile when the injection was over. The injections of aminoborane and ferrocene, were not stopped during all the process and were performed with the same rate as the arenediazonium salt. The crude was collected into a round-bottomed flask, charged with a magnetical stirrer and 10 ml of anhydrous methanol. After completion of the process (i.e. the collection), the crude was concentrated under vacuum and pinacol (2 eq) in diethyl ether was then added. The mixture was stirred 4h at room temperature and then washed with 4x10 ml of a aqueous solution of CuCl₂ (50g/L). The organic phase was dried over Na₂SO₄, filtered and concentrated under reduced pressure. The resulting oil was dissolved in CH₂Cl₂ and filtered over a pad of silica gel, eluted with CH₂Cl₂ to afford the corresponding boronate.

### Example 3: General procedure D for the synthesis of the arylpinacolboronates by arylation of diisopropylaminoborane, catalysed by ferrocene (1%), followed by methanolysis and transesterification

In a dried tube reactor under argon as described in example 2, the arenediazonium salt (1 mmol) and the ferrocene (10µmol, 1.8mg) were dissolved in 2mL of anhydrous CH₃CN. Di*iso*propylaminoborane (2mmol, 226mg) was then added to the solution and the mixture was stirred for 2h30 at room temperature. The reaction mixture was quenched by a slow addition of anhydrous MeOH at 0°C (2mL) and stirred for an additional hour at room temperature. After removal of all the volatiles, 1.3eq of pinacol was added in Et₂O (2mL), the mixture was stirred 4h at room temperature. The crude mixture was washed with a 50g/L CuCl₂ solution (2 x 5mL). The organic layer were separated, dried over Na₂SO₄, filtered and concentrated to dryness. The resulted oil was dissolved with CH₂Cl₂ and filtered of a pad of silica gel, eluting with CH₂Cl₂ to afford the corresponding boronate.

### Example 4: synthesis of 2-(4-methylphenyl)-4,4,5,5-tetramethyl-1,3,2-dioxaborolane [CAS 195062-57-8], compound VI_{A1}

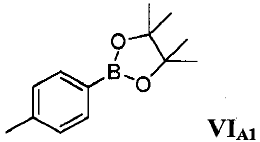

175 mg of 2-(4-methylphenyl)-4,4,5,5-tetramethyl-1,3,2-dioxaborolane were obtained following the general procedure D according to example 3, using 206 mg of 4-methylbenzenediazonium tetrafluoroborate as a pale yellow oil, with an 80% isolated yield.
¹H NMR (300 MHz, CDCl₃) : δ 7.71 (d, *J* = 7.9 Hz, 2H) 7.19 (d, *J* = 7.6 Hz, 2H) 2.37 (s, 3H) 1.34 (s, 12H)
¹¹B NMR (100 MHz, CDCl₃) δ 31.39
¹³C NMR (75 MHz, CDCl₃) δ 141.55; 134.94; 128.66; 83.76; 24.99; 21.88
MS (EI) t_{R}= 7.95 min; m/z: 218 (M^{+.}, 100%)

### Example 5: synthesis of 2-(2-methoxyphenyl)-4,4,5,5-tetramethyl-1,3,2-dioxaborolane [CAS 190788-60-4], compound VI_{A2}

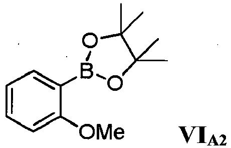

161 mg of 2-(1-methoxyphenyl)-4,4,5,5-tetramethyl-1,3,2-dioxaborolane were obtained following the general procedure D according to example 3, using 222 mg of 2-methoxybenzenediazonium tetrafluoroborate as a pale yellow oil, with an isolated yield of 69%.
¹H NMR (300 MHz, CDCl₃) δ 7.67 (dd, J = 7.3, 1.8 Hz, 1H), 7.39 (ddd, J = 8.5, 7.5, 1.9 Hz, 1H), 6.94 (t, J = 7.3 Hz, 1H), 6.86 (d, J = 8.4 Hz, 1H), 3.83 (s, 3H), 1.36 (s, 12H)
¹¹B NMR (100 MHz, CDCl₃) δ 31.09
¹³C NMR (75 MHz, CDCl₃) δ 136.69, 132.43, 120.21, 110.51, 83.45, 55.84, 24.84

### Example 6: synthesis of 2-(3-methoxyphenyl)-4,4,5,5-tetramethyl-1,3,2-dioxaborolane [CAS 325142-84-5], compound VI_{A3}

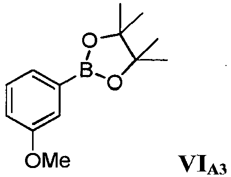

134 mg of 2-(3-methoxyphenyl)-4,4,5,5-tetramethyl-1,3,2-dioxaborolane were obtained following the general procedure D according to example 3, using 222 mg of 3-methoxybenzenediazonium tetrafluoroborate as a pale yellow oil, with an isolated yield of 57%.
¹H NMR (300 MHz, CDCl₃) δ 7.40 (d, J = 7.2 Hz, 1H) 7.36 - 7.31 (m, 1H) 7.28 (d, J = 7.3 Hz, 1H) 7.01 (ddd, J = 8.2, 2.8, 1.1 Hz, 1H) 3.83 (s, 3H) 1.35 (s, 12H)
¹¹B NMR (100 MHz, CDCl₃) δ 31.37
¹³C NMR (75 MHz, CDCl₃) δ 159.20, 129.07, 127.33, 118.88, 118.05, 83.97, 55.39, 25.00.
MS (EI) t_{R} = 8.90 min; m/z: 234 (M⁺, 100%)

### Example 7: synthesis of 2-(4-methoxyphenyl)-4,4,5,5-tetramethyl-1,3,2-dioxaborolane [CAS 171364-79-7], compound VI_{A4}

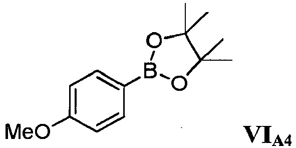

204 mg of 2-(4-methoxyphenyl)-4,4,5,5-tetramethyl-1,3,2-dioxaborolane were obtained following the general procedure D according to example 3, using 222 mg of 4-methoxybenzenediazonium tetrafluoroborate as a pale yellow oil, with an isolated yield of 87%.
¹H NMR (300 MHz, CDCl₃) δ 7.75 (d, J = 8.7 Hz, 2H) 6.90 (d, J = 8.7 Hz, 2H) 3.83 (s, 3H) 1.33 (s, 12H)
¹¹B NMR (100 MHz, CDCl₃) δ 31.05
¹³C NMR (75 MHz, CDCl₃) δ
MS (EI) t_{R}= 9.05 min; m/z: 234 (M⁺, 100%)

### Example 8: synthesis of 2-(3,4,5-trimethoxyphenyl)-4,4,5,5-tetramethyl-1,3,2-dioxaborolane [214360-67-5], compound VI_{A5}

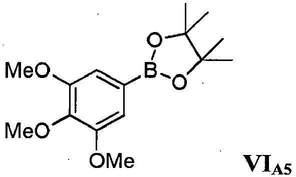

139 mg of 2-(3,4,5-trimethoxyphenyl)-4,4,5,5-tetramethyl-1,3,2-dioxaborolane were obtained following the general procedure D according to example 3, using 284 mg of 3,4,5-trimethoxybenzenediazonium tetrafluoroborate as a pale yellow oil with an isolated yield of 47%.
¹H NMR (300 MHz, CDCl₃) δ 7.04 (s, 2H) 3.90 (s, 6H) 3.87 (s, 3H) 1.34 (s, 12H)
¹¹B NMR (100 MHz, CDCl₃) δ 32.00
¹³C NMR (75 MHz, CDCl₃) δ 153.07; 141.08; 111.52; 84.02; 60.93; 56.32; 25.00
MS (EI) t_{R} = 11.65 min; m/z: 296 (M⁺, 100%)

### Example 9: synthesis of 2-(4-nitrophenyl)-4,4,5,5-tetramethyl-1,3,2-dioxaborolane [CAS 171364-83-3], compound VI_{A6}

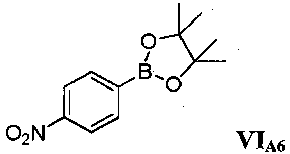

176 mg of 2-(3-iodophenyl)-4,4,5,5-tetramethyl-1,3,2-dioxaborolane were obtained following the general procedure D according to example 3, using 237 mg of 4-nitrobenzenediazonium tetrafluoroborate as a pale yellow oil, with an isolated yield of 71%.
¹H NMR (300 MHz, CDCl₃) δ 8.19 (d, J = 8.7 Hz, 2H) 7.96 (d, J = 8.7 Hz, 2H) 1.37 (s, 12H)
¹¹B NMR (100 MHz, CDCl₃) δ 30.87
¹³C NMR (75 MHz, CDCl₃) δ 135.80; 122.56; 84.78; 25.02
MS (EI) t_{R} = 10.31 min; m/z: 249 (M⁺, 100%)

### example 10: synthesis of 2-(3-trifluoromethylphenyl)-4,4,5,5-tetramethyl-1,3,2-dioxaborolane [CAS 325142-82-3], compound VI_{A7}

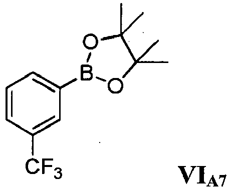

171 mg of 2-(3-trifluoromethylphenyl)-4,4,5,5-tetramethyl-1,3,2-dioxaborolane were obtained following the general procedure D according to example 3, using 260 mg of 3-trifluoromethylbenzenediazonium tetrafluoroborate as a pale yellow oil.
¹H NMR (300 MHz, CDCl₃) δ 7.97 (d, J = 7.4 Hz, 1H) 7.70 (d, J = 7.9 Hz, 1H) 7.48 (t, J = 7.6 Hz, 1H) 1.36 (s, 12H)
¹¹B NMR (100 MHz, CDCl₃) δ 30.48
¹³C NMR (75 MHz, CDCl₃) δ 138.12; 128.16; 127.94; 118.30; 84.43; 25.02
MS (EI) t_{R}= 7.02 min; m/z: 272 (M⁺, 100%)

### Example 11: synthesis of 2-(4-cyanophenyl)-4,4,5,5-tetramethyl-1,3,2-dioxaborolane [CAS 171364-82-2], compound VI_{A8}

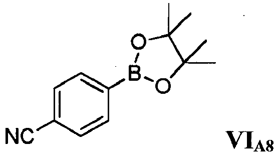

127 mg of 2-(4-cyanophenyl)-4,4,5,5-tetramethyl-1,3,2-dioxaborolane were obtained following the general procedure D according to example 3, using 217 mg of 4-cyanobenzenediazonium tetrafluoroborate as a pale yellow oil, with an isolated yield 55%.
¹H NMR (300 MHz, CDCl₃) δ 7.88 (d, J = 8.1 Hz, 1H) 7.64 (d, J = 8.2 Hz, 1H) 1.35 (s, 12H) ¹¹B NMR (100 MHz, CDCl₃) δ 30.37
¹³C NMR (75 MHz, CDCl₃) δ
MS (EI) t_{R} = 9.52 min; m/z: 229 (M^{+.}, 100%)

### Example 12: synthesis of 2-(3,5-ditrifluoromethylphenyl)-4,4,5,5-tetramethyl-1,3,2-dioxaborolane [CAS 69807-91-6], compound VI_{A9}

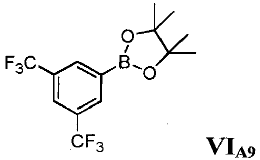

220 mg of 2-(3,5-ditrifluoromethylphenyl)-4,4,5,5-tetramethyl-1,3,2-dioxaborolane were obtained following the general procedure D according to example 3, using 328 mg of 3-5-ditrifluoromethylbenzenediazonium tetrafluoroborate as a pale yellow oil, with an isolated yield of 65%.
¹H NMR (300 MHz, CDCl₃) δ 8.23 (s, 2H) 7.94 (s, 1H) 1.37 (s, 12H)
¹¹B NMR (100 MHz, CDCl₃) δ 30.21
¹³C NMR (75 MHz, CDCl₃) δ 134.79; 131.29; 130.85; 125.47; 124.87; 121.85; 85.01; 25.01 MS (EI) t_{R} = 6.33 min; m/z: 340 (M⁺, 100%)

### Example 13: synthesis of 2-(2-methyl-3-nitrophenyl)-4,4,5,5-tetramethyl-1,3,2-dioxaborolane [CAS 910235-64-2], compound VI_{A10}

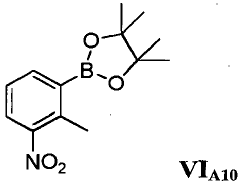

214 mg of 2-(2-methyl-3-nitrophenyl)-4,4,5,5-tetramethyl-1,3,2-dioxaborolane were obtained following the general procedure D according to example 3, using 251 mg of 2-methyl-3-nitrobenzenediazonium tetrafluoroborate as a pale yellow oil, with an isolated yield of 91 %.
¹H NMR (300 MHz, CDCl₃) δ 7.94 (dd, J = 7.4, 1.2 Hz, 1H), 7.80 (dd, J = 8.1, 1.3 Hz, 1H), 7.30 (d, J = 7.6 Hz, 1H), 2.67 (s, 3H), 1.36 (s, 12H)
¹¹B NMR (100 MHz, CDCl₃) δ 31.55
¹³C NMR (75 MHz, CDCl₃) δ 139.77, 138.27, 126.26, 125.88, 84.38, 24.99, 18.01.
MS (EI) t_{R}= 10.99 min; m/z: 263 (M^{+.}, 100%)

### Example 14: synthesis of 2-(phenyl)-4,4,5,5-tetramethyl-1,3,2-dioxaborolane [CAS 24388-23-6], compound VI_{A11}

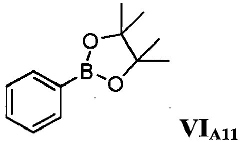

127 mg of phenyl-4,4,5,5-tetramethyl-1,3,2-dioxaborolane were obtained following the general procedure D according to example 3, using 192 mg of benzenedizaonium tetrafluoroborate as a pale yellow oil, with an isolated yield of 62%.
¹H NMR (300 MHz, CDCl₃) δ 7.81 (dd, J = 8.0, 1.4 Hz, 2H) 7.49 (m, 2H) 7.39 (m, 2H)
¹¹B NMR (100 MHz, CDCl₃) δ 31.10
¹³C NMR (75 MHz, CDCl₃) δ 134.86; 131.39; 127.84; 83.90; 25.01
MS (EI) t_{R} = 7.22 min; m/z: 204 (M⁺, 100%)

### Example 15: synthesis of 2-(2-fluorophenyl)-4,4,5,5-tetramethyl-1,3,2-dioxaborolane[CAS 876062-39-4], compound VIA₁₂

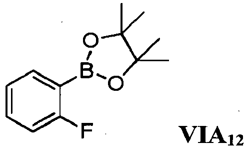

135 mg of 2-(2-fluorophenyl)-4,4,5,5-tetramethyl-1,3,2-dioxaborolane were obtained following the general procedure D according to example 3, using 210 mg of 2-fluorobenzenediazonium tetrafluoroborate as a pale yellow oil, with an isolated yield of 61%.
¹H NMR (300 MHz, CDCl₃) δ 7.78 - 7.70 (m, 1H), 7.49 - 7.38 (m, 1H), 7.14 (t, J = 7.4 Hz, 1H), 7.03 (t, J = 8.9 Hz, 1H)
¹¹B NMR (100 MHz, CDCl₃) δ 29.92
¹³C NMR (75 MHz, CDCl₃) δ 169.01, 165.68, 137.01, 136.90, 133.44, 133.32, 123.73, 123.69, 115.54, 115.23, 84.03, 24.97

### Example 16: synthesis of 2-(3-fluorophenyl)-4,4,5,5-tetramethyl-1,3,2-dioxaborolane [CAS 936618-92-7], compound VI_{A13}

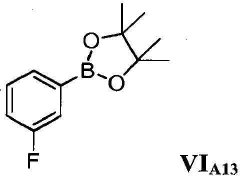

156 mg of 2-(3-fluorophenyl)-4,4,5,5-tetramethyl-1,3,2-dioxaborolane were obtained following the general procedure D according to example 3, using 210 mg of 3-fluorobenzenediazonium tetrafluoroborate as a pale yellow oil, with an isolated yield of 70%.
¹H NMR (300 MHz, CDCl₃) δ 7.57 (d, J = 7.3 Hz, 1H) 7.48 (dd, J = 9.2, 2.7 Hz, 1H) 7.40 - 7.29 (m, 1H) 7.13 (dddd, J = 9.2, 8.3, 2.8, 1.1 Hz, 1H) 1.35 (s, 12H)
¹¹B NMR (100 MHz, CDCl₃) δ 30.83
¹³C NMR (75 MHz, CDCl₃) δ 130.45; 129.64; 129.55; 121.24; 120.98; 118.43; 118.15; 84.24; 25.01
MS (EI) t_{R} = 7.17 min; m/z: 222 (M⁺, 100%)

### Example 17: synthesis of 2-(4-fluorophenyl)-4,4,5,5-tetramethyl-1,3,2-dioxaborolane [CAS 214360-58-4], compound VI_{A14}

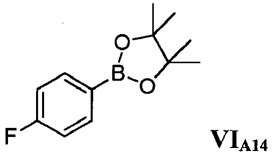

135 mg of 2-(3-iodophenyl)-4,4,5,5-tetramethyl-1,3,2-dioxaborolane were obtained following the general procedure D according to example 3, using 210 mg of 4-fluorobenzenediazonium tetrafluoroborate as a pale yellow oil, with an isolated yield of 61%.
¹H NMR (300 MHz, CDCl₃) δ 7.80 (dd, J = 8.6, 6.3 Hz, 1H), 7.09 - 6.99 (m, 1H), 1.34 (s, 12H)
¹¹B NMR (100 MHz, CDCl₃) δ 30.26
¹³C NMR (75 MHz, CDCl₃) δ 166.91, 163.59, 137.18, 137.07, 115.11, 114.84, 84.05, 25.01.
MS (EI) t_{R} = 7.07min; m/z: 222 (M^{+.}, 100%)

### Example 18: synthesis of 2-(2-chlorophenyl)-4,4,5,5-tetramethyl-1,3,2-dioxaborolane [CAS 870195-94-1], compound VI_{A15}

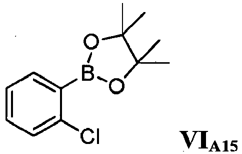

118 mg of 2-(2-chlorophenyl)-4,4,5,5-tetramethyl-1,3,2-dioxaborolane were obtained following the general procedure D according to example 3, using 226 mg of 2-chlorobenzenediazonium tetrafluoroborate as a pale yellow oil, with an isolated yield of 49%.
¹H NMR (300 MHz, CDCl₃) δ 7.72 (d, J = 6.9 Hz, 1H) 7.39 (m, 2H) 7.28 (m, 1H) 1.4 (s, 12H)
¹¹B NMR (100 MHz, CDCl₃) δ 31.17
¹³C NMR (75 MHz, CDCl₃) δ 139.68; 136.54; 131.97; 129.52; 125.94; 84.28; 24.94
MS (EI) t_{R} = 8.56 min; m/z: 238.5 (M^{+.}, 100%)

### Example 19: synthesis of 2-(3-chlorophenyl)-4,4,5,5-tetramethyl-1,3,2-dioxaborolane [CAS 635305-47-4], compound VI_{A16}

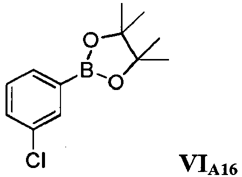

143 mg of 2-(3-iodophenyl)-4,4,5,5-tetramethyl-1,3,2-dioxaborolane were obtained following the general procedure D according to example 3, using 226 mg of 3-chlorobenzenediazonium tetrafluoroborate as a pale yellow oil, with an isolated yield of 70%.
¹H NMR (300 MHz, CDCl₃) δ 7.78 (s, 1H) 7.67 (d, J = 7.3 Hz, 1H) 7.42 (d, J = 8.1 Hz, 1H) 7.30 (t, J = 7.7 Hz, 1H)
¹¹B NMR (100 MHz, CDCl₃) δ 30.40
¹³C NMR (75 MHz, CDCl₃) δ 134.7; 134.18; 132.79; 131.40; 129.32; 84.29; 25
MS (EI) t_{R} = 8.43 min; m/z: 238.5 (M^{+.}, 100%)

### Example 20: synthesis of 2-(4-chlorophenyl)-4,4,5,5-tetramethyl-1,3,2-dioxaborolane [CAS 195062-61-4], compound VI_{A17}

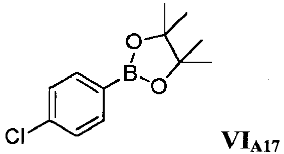

170 mg of 2-(3-iodophenyl)-4,4,5,5-tetramethyl-1,3,2-dioxaborolane were obtained following the general procedure D according to example 3, using 226 mg of 4-chlorobenzenediazonium tetrafluoroborate as a pale yellow oil, with an isolated yield of 71%.
¹H NMR (300 MHz, CDCl₃) δ 7.73 (d, J = 8.4 Hz, 2H) 7.34 (d, J = 8.4 Hz, 2H) 1.34 (s, 12H) ¹¹B NMR (100 MHz, CDCl₃) δ 30.93
¹³C NMR (75 MHz, CDCl₃) δ 136.27; 128.16; 84.17; 25.02
MS (EI) t_{R} = 8.37 min; m/z: 338.5 (M^{+.}, 100%)

### Example 21: synthesis of 2-(3,5-dichlorophenyl)-4,4,5,5-tetramethyl-1,3,2-dioxaborolane [CAS 68716-51-8], compound VI_{A18}

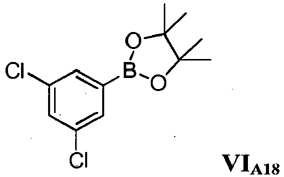

179 mg of 2-(3,5-dichlorophenyl)-4,4,5,5-tetramethyl-1,3,2-dioxaborolane were obtained following the general procedure D according to example 3, using 261 mg of 3,5-dichlorobenzenediazonium tetrafluoroborate as a pale yellow oil, with an isolated yield of 66%.
¹H NMR (300 MHz, CDCl₃) δ 7.25 (s, 2H) 7.44 (s, 1H) 1.34 (s, 12H)
¹¹B NMR (100 MHz, CDCl₃) δ 29.94
¹³C NMR (75 MHz, CDCl₃) δ 134.88; 132.85; 131.23; 84.67; 24.99
MS (EI) t_{R} = 9.27 min; m/z: 273 (M^{+.}, 100%)

### Example 22: synthesis of 2-(3,4-dichlorophenyl)-4,4,5,5-tetramethyl-1,3,2-dioxaborolane [CAS 401797-02-2], compound VI_{A19}

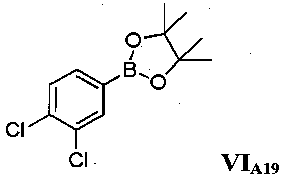

187 mg of 2-(3,4-dichlorophenyl)-4,4,5,5-tetramethyl-1,3,2-dioxaborolane were obtained following the general procedure D according to example 3, using 261 mg of 3,4-dichlorobenzenediazonium tetrafluoroborate as a pale yellow oil, with an isolated yield of 68%.
¹H NMR (300 MHz, CDCl₃) δ 7.68 (d, J = 6.9 Hz, 1H) 7.35 (m, 2H) 7.23 (m, 1H) 1.37 (s, 12H)
¹¹B NMR (100 MHz, CDCl₃) δ 31.17
¹³C NMR (75 MHz, CDCl₃) δ 136.71; 135.66; 133.90; 132.43; 130.16; 84.5; 25
MS (EI) t_{R} = 9.57 min; m/z: 273 (M^{+.}, 100%)

### Example 23: synthesis of 2-(2-bromophenyl)-4,4,5,5-tetramethyl-1,3,2-dioxaborolane [CAS 269410-06-2], compound VI_{A20}

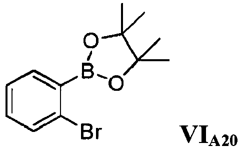

210 mg of 2-(3-iodophenyl)-4,4,5,5-tetramethyl-1,3,2-dioxaborolane were obtained following the general procedure D according to example 3, using 271 mg of 2-bromobenzenediazonium tetrafluoroborate as a pale yellow oil, with an isolated yield of 74%.
¹H NMR (300 MHz, CDCl₃) δ 7.61 (dd, J = 6.8, 2.3 Hz, 1H) 7.54 (dd, J = 7.1, 1.9 Hz, 1H) 7.26 (m, 2H) 1.38 (s, 12H)
¹¹B NMR (100 MHz, CDCl₃) δ 31.23
¹³C NMR (75 MHz, CDCl₃) δ 136.36, 132.63, 131.82, 128.02, 126.26, 84.30, 24.81.
MS (EI) t_{R} = 9.10 min; m/z: 283 (M⁺, 100%)

### Example 24: synthesis of 2-(3-bromophenyl)-4,4,5,5-tetramethyl-1,3,2-dioxaborolane [CAS 594823-67-3], compound VI_{A21}

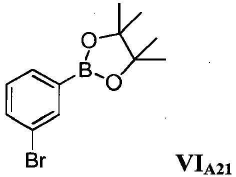

204 mg of 2-(3-iodophenyl)-4,4,5,5-tetramethyl-1,3,2-dioxaborolane were obtained following the general procedure D according to example 3, using 271 mg of 3-bromobenzenediazonium tetrafluoroborate as a pale yellow oil, with an isolated yield of 72%.
¹H NMR (300 MHz, CDCl₃) δ 7.75 (d, J = 7.3 Hz, 1H) 7.62 (ddd, J = 8.0, 2.0, 1.1 Hz, 1H) 7.27 (d, J = 7.7 Hz, 1H) 1.38 (s, 12H)
¹¹B NMR (100 MHz, CDCl₃) δ 30.65
¹³C NMR (75 MHz, CDCl₃) δ 137.63, 134.32, 133.23, 129.63, 122.60, 84.31, 25.01.
MS (EI) t_{R} = 9.03 min; m/z: 283 (M^{+.}, 100%)

### Example 25: synthesis of 2-(4-bromophenyl)-4,4,5,5-tetramethyl-1,3,2-dioxaborolane [CAS 68716-49-4], compound VI_{A22}

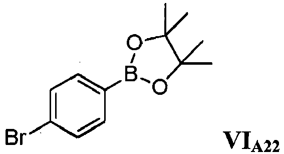

184 mg of 2-(3-iodophenyl)-4,4,5,5-tetramethyl-1,3,2-dioxaborolane were obtained following the general procedure D according to example 3, using 271 mg of 4-bromobenzenediazonium tetrafluoroborate as a pale yellow oil, with an isolated yield of 65%.
¹H NMR (300 MHz, CDCl₃) δ 7.66 (d, J = 8.2 Hz, 1H), 7.50 (d, J = 8.2 Hz, 1H), 1.34 (s, 12H)
¹¹B NMR (100 MHz, CDCl₃) δ 31.04
¹³C NMR (75 MHz, CDCl₃) δ
MS (EI) t_{R} = 8.99 min; m/z: 283 (M^{+.}, 100%)

### Example 26: synthesis of 2-(3-iodophenyl)-4,4,5,5-tetramethyl-1,3,2-dioxaborolane [CAS 408492-28-4], compound VI_{A23}

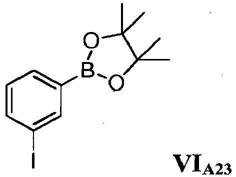

230 mg of 2-(3-iodophenyl)-4,4,5,5-tetramethyl-1,3,2-dioxaborolane were obtained following the general procedure D according to example 3, using 318mg of 3-iodobenzenediazonium tetrafluoroborate as a pale yellow oil, with an isolated yield of 70%.
¹H NMR (300 MHz, CDCl₃) δ 8.14 (s, 1H) 7.74-7.80 (m, 2H) 7.11 (t, J = 7.6 Hz, 1H) 1.34 (s, 12H)
¹¹B NMR (100 MHz, CDCl₃) δ 30.2
¹³C NMR (75 MHz, CDCl₃) δ 25.0; 31.1; 84.3; 94.4; 129.8; 133.8; 140.2; 143.6
GC-MS (EI) t_{R} = 9.80 min; m/z: 330 (M^{+.}, 100%)

### Example 27: synthesis of 2-(4-iodophenyl)-4,4,5,5-tetramethyl-1,3,2-dioxaborolane [CAS 73852-88-7], compound VI_{A24}

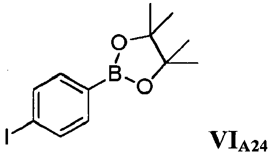

244 mg of 2-(3-iodophenyl)-4,4,5,5-tetramethyl-1,3,2-dioxaborolane were obtained following the general procedure D according to example 3, using 318mg of 4-iodobenzenediazonium tetrafluoroborate as a pale yellow oil, with an isolated yield of 74%.
¹H NMR (300 MHz, CDCl₃) δ 7.75 (d, J = 8.7 Hz, 1H) 6.90 (d, J = 8.7 Hz, 1H) 3.83 (s, 3H) 1.33 (s, 12H)
¹¹B NMR (100 MHz, CDCl₃) δ 31.02
¹³C NMR (75 MHz, CDCl₃) δ 139.48; 137.06; 136.42; 98.95; 84.18; 25.00
MS (EI) t_{R} = 9.80 min; m/z: 330 (M^{+.}, 100%)

### Example 28: synthesis of bis(4'-(3,3,4,4-tetramethyl-2,5,1-dioxaboryl)phenyl)methane, compound VI_{A26}

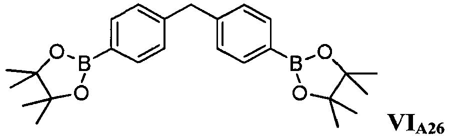

234 mg of bis(4'-(3,3,4,4-tetramethyl-2,5,1-dioxaboryl)phenyl)methane were obtained following the general procedure D according to example 3, using 396 mg of bis(4'-benzene)methanediazonium tetrafluoroborate as a pale yellow oil, with an isolated yield of 56%.
¹H NMR (300 MHz, CDCl₃) δ 7.80 (d, J = 8.0 Hz, 4H) 7.25 (d, J = 8.0 Hz, 4H) 4.07 (s, 2H) 1.40 (s, 24H)
¹¹B NMR (100 MHz, CDCl₃) δ 31.35
¹³C NMR (75 MHz, CDCl₃) δ 144.24, 135.15, 130.13, 129.05, 128.56, 126.22, 115.49, 83.82, 42.45, 24.99.

### Example 29: solvent effect

### Arylation reaction between 4-methoxyphenyl diazonium tetrafluoroborate and diisopropylaminoborane, in different solvents, catalysed by Cp₂Fe (1%), followed by methanolysis and transesterification

2-(4-methoxyphenyl)-4,4,5,5-tetramethyl-1,3,2-dioxaborolane, compound **VI_{A4}**, 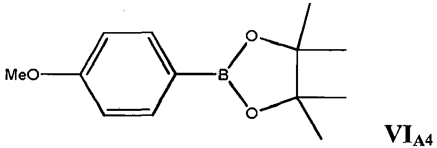 was prepared according to example 3 (Cp₂Fe), by varying the solvent.

**VI_{A4}** was isolated with a:
▪ 81 % yield when the solvent of the arylation reaction was DMAc,
▪ 71 % yield when the solvent of the arylation reaction was NMP,
▪ 87 % yield when the solvent of the arylation reaction was acetonitrile,
▪ 0 % yield when the solvent is toluene.

### Example 30: solvent, mixture containing 5% NMP

2-(4-methylphenyl)-4,4,5,5-tetramethyl-1,3,2-dioxaborolane, compound **VI_{A1},** 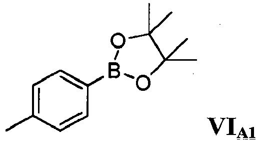 was prepared according to example 3, using Cp₂TiCl₂ as activating agent, in a solvent containing 5% NMP.

**VI_{A1}** was isolated with a:
▪ 50 % yield with acetonitrile/NMP 95/5,
▪ 74 % yield with THF/NMP 95/5, compared to 50% in pure THF,
▪ 61 % yield with toluene /NMP 95/5.

### Example 31: effect of the nature of the activating agent, ferrocene and its analogues Arylation reaction between 4-methoxyphenyl diazonium tetrafluoroborate and diisopropylaminoborane, with different activating agents containing iron (1%), followed by methanolysis and transesterification

2-(4-methoxyphenyl)-4,4,5,5-tetramethyl-1,3,2-dioxaborolane, compound **VI_{A4}**, 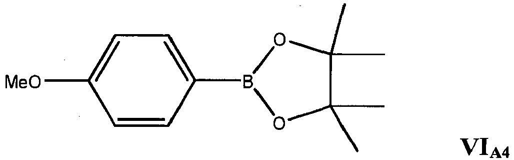 was prepared according to example 3, by varying the activating agent.

**VI_{A4}** was isolated with a :
▪ 87 % yield with Cp₂Fe as activating agent,
▪ 72 % yield with AcCpFeCp as activating agent,
▪ 77 % yield with *n*-BuCpFeCp as activating agent,
▪ 51% yield with as BrCpFeCp activating agent,
▪ 65 % yield with as *t*-BuCpFeCp activating agent,
▪ 65 % yield with vinylCpFeCp as activating agent.

### Example 32: effect of the amount of the ferrocene

Compound **VI_{A4}** was prepared according to example 3, in the absence of ferrocene, or in the presence of various amounts of ferrocene. The isolated yields are:
▪ 61 % yield without ferrocene,
▪ 79 % yield with 1% of ferrocene,
▪ 77 % yield with 0.1 % of ferrocene,
▪ 74 % yield with 0.01 % of ferrocene,
▪ 75 % yield with 0.001 % of ferrocene.

### Example 33: Synthesis of the arylpinacolboronates by arylation of diisopropylaminoborane, catalysed by a titanocene (1%), followed by methanolysis and transesterification

Compounds **VI_{A1}** to **VI_{A22}**, **VI_{A24}** and **VI_{A26}** were prepared using the procedure D (example 3), by replacing the ferrocene (1%) by the titanocene Cp₂TiCl₂ (1%). The yields are shown in the table 1.

**table 1**

| **compound** | | **Yield (%)^{[a]}** | **compound** | **Product** | **Yield (%)^{[a]}** |
|---|---|---|---|---|---|
| **VI_{A1}** | 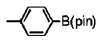 | **67** | **VI_{A14}** | 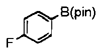 | **52** |
| **VI_{A2}** | 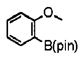 | **56** | **VI_{A15}** | 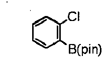 | **57** |
| **VI_{A3}** | 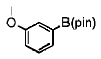 | **37** | **VI_{A16}** | 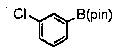 | **78** |
| **VI_{A4}** | 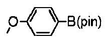 | **72** | **VI_{A17}** | 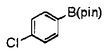 | **65** |
| **VI_{A5}** | 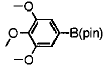 | **43** | **VI_{A18}** | 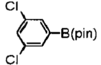 | **68** |
| **VI_{A6}** | 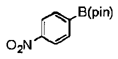 | **54** | **VI_{A19}** | 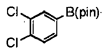 | **72** |
| **VI_{A7}** | 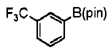 | **61** | **VI_{A20}** | 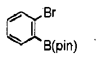 | **62** |
| **VI_{A8}** | 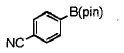 | **56** | **VI_{A21}** | 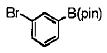 | **68** |
| **VI_{A9}** | 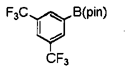 | **61** | **VI_{A22}** | 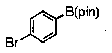 | **52** |
| **VI_{A10}** | 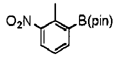 | **63** | | | |
| **VI_{A11}** | 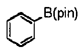 | **41** | **VI_{A24}** | 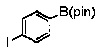 | **75** |
| **VI_{A12}** | 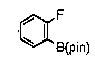 | **42** | | | |
| **VI_{A13}** | 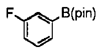 | **66** | **VI_{A26}** | 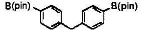 | **56** |

| | | | | | |
|---|---|---|---|---|---|
| ^{[a]} isolated yield | | | | | |

### Example 34: effect of the nature of the activating agent, titanocene and its analogues

2-(4-methoxyphenyl)-4,4,5,5-tetramethyl-1,3,2-dioxaborolane, compound **VI_{A4}**, 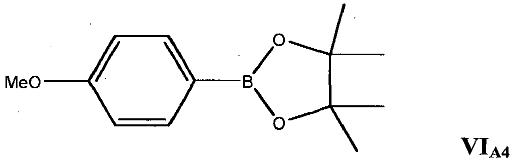 was prepared according to example 33, by varying the activating agent containing titanium.

**VI_{A4}** was isolated with a:
▪ 56 % yield with Cp₂Ti as activating agent,
▪ 60 % yield with Cp₂Ti(CO)₂ as activating agent,
▪ 61 % yield with (tBuCp)₂TiCl₂ as activating agent,
▪ 62 % yield with CpTiCl₃ as activating agent,
▪ 72 % yield with Cp₂TiCl₂ as activating agent,
▪ 67 % yield with Cp*TiCl₃ as activating agent,
▪ 61 % yield with Cp*₂TiCl₂ as activating agent.

### Example 35: effect of the amount of the titanocene

Compound **VI_{A4}** was prepared according to example 3, in the absence of titanocene, or the presence of various amounts of titanocene Cp₂TiCl₂. The isolated yields are:
▪ 61 % yield without titanocene,
▪ 71 % yield with 1% of titanocene,
▪ 72 % yield with 0.1 % of titanocene,
▪ 69 % yield with 0.01 % of titanocene,
▪ 71 % yield with 0.001 % of titanocene.

### Example 36: Synthesis of the arylpinacolboronates by arylation of diisopropylaminoborane, catalysed by Schwarzt's reagent Cp₂ZrHCl (1%), followed by methanolysis and transesterification

Compounds VI_{A1} to VI_{A26} were prepared using the procedure D (example 3), by replacing the ferrocene (1%) by Schwartz's reagent Cp₂ZrHCl (1%). Compounds VI_{A1} to VI_{A26} were thus prepared. The yields are shown in the table 2.

**table 2**

| | **compound** | **Yield (%)^{[a]}** | **compound** | **Product** | **Yield (%) ^{[a]}** |
|---|---|---|---|---|---|
| **VI_{A1}** | 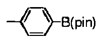 | **69** | **VI_{A14}** | 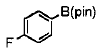 | **57** |
| **VI_{A2}** | 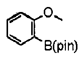 | **48** | **VI_{A15}** | 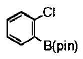 | **52** |
| **VI_{A3}** | 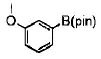 | **38** | **VI_{A16}** | 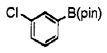 | **73** |
| **VI_{A4}** | 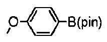 | **55** | **VI_{A17}** | 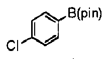 | **64** |
| **VI_{A5}** | 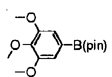 | **36** | **VI_{A18}** | 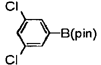 | **69** |
| **VI_{A6}** | 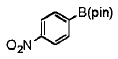 | **63** | **VI_{A19}** | 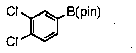 | **70** |
| **VI_{A7}** | 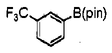 | **57** | **VI_{A20}** | 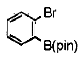 | **57** |
| **VI_{A8}** | 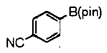 | **53** | **VI_{A21}** | 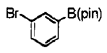 | **65** |
| **VI_{A9}** | 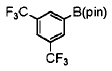 | **65** | **VI_{A22}** | 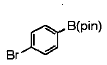 | **57** |
| **VI_{A10}** | 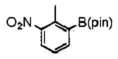 | **58** | **VI_{A23}** | 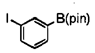 | **70** |
| **VI_{A11}** | 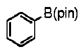 | **49** | **VI_{A24}** | 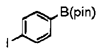 | **79** |
| **VI_{A12}** | 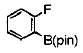 | **51** | | | |
| **VI_{A13}** | 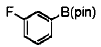 | **64** | **VI_{A26}** | 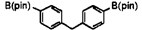 | **52** |

| | | | | | |
|---|---|---|---|---|---|
| isolated yield | | | | | |

### Example 37: effect of the nature of the activating agent, zirconocene and its analogues

2-(4-methoxyphenyl)-4,4,5,5-tetramethyl-1,3,2-dioxaborolane, compound **VI_{A4}**, 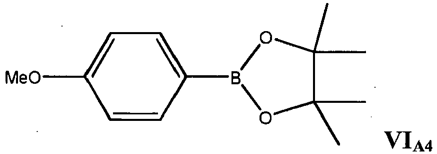 was prepared according to example 3, by varying the activating agent containing zirconium, **VI_{A4}** was isolated with a:
▪ 75 % yield with (indenyl)₂ZrCl₂ as activating agent,
▪ 68 % yield with (tBuCp)₂ZrCl₂ as activating agent,
▪ 68 % yield with Cp₂Zr Cl₂ as activating agent,
▪ 74 % yield with Cp₂ ZrHCl as activating agent.

### Example 38: other activating agents

2-(4-methoxyphenyl)-4,4,5,5-tetramethyl-1,3,2-dioxaborolane, compound **VI_{A4}**, 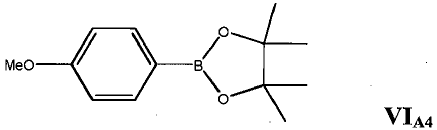 was prepared according to example 3, by varying the activating agent containing cobalt, nickel or ruthenium, in the amount of 1%.

**VI_{A4}** was isolated with a:
▪ 61 % yield with [Cp₂Co]PF₆ as activating agent,
▪ 69 % yield with Cp₂Co as activating agent,
▪ 76 % yield with Cp₂Ni as activating agent,
• 74 % yield with Cp₂Ru as activating agent.

### Example 39: yields in compounds VI_{A} prepared by arylation of diisopropylaminoborane, without activating agent

Compounds VI_{A1} to VI_{A26} were prepared using the procedure D (example 3) without any activating agent. The yields are shown in the table 3.

**table 3**

| | **compound** | **Yield (%)^{[a]}** | **compound** | **Product** | **Yield (%)^{[a]}** |
|---|---|---|---|---|---|
| **VI_{A1}** | 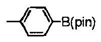 | **59** | **VI_{A14}** | 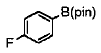 | 40 |
| **VI_{A2}** | 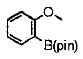 | **38** | **VI_{A15}** | 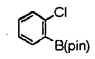 | **47** |
| **VI_{A3}** | 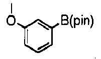 | **44** | **VI_{A16}** | 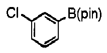 | **71** |
| **VI_{A4}** | 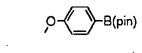 | **62** | **VI_{A17}** | 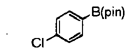 | **62** |
| **VI_{A5}** | 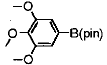 | **43** | **VI_{A18}** | 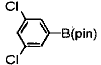 | **70** |
| **VI_{A6}** | 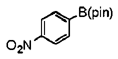 | **63** | **VI_{A19}** | 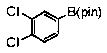 | **69** |
| **VI_{A7}** | 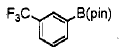 | **63** | **VI_{A20}** | 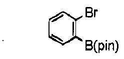 | **38** |
| **VI_{A8}** | 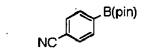 | **56** | **VI_{A21}** | 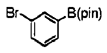 | **68** |
| **VI_{A9}** | 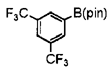 | **56** | **VI_{A22}** | 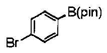 | **63** |
| **VI_{A10}** | 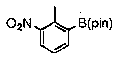 | **66** | **VI_{A23}** | 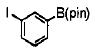 | **69** |
| **VI_{A11}** | 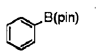 | **48** | **VI_{A24}** | 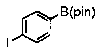 | **79** |
| **VI_{A12}** | 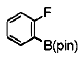 | **50** | | | |
| **VI_{A13}** | 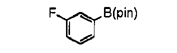 | **63** | **VI_{A26}** | 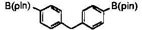 | **60** |

| | | | | | |
|---|---|---|---|---|---|
| ^{[a]} isolated yield | | | | | |

### Example 40: General procedure E for the synthesis of the arylpinacolboronates directly by arylation of pinacolborane, catalysed by ferrocene (1%)

In a dried tube reactor under argon (see example 2), were dissolved the 4-methoxybenzene diazonium tetrafluoroborate salt (1 mmol, 222mg) and ferrocene (10µmol, 1.8mg) in 2mL of anhydrous CH₃CN. Pinacolborane (2mmol 256mg) was then added to the solution and stirred for 2h30 at room temperature. The reaction mixture was quenched by a slow addition of anhydrous MeOH at 0°C (2mL) and stirred for an additional hour at room temperature. After removal of all the volatiles, the crude mixture was taken in diethyl ether and washed with a 50g/L CuCl₂ solution (2 x 5mL). The organic layer were separated, dried over Na₂SO₄, filtered and concentrated in vacuo. The resulted oil was dissolved with CH₂Cl₂ and filtered of a pad of silica gel, eluted with CH₂Cl₂ to afford the corresponding boronate in 3% yield.

### Example 41: General procedure for the tandem diazotation/arylation sequence of anilines to aryl boronates

To a solution of aniline (1 mmol) in 3 ml of freshly distilled acetonitrile, at 0°C, was added boron trifluoride etherate (1.5 mmol 0.4 ml) and the solution stirred for 5 minutes. Isoamyl nitrite (1.2 mmol, 0.2 ml) was then slowly added and the solution stirred for 15 minutes. Diisopropylaminoborane (4 mmol, 0.6 ml) was then slowly added and the mixture was stirred at room temperature for 3 hours. The reaction was then quenched, at 0°C, by the slow addition of 2 ml of distillated methanol and stirred 1 hour at room temperature. The mixture was concentrated under vacuum and a solution of pinacol (1.3 mmol, 153 mg) in 2 ml of diethyl ether was added and the mixture stirred for 4 hours at room temperature. 10 ml of diethyl ether were then added and the crude washed three times with 6 ml of an aqueous solution of copper chloride CuCl₂ (50 g/L). The organic phase was then filtered and dried over Na₂SO₄ and concentrated under vacuum to afford pure arylboronate.

### Example 42: isolation and purification of the aminoarylboranes prepare by arylation reaction

After reaction, the product was isolated by bulb to bulb distillation.

### Example 43: percentage of the aniline compounds produced by side reaction of reduction of diazonium salt

The anilines have the following formula, wherein the position(s) of the substituent(s) is (are) indicated by a number, reported in the table 4, as well as their nature :

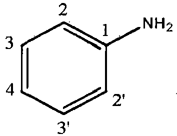

**table 4**

| **Substituent(s) on the aryl group Position/nature** | **Percentage of aniline as byproduct %** |
|---|---|
| **2-I** | **1** |
| **3-I** | **2** |
| **4-I** | **3** |
| **2-Cl** | **0** |
| **3-Cl** | **0,6** |
| **4-Cl** | **1** |
| **3NO₂** | **2** |
| **2-F** | **0,2** |
| **3-F** | **0,6** |
| **4-F** | **1** |
| **2-Br** | **1,2** |
| **3-Br** | **0,9** |
| **4-Br** | **0,8** |
| **4-CH3** | **0,05** |
| **2-OMe** | **1** |
| **3-OMe** | **0,4** |
| **4-OMe** | **0,05** |
| **H** | **0,2** |
| **3,5-di Cl** | **3** |
| **3,4-di Cl** | **2** |
| **3-CF3** | **0** |
| **4-CN** | **3** |

## Claims

1. Use of an arenediazonium salt or a heteroarenediazonium salt and of an organoboron compound containing at least one boron-hydrogen bond, in the absence of base,
for the implementation of a process involving an arylation reaction leading to an arylborane compound.

2. Process for the preparation of an arylborane compound containing at least one B-H bond, by arylation of a B-H bond, which comprises:
(1) a step of contacting an arenediazonium salt or a heteroarenediazonium salt with an organoboron compound containing at least one B-H bond, in a reaction medium containing a solvent, in the absence of base,
for the preparation of an arylborane compound,
(2) a possible step of recovery
and purification of said arylborane compound obtained at the step (1).

3. Process according to claim 2, for the preparation of an arylborane compound,
wherein the aryl group Ar has from 6 to 26 carbon atoms,
the aryl group being possibly a heteroaryl group containing one or several heteroatom(s) chosen among O, N or S, and having from 4 to 26 carbon atoms,
in particular said arylborane being:
▪ an aminoarylborane of following formula 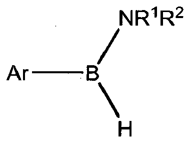 wherein the amino group is a -NR¹R² group, wherein R¹ and R², identical or different, represent:
• linear alkyls having from 1 to 20 carbon atoms, branched alkyls having from 3 to 20 carbon atoms or cycloalkyls having from 3 to 20 carbon atoms,
• benzyls having from 7 to 20 carbon atoms, wherein
- the aromatic ring is possibly substituted by halogen(s), hydroxy, alkoxy, alkyl groups having from 1 to 10 carbon atoms,
- and/or the carbon atom of the methylene group linked to the nitrogen atom, is possibly substituted by an alkyl group having from 1 to 10 carbon atoms, in particular by a methyl group, said carbon atom being possibly chiral,
• phenyls possibly substituted on the aromatic ring by halogen(s), hydroxy, alkoxy groups having from 1 to 5 carbon atoms,
• R¹ and R² possibly forming an alkylene group corresponding to the formula -CR³R⁴-(CH₂)ₙ-CR⁵R⁶, in which n is ranging from 0 to 4, and the R³ to R⁶ substituents are chosen, independently of one another, from hydrogen and alkyl groups having from 1 to 20 carbon atoms in particular said alkylene being 1,1,5,5-tetramethylpentylene,
▪ a dialkoxyarylborane (arylboronic ester) of following formula 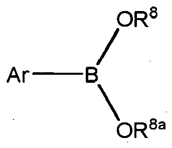 wherein the alkoxy groups are -OR⁸ and -OR^{8a}, wherein R⁸ and R^{8a}, identical or different, represent:
- a linear alkyl having from 1 to 20 carbon atoms,
- a branched alkyl having from 3 to 20 carbon atoms,
- a cycloalkyl having from 3 to 20 carbon atoms, possibly substituted by one or several halogen atom(s),
- a phenyl possibly substituted by halogen(s), hydroxy, alkoxy groups having from 1 to 5 carbon atoms,
- a benzyl having from 7 to 20 carbon atoms, wherein
- the aromatic ring is possibly substituted by halogen(s), hydroxy, alkoxy, alkyl groups having from 1 to 10 carbon atoms,
- and/or the carbon atom of the methylene group linked to the nitrogen atom, is possibly substituted by an alkyl group having from 1 to 10 carbon atoms, in particular by a methyl group, said carbon atom being possibly chiral,
- or an acetoxy group having from 1 to 20 carbon atoms,
the alkoxy groups -OR⁸ and -OR^{8a} being in particular connected by a 2 to 4 carbons chain and possibly forming a 5 or 6 membered ring including the boron atom and the two oxygen atoms, the ring being therefore a 5 to 7 membered ring originated from a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
▪ an alkoxyaminoarylborane of following formula 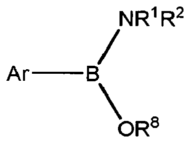 wherein
• the amino group is a -NR¹R² group, R¹ and R² having the above mentioned meanings,
• the alkoxy group is a -OR⁸ group, R⁸ having the above mentioned meanings,
▪ a diaminoarylborane of following formula 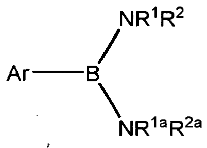
wherein the amino groups are -NR¹R² and -NR^{1a}R^{2a} groups, R¹ and R² having the above mentioned meanings, R^{1a} being identical or different from R¹, and R^{2a} being identical or different from R², R^{1a} and R^{2a} being identical or different,
said arylborane being in particular an aminoarylborane or a cyclic diaminoarylborane.

4. Process according to anyone of claims 2 or 3, comprising a step of contacting an arenediazonium salt or a heteroarenediazonium salt of formula Ar-N₂A,
wherein
▪ A represents an anion chosen among chloride, bromide, iodide, hexafluorophosphate, bistrifluoromethylsulfonylamidure, alkylsulfonates, arylsulfonates, alkylsulfates, alkylcarboxylates, trifluoroacetate, triflates or tetrafluoroborate, preferably the tetrafluoroborate anion,
▪ Ar is chosen among the aromatic groups including:
▪ an aryl group, preferably a phenyl, a naphtalenyl, an anthracenyl, a phenanthrenyl, a biphenyl group, said aryl group being possibly mono or polysubstituted, in particular di or trisubstituted, the substituents, identical or different, being chosen independently of one another,
▪ a heteroaryl group, preferably pyridine, pyrazine, imidazole, pyrazole, oxazole, isoquinoline, thiophene, benzothiophene, furane, benzofurane, isoindole, optionnally carrying at least one substituent,
said substituent(s) carried by the aryl or by the heteroaryl group, being chosen among
□ - F, -Cl, -Br or -I,
□ -SO₂-NH₂, or a salt thereof, -SO₂-R⁹,
□ -NO₂,
□ -CF₃,
□ -CN,
□ -R¹⁰, a linear alkyl having from 1 to 20 carbon atoms, branched alkyl having from 3 to 20 carbon atoms or cycloalkyl having from 3 to 20 carbon atoms,
□ an alkoxy group -OR¹¹,
□ -OSi^{t}BuPh₂ of following formula 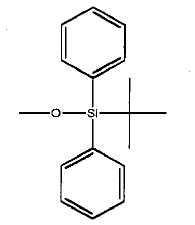
□ -OSi^{t}BuMe₂ of following formula 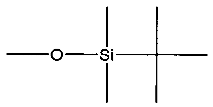
□ an alkylthio group -SR¹²,
□ a carboxylic group -COOH, or an ester group -COOR¹³, or an amido group -CO-NH₂ or a salt thereof, -CO-NR¹⁴R^{14a},
□ a keto group -CO-R¹⁵, possibly protected as an acetal or thioacetal,
□ an amino group -NR¹⁶R^{16a} or a salt thereof,
□ an aldehyde group possibly protected as an acetal or thioacetal,
□ a trialkylsilyl group -SiR¹⁷₃,
□ a benzyl group having from 7 to 20 carbon atoms, wherein
- the aromatic ring is possibly substituted by halogen(s), hydroxy, alkoxy, alkyl groups having from 1 to 10 carbon atoms, or by an amino or a diazonium group,
- and/or the carbon atom of the methylene group linked to the nitrogen atom, is possibly substituted by an alkyl group having from 1 to 10 carbon atoms, in particular by a methyl group, said carbon atom being possibly chiral,
□ a borylated group in which boron is a B(III) boron atom (oxidation state III), said group being in particular a dialkoxyboryl group of formula 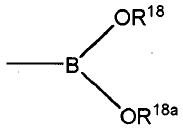 wherein
R¹⁸ and R^{18a}, identical or different, represent:
- linear alkyls having from 1 to 20 carbon atoms,
- branched alkyls having from 3 to 20 carbon atoms,
- cycloalkyls having from 3 to 20 carbon atoms, possibly substituted by one or several halogen atom(s),
- phenyls possibly substituted by halogen(s), hydroxy, alkoxy groups having from 1 to 5 carbon atoms,
- benzyls having from 7 to 20 carbon atoms, wherein
- the aromatic ring is possibly substituted by halogen(s), hydroxy, alkoxy, alkyl groups having from 1 to 10 carbon atoms,
- and/or the carbon atom of the methylene group linked to the nitrogen atom, is possibly substituted by an alkyl group having from 1 to 10 carbon atoms, in particular by a methyl group, said carbon atom being possibly chiral,
- or acetoxy groups having from 1 to 20 carbon atoms,
the alkoxy groups -OR¹⁸ and -OR^{18a} being in particular connected by a 2 to 4 carbons chain and possibly forming a ring including the boron atom and the two oxygen atoms, the ring being therefore a 5 to 7 membered ring originated from a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
□ a borylated group in which boron is a B(IV) boron atom (oxidation state IV), being in particular:
▪ a trifluoroborate group,
▪ a trihydroxyborate group,
▪ a trialkoxyborate group, -B(OR^{a})₃, wherein R^{a} is an alkyl group having from 1 to 10 carbon atoms, (OR^{a})₃ possibly forming two rings between the three oxygen atoms, originating from a triol chosen among 1,2,3-propane triol (glycerol) or 1,1,1-tris(hydroxymethyl)ethane (2-(hydroxymethyl)-2-methyl-1,3-propanediol),
▪ a boratrane generated from an aminodiol containing from 3 to 20 carbon atoms, said aminodiol forming, with the boron atom, rings of 5 or 6 members and aminodiol being a N,N-bis(hydroxyalkyl)alkylamine of the formula HO-R^{b}-NR^{c}-R^{b'}-OH,
wherein
R^{b} and R^{b'}, identical or different, are linear alkylene groups having 2 or 3 carbon atoms, or branched alkylene groups having from 3 to 5 carbon atoms,
R^{c} is a hydrogen atom or an alkyl group having 1 to 4 carbon atoms,
▪ a MIDA borate group originated from 2,2'-(methylazanediyl)diacetic acid and having the following formula 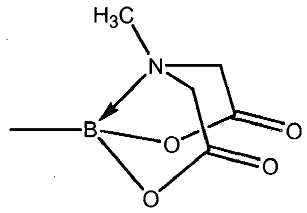
□ a combination of the above,
wherein
• R¹⁰ and R¹⁷ represent linear alkyls having from 1 to 20 carbon atoms, branched alkyls having from 3 to 20 carbon atoms or cycloalkyls having 3 to 20 carbon atoms,
• R⁹, R¹¹ R¹², R¹³, R¹⁴, R^{14a}, R¹⁵, R¹⁶ and R^{16a} represent linear alkyls having from 1 to 20 carbon atoms, branched alkyls having from 3 to 20 carbon atoms or cycloalkyls having 3 to 20 carbon atoms, possibly substituted by one or several halogen atom(s), or phenyls possibly substituted by halogen(s), hydroxy, alkoxy groups having from 1 to 5 carbon atoms, or benzyls having from 7 to 20 carbon atoms, wherein the aromatic ring is possibly substituted by halogen(s), hydroxy, alkoxy, alkyl groups having from 1 to 10 carbon atoms, and/or the carbon atom of the methylene group linked to the nitrogen atom, is possibly substituted by an alkyl group having from 1 to 10 carbon atoms, in particular by a methyl group, said carbon atom being possibly chiral,
with an organoboron compound to be arylated containing at least one boron-hydrogen bond and having the general following formula **I** 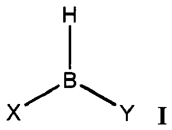 wherein
▪ X represents:
□ -H,
□ -NR¹R²,
□ -R⁷,
□ -OR⁸,
wherein
• R¹ and R², identical or different, represent :
- linear alkyls having from 1 to 20 carbon atoms, branched alkyls having from 3 to 20 carbon atoms or cycloalkyls having 3 to 20 carbon atoms,
- benzyls having from 7 to 20 carbon atoms, wherein
- the aromatic ring is possibly substituted by halogen(s), hydroxy, alkoxy, alkyl groups having from 1 to 10 carbon atoms,
- and/or the carbon atom of the methylene group linked to the nitrogen atom, is possibly substituted by an alkyl group having from 1 to 10 carbon atoms, in particular by a methyl group, said carbon atom being possibly chiral,
- phenyls possibly substituted on the aromatic ring by halogen(s), hydroxy, alkoxy groups having from 1 to 5 carbon atoms,
R¹ and R² possibly forming an alkylene group corresponding to the formula -CR³R⁴-(CH₂)ₙ-CR⁵R⁶, in which n is ranging from 0 to 4, and the R³ to R⁶ substituents are chosen, independently of one another, among hydrogen and alkyl groups having from 1 to 20 carbon atoms in particular said alkylene being 1,1,5,5-tetramethylpentylene,
• R⁷ represents a linear alkyl having from 1 to 20 carbon atoms, a branched alkyl having from 3 to 20 carbon atoms or a cycloalkyl having from 3 to 20 carbon atoms,
• R⁸ represents:
- a linear alkyl having from 1 to 20 carbon atoms,
- a branched alkyl having from 3 to 20 carbon atoms,
- a cycloalkyl having from 3 to 20 carbon atoms, possibly substituted by one or several halogen atom(s),
- a phenyl possibly substituted by halogen(s), hydroxy, alkoxy groups having from 1 to 5 carbon atoms,
- a benzyl having from 7 to 20 carbon atoms, wherein
- the aromatic ring is possibly substituted by halogen(s), hydroxy, alkoxy, alkyl groups having from 1 to 10 carbon atoms,
- and/or the carbon atom of the methylene group linked to the nitrogen atom, is possibly substituted by an alkyl group having from 1 to 10 carbon atoms, in particular by a methyl group, said carbon atom being possibly chiral,
- or an acetoxy group having from 1 to 20 carbon atoms,
▪ Y represents:
□ -H,
□ -NR^{1a}R^{2a},
□ -R^{7a},
□ -OR^{8a},
wherein
• R^{1a} and R^{2a}, identical or different, represent:
- linear alkyls having from 1 to 20 carbon atoms, branched alkyls having from 3 to 20 carbon atoms or cycloalkyls having from 3 to 20 carbon atoms,
- benzyls having from 7 to 20 carbon atoms, wherein
- the aromatic ring is possibly substituted by halogen(s), hydroxy, alkoxy, alkyl groups having from 1 to 10 carbon atoms,
- and/or the carbon atom of the methylene group linked to the nitrogen atom, is possibly substituted by an alkyl group having from 1 to 10 carbon atoms, in particular by a methyl group, said carbon atom being possibly chiral,
- phenyls possibly substituted on the aromatic ring by halogen(s), hydroxy, alkoxy groups having from 1 to 5 carbon atoms,
R^{1a} and R^{2a} possibly forming an alkylene group corresponding to the formula -CR^{3a}R^{4a}-(CH2)ₙ-CR^{5a}R^{6a}, in which n is ranging from 0 to 4, and the R^{3a} to R^{6a} substituents are chosen, independently of one another, among hydrogen and alkyl groups having from 1 to 20 carbon atoms in particular said alkylene being 1,1,5,5-tetramethylpentylene,
• R^{7a} represents a linear alkyl having from 1 to 20 carbon atoms, a branched alkyl having from 3 to 20 carbon atoms or a cycloalkyl having from 3 to 20 carbon atoms,
• R^{8a} represents:
- a linear alkyl having from 1 to 20 carbon atoms,
- a branched alkyl having from 3 to 20 carbon atoms,
- a cycloalkyl having from 3 to 20 carbon atoms, possibly substituted by one or several halogen atom(s),
- a phenyl possibly substituted by halogen(s), hydroxy, alkoxy groups having from 1 to 5 carbon atoms,
- a benzyl having from 7 to 20 carbon atoms, wherein
- the aromatic ring is possibly substituted by halogen(s), hydroxy, alkoxy, alkyl groups having from 1 to 10 carbon atoms,
- and/or the carbon atom of the methylene group linked to the nitrogen atom, is possibly substituted by an alkyl group having from 1 to 10 carbon atoms, in particular by a methyl group, said carbon atom being possibly chiral,
- or an acetoxy group having from 1 to 20 carbon atoms,
X and Y being independently chosen, provided that if X=H then Y≠H,
and if X=-OR⁸ and Y=-OR^{8a}, then the alkoxy groups -OR⁸ and -OR^{8a} are in particular connected by a 2 to 4 carbons chain and possibly form a ring including the boron atom and the two oxygen atoms, the ring being therefore a 5 to 7 membered ring originated from a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
for the preparation of an arylborane or a heteroarylborane of following formula IV 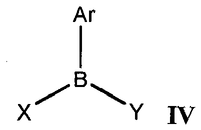 wherein
X, Y and Ar have the above mentioned meanings.

5. Process according to anyone of claims 2 to 4, wherein the arylation reaction is activated by activating means or not, wherein the activating means are chosen among
• an activating agent, preferably a complex of a transition metal or a salt of a transition metal or a salt of a transition metal complex, containing a transition metal belonging, in particular, to the group IV, VIII, IX, X or XI, being in particular a metallocene or a salt thereof chosen among:
• a titanocene, in particular (tBuCp)₂TiCl₂, CpTiCl₃, Cp₂TiCl₂, Cp*₂TiCl₂, Cp*TiCl₃, Cp₂Ti(CO)₂, TiCp₂, preferably Cp₂TiCl₂,
wherein
- tBu is a tertiobutyl group,
- Cp is a cyclopentadienyl group, optionally substituted by a halogen, an alkyl group having 1 to 10 carbon atoms, an aromatic or heteroaromatic group having 5 to 12 carbon atoms, a vinyl group having 2 to 10 carbon atoms, an allyl group having 3 to 10 carbon atoms, an alkylammonium salt having from 1 to 10 carbon atoms,
- Cp* is a 1,2,3,4,5-pentamethylcyclopentadienyl group,
• a zirconocene, in particular (indenyl)₂ZrCl₂, Cp₂ZrHCl (Schwartz's reagent), (tBuCp)₂ZrCl₂, preferably Cp₂ZrHCl,
wherein indenyl is a benzocyclopentadienyl group,
• a ferrocene, in particular Cp₂Fe, BrCpFeCp, Cp*₂Fe, AcCpFeCp, *n*-BuCpFeCp, *t-*BuCpFeCp, vinylCpFeCp, preferably Cp₂Fe,
• a ruthenocene, in particular Cp₂Ru, Cp*₂Ru, or a ruthenium complex, in particular Ru(acac)₃, wherein acac represents acetylacetonate,
• a cobaltocene, in particular Cp₂Co, [Cp₂Co]PF₆ (cobaltocenium hexafluorophosphate), Cp*₂Co,
• a nickelocene, in particular Cp₂Ni, Cp*₂Ni,
• a copper complex, in particular[Cu(OH)tmeda]₂, Cu(salen),
wherein
- tmeda represents tetramethylethylenediamine,
- salen represents 2,2'-ethylenebis(nitrilomethylidene)diphenol,
• a palladium complex, in particular Pd(acac)₂ (palladium diacetylacetonate), (CH₂=CH-CH₂PdCl)₂ (allylpalladium chloride), a palladium salt in particular Pd(OAc)₂, Pd(CN)₂,
the activating agent being preferably chosen among metallocenes, in particular ferrocenes, titanocenes, or zirconocenes, preferably Cp₂Fe, Cp₂TiCl₂ or Cp₂ZrHCl,
• or radical generating means, preferably by light irradiation, preferably ultraviolet light irradiation (UV), at a wavelength comprised from 180 nm to 400 nm, preferably comprised from 200 nm to 400 nm, in particular equal to about 254 nm, or a radical initiator chosen among azobisisobutyronitrile (AIBN), 1,1'-azobiscyclohexanecarbonitrile (ABCN), dilauroyl peroxide (DLP).

6. Process according to anyone of claims 2 to 5, wherein the solvent is aprotic and polar, in particular chosen among acetonitrile, propionitrile, butyronitrile, ethylacetate, isopropylacetate, dioxane, dimethylacetamide (DMAc), acetone, N-methyl-2-pyrrolidone (NMP), 2-methoxy-2-methylpropane (MTBE) or tetrahydrofuran (THF), or a mixture thereof, in particular acetonitrile.

7. Process according to anyone of claims 2 to 6, for the preparation of an aminoarylborane compound which comprises:
(1) a step of contacting an arenediazonium salt or a heteroarenediazonium salt with an aminoborane of following formula **II** 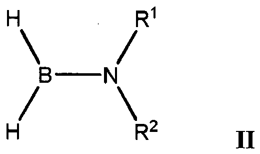 wherein R¹ and R², identical or different, have the meanings mentioned in claim 4, in a reaction medium containing a solvent, in the absence of base,
for the preparation of an aminoarylborane compound of formula **V**, 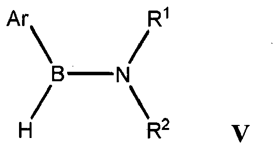 wherein Ar, R¹ and R² have the meanings mentioned in claim 4,
R¹ and R² being preferably *iso*propyl groups,
(2) a possible step of recovery and purification of the aminoarylborane compound of formula V from the reaction medium,
▪ in particular for the preparation of a diisopropylaminoarylborane compound which comprises:
(1) a step of contacting an arenediazonium salt or a heteroarenediazonium salt with the diisopropylaminoborane of following formula **II_{A}** 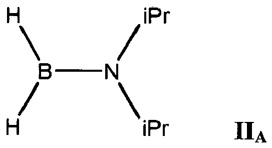 in a reaction medium containing a solvent, in the absence of base,
for the preparation of a diisopropylaminoarylborane compound of formula **V_{A}**, 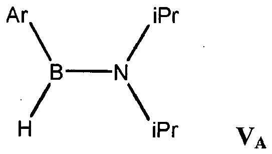 wherein Ar has the meanings mentioned in claim 4,
(2) a possible step of recovery and purification of the diisopropylaminoarylborane compound of formula **V_{A}** from the reaction medium,
▪ in particular for the preparation of a diisopropylaminoarylborane compound which comprises:
(1) a step of contacting an arenediazonium salt or a heteroarenediazonium salt with the diisopropylaminoborane of following formula **II_{A}** 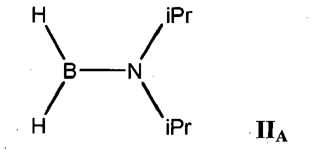 in a reaction medium containing a solvent, in the absence of base, in the presence of an activating agent preferably chosen among metallocenes, in particular ferrocenes, titanocenes, or zirconocenes, preferably Cp₂Fe, Cp₂TiCl₂ or Cp₂ZrHCl,
for the preparation of a diisopropylaminoarylborane compound of formula **V_{A}**, 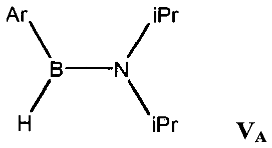 wherein Ar has the meanings mentioned in claim 4,
(2) a possible step of recovery and purification of the diisopropylaminoarylborane compound of formula **V_{A}** from the reaction medium.

8. Process according to anyone of claims 2 to 6, for the preparation of a dialkoxyarylborane compound which comprises:
(1) a step of contacting an arenediazonium salt or a heteroarenediazonium salt with a dialkoxyborane of following formula **III** 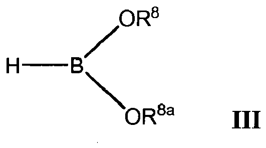 wherein R⁸ and R^{8a}, identical or different, have the meanings mentioned in claim 4,
in a reaction medium containing a solvent, in the absence of base, for the preparation of a dialkoxyarylborane compound of formula **VI**, 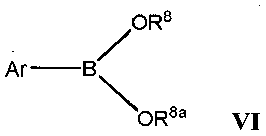 wherein R⁸, R^{8a} and Ar have the meanings mentioned in claim 4,
(2) a possible step of recovery and purification of the dialkoxyarylborane compound of formula **VI** from the reaction medium,
▪ in particular for the preparation of an arylpinacolborane compound which comprises:
(1) a step of contacting an arenediazonium salt or a heteroarenediazonium salt with the pinacolborane of following formula **III_{A}** 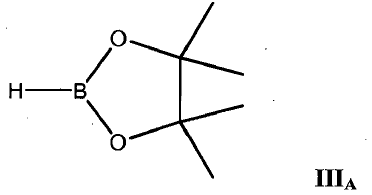 in a reaction medium containing a solvent, in the absence of base,
for the preparation of an arylpinacolborane compound of formula **VI_{A}**, 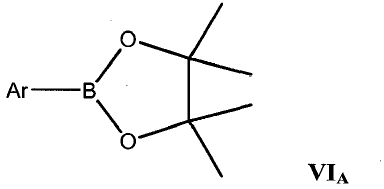 wherein Ar has the meanings mentioned in claim 4,
(2) a possible step of recovery and purification of the arylpinacolborane compound of formula **VIA** from the reaction medium,
▪ in particular for the preparation of an arylpinacolborane compound which comprises:
(1) a step of contacting an arenediazonium salt or a heteroarenediazonium salt with the pinacolborane of following formula **III_{A}** 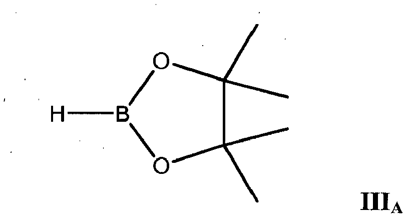 in a reaction medium containing a solvent, in the absence of base,
in the presence of an activating agent preferably chosen among metallocenes, in particular ferrocenes, titanocenes, or zirconocenes, preferably Cp₂Fe, Cp₂TiCl₂ or Cp₂ZrHCl,
for the preparation of an arylpinacolborane compound of formula **VI_{A}**, 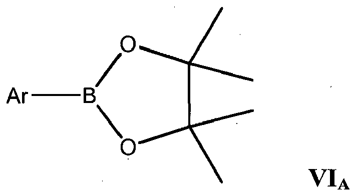 wherein Ar has the meanings mentioned in claim 4,
(2) a possible step of recovery and purification of the arylpinacolborane compound of formula **VI_{A}** from the reaction medium.

9. Process according to claim 7, wherein the step of contacting an arenediazonium salt or a heteroarenediazonium salt with an aminoborane is performed in an aprotic polar solvent, preferably acetonitrile,
at a temperature comprised from 10 °C to 60 °C, in particular comprised from 18 °C to 30 °C, preferably equal to about 20 °C, during a time ranging from 1 h to 3 h, preferably 2,5 h,
for the preparation of an aminoarylborane,
or wherein the step of mixing an arenediazonium salt or a heteroareneazonium salt with an aminoborane is performed in an aprotic polar solvent, preferably acetonitrile,
in the presence of an activating agent containing a transition metal, said activating agent being preferably chosen among metallocenes, in particular ferrocenes, titanocenes, or zirconocenes, preferably Cp₂Fe, Cp₂TiCl₂ or Cp₂ZrHCl,
with a molar percentage relative to the metal comprised from 0,001 % to 5 %, in particular comprised from 0,001 % to 1 %, preferably equal to about 0,001 %, or about 0,01 %, or about 0,1 % or about 1 %,
at a temperature comprised between 10 °C to 60 °C, in particular comprised between 18 °C to 30 °C, preferably equal to about 20 °C, during a time ranging from 1 h to 3 h, preferably 2,5 h,
for the preparation of an aminoarylborane compound.

10. Process according to claim 8, wherein the step of contacting an arenediazonium salt or a heteroarenediazonium salt with a dialkoxyborane is performed in an aprotic polar solvent, preferably acetonitrile,
at a temperature comprised between 20 °C to 50 °C, in particular comprised between 20 °C to 30 °C, preferably equal to about 25 °C, during a time ranging from 2 h to 4 h, preferably 2,5 h,
for the preparation of an dialkoxyarylborane,
or wherein the step of mixing an arenediazonium salt or a heteroareneazonium salt with an alkoxyborane is performed in an aprotic polar solvent, preferably acetonitrile,
in the presence of an activating agent containing a transition metal, said activating agent being chosen among metallocenes, in particular ferrocenes, titanocenes, or zirconocenes, preferably Cp₂Fe, Cp₂TiCl₂ or Cp₂ZrHCl,
with a molar percentage relative to the metal comprised from 0,001 % to 5 %, in particular comprised from 0,001 % to 1 %, preferably equal to about 0,001 %, or about 0,01 %, or about 0,1 % or about 1 %,
at a temperature comprised between 20 °C to 50 °C, in particular comprised between 20 °C to 30 °C, preferably equal to about 25 °C, during a time ranging from 2 h to 4 h, preferably 2,5 h,
for the preparation of a dialkoxyarylborane compound.

11. Process according to anyone of claims 2 to 7 or 9, comprising after step (1) or (2), a step (3) of treatment of the aminoarylborane obtained at step (1) or (2), into an arylborane which is different from the one obtained at step (1) or (2),
said treatment being in particular an alcoholysis, preferably with a first alcohol, in particular methanol, said alcoholysis possibly followed
• by a transesterification with a second alcohol, preferably a diol chosen among ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
for the preparation of an arylboronic ester of the following formula **VI** 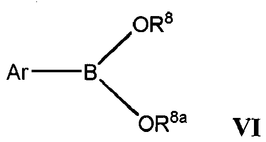 wherein R⁸, R^{8a} and Ar have the meanings mentioned in claim 4,
in particular for the preparation of a cyclic aryldialkoxyborane,
preferably for the preparation of an arylpinacolborane of the following formula **VIA** 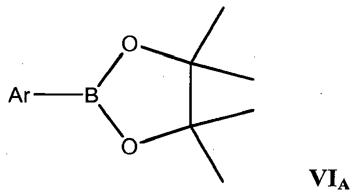 wherein Ar has the above mentioned meanings,
• or by a hydrolysis in order to obtain an arylboronic acid of formula **VII** 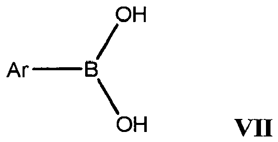
wherein Ar has the above mentioned meanings.

12. Process according to anyone of claims 2 to 7 or 9,
for the preparation of the diisopropylaminoarylboranes of formulae represented below, said diisopropylaminoboranes being isolated and purified, or not:

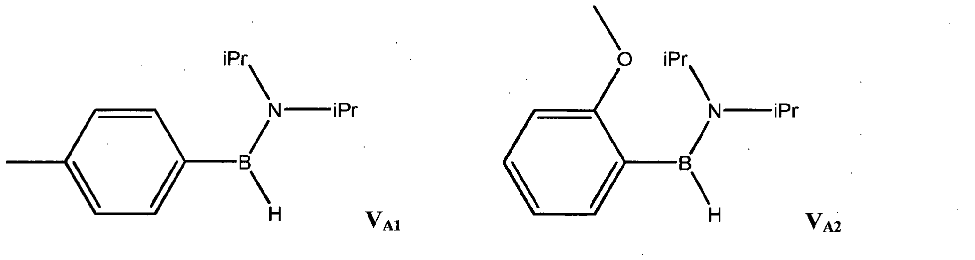

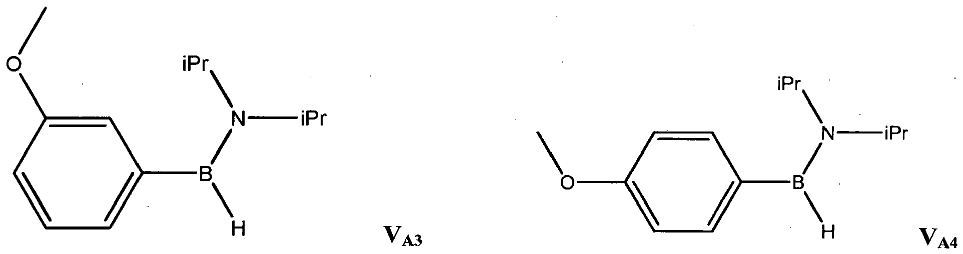

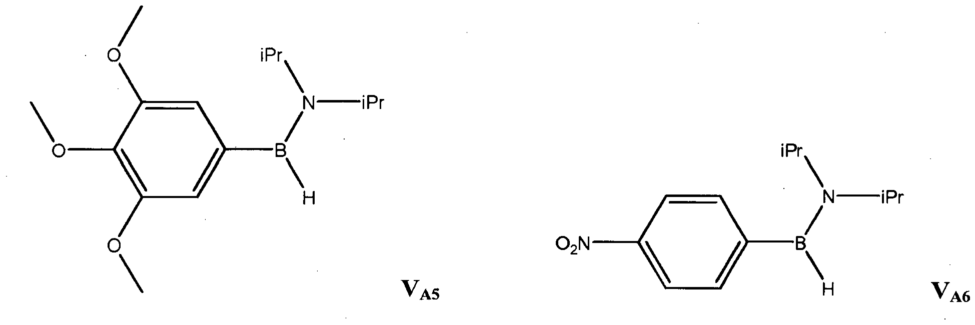

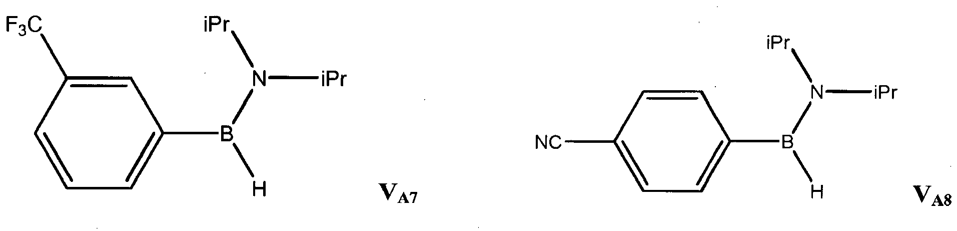

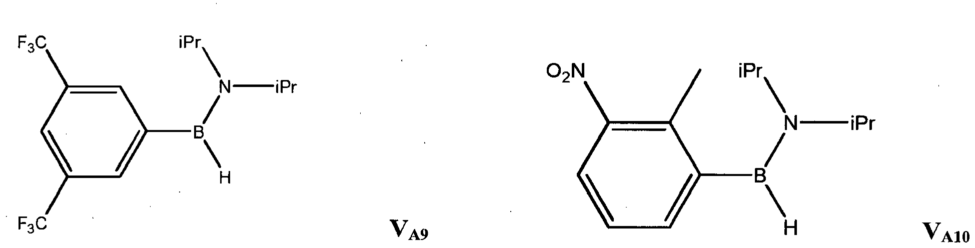

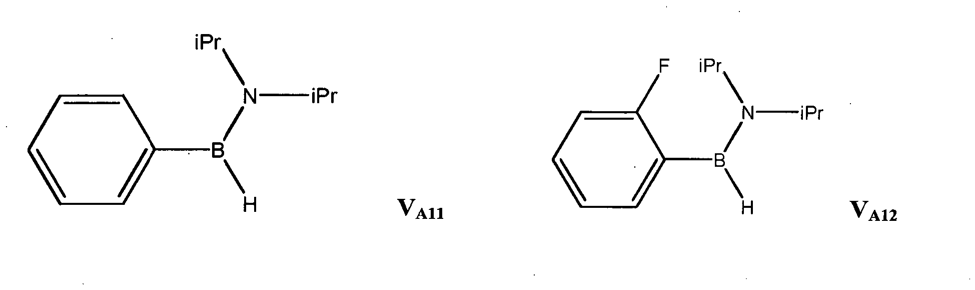

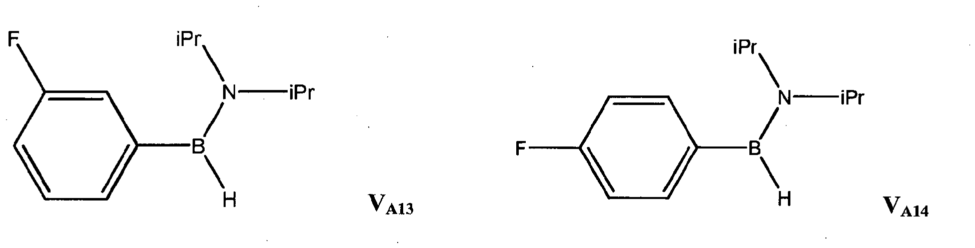

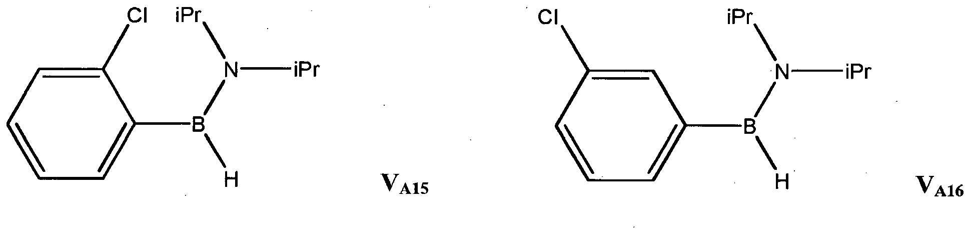

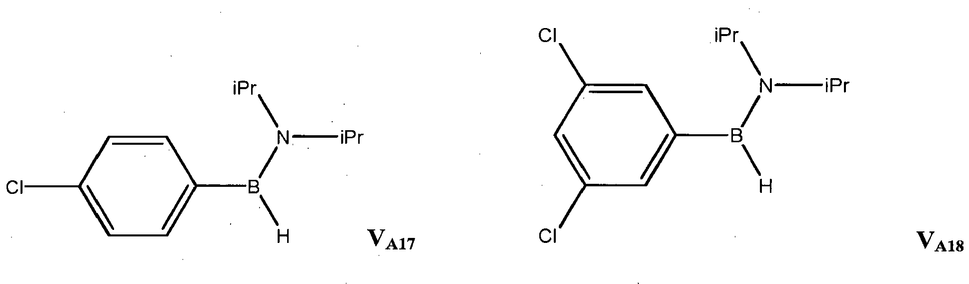

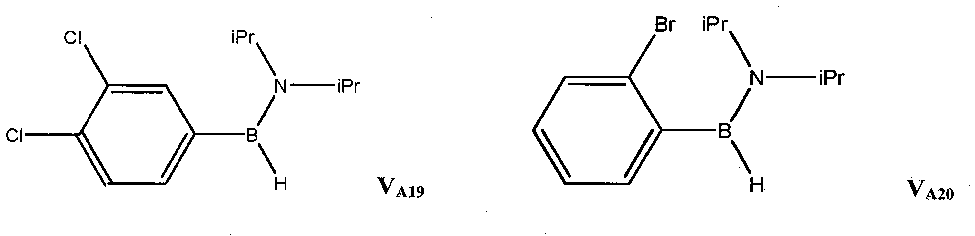

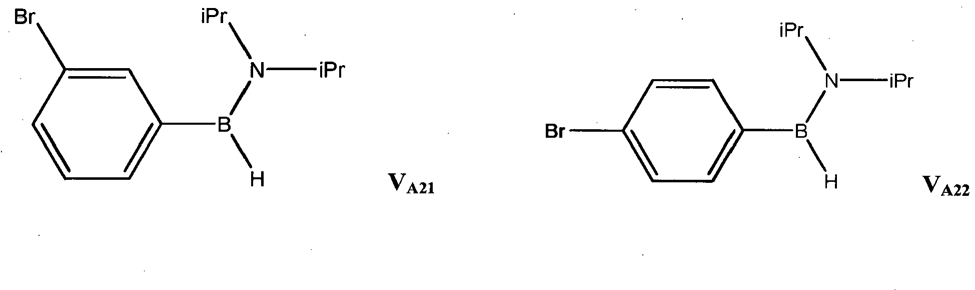

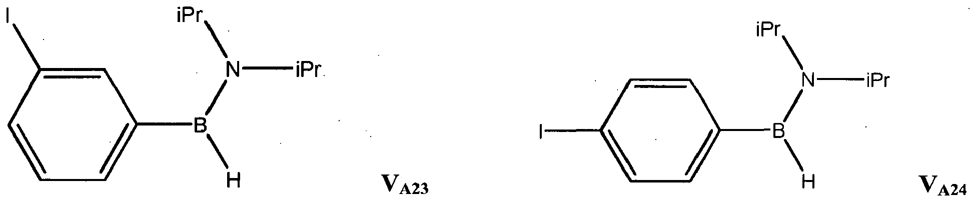

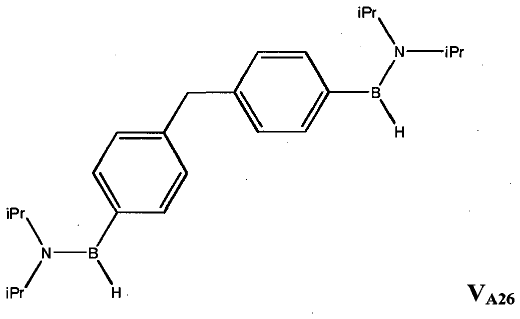

13. Process according to claim 12,
which comprises:
(1) a step of contacting an arenediazonium salt or a heteroarenediazonium salt with the diisopropylaminoborane of following formula **II_{A}** 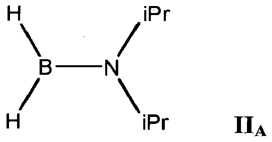 in a reaction medium containing a solvent, in the absence of base,
in the presence of 0,1 % Cp₂Fe as activating agent,
for the preparation of a diisopropylaminoarylborane compound of formula **V_{A}**, 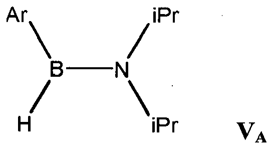 wherein compound V_{A} has the meanings mentioned in claim 12,
(2) a possible step of recovery and purification from the reaction medium, of the diisopropylaminoarylborane compound of formula V_{A} obtained at step (1),
(3) a step of treatment of the aminoarylborane of formula **V_{A}** obtained at step (1) or (2) said treatment being in particular an alcoholysis, preferably with methanol, followed by a transesterification with pinacol,
for the preparation of an arylpinacolborane having one of the following formulae: 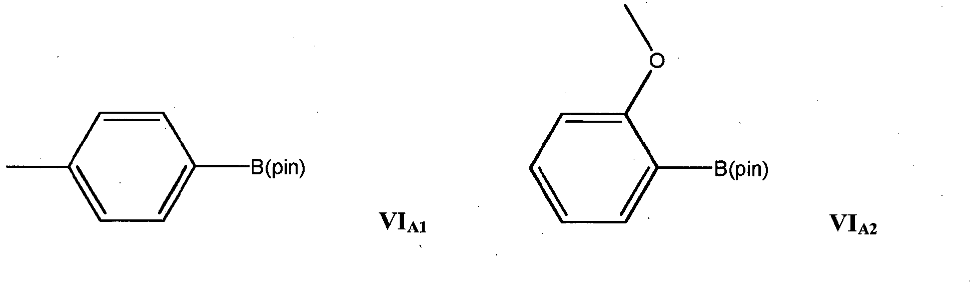 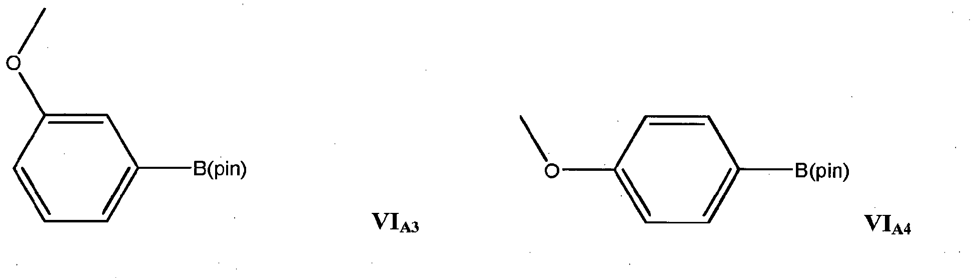 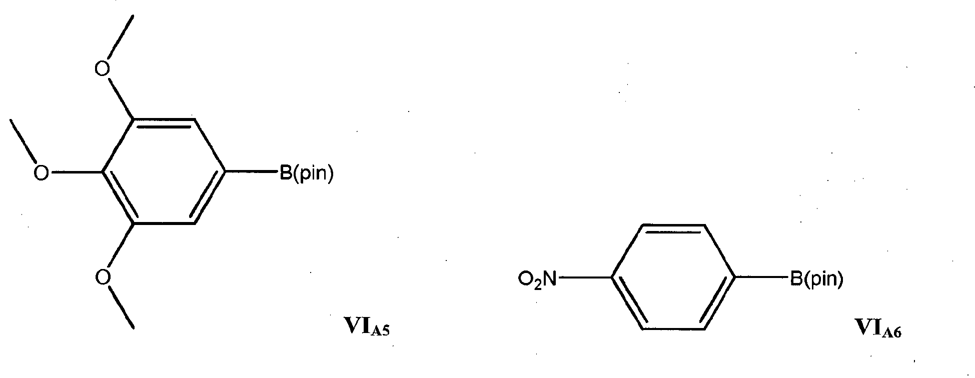 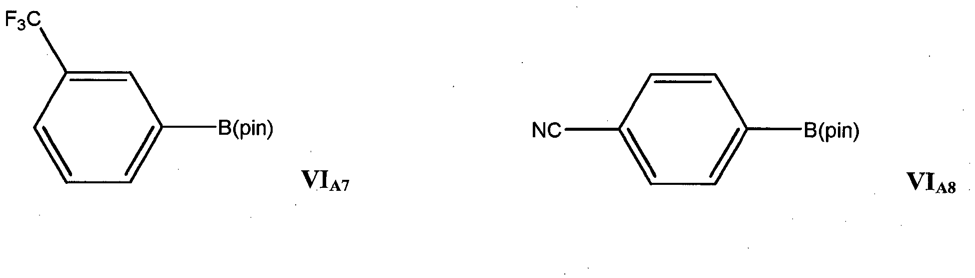 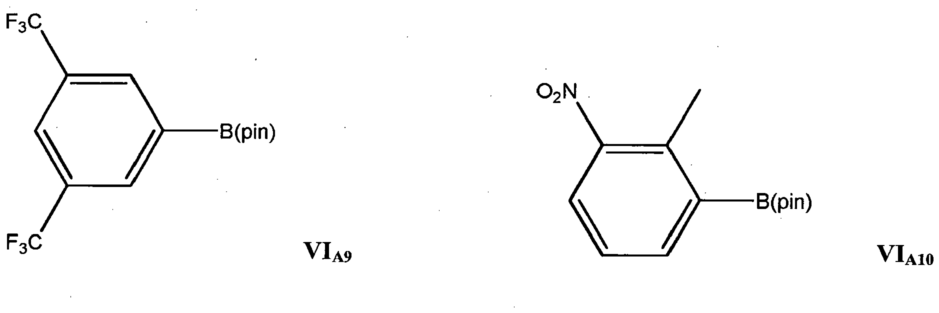 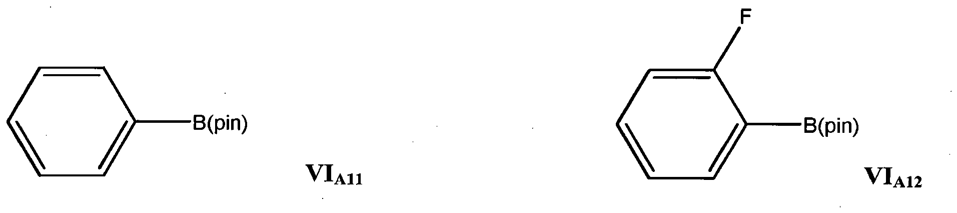 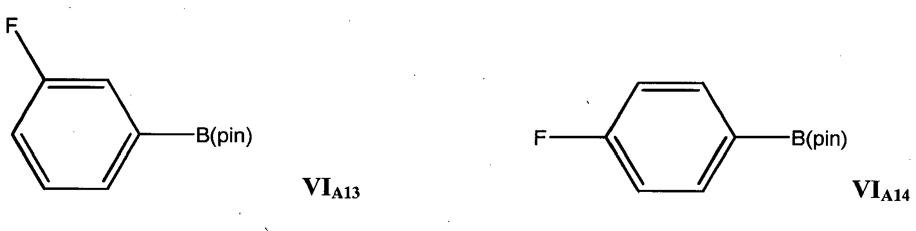 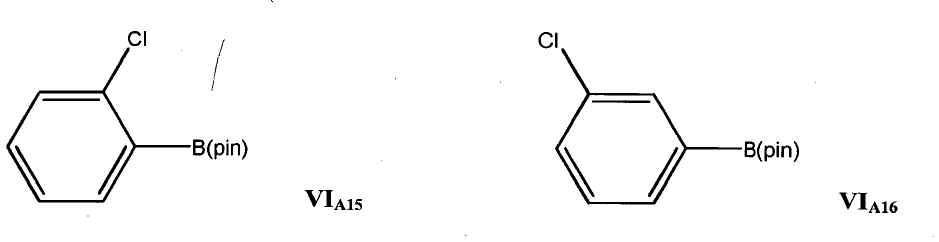 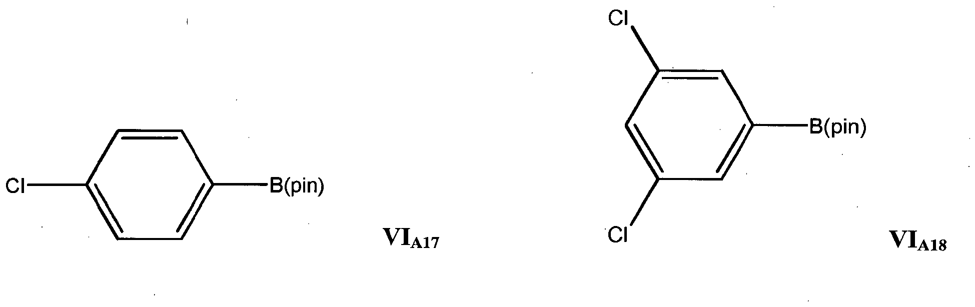 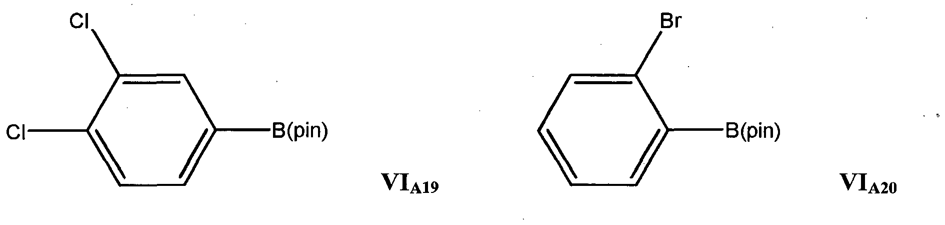 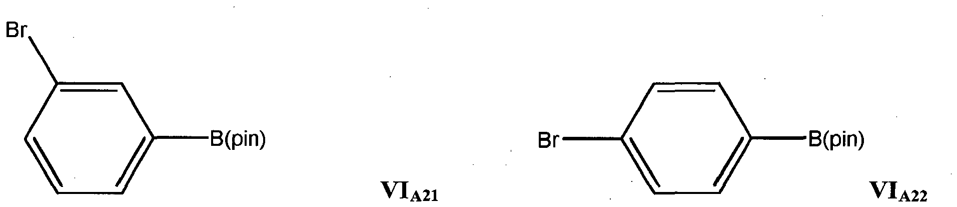 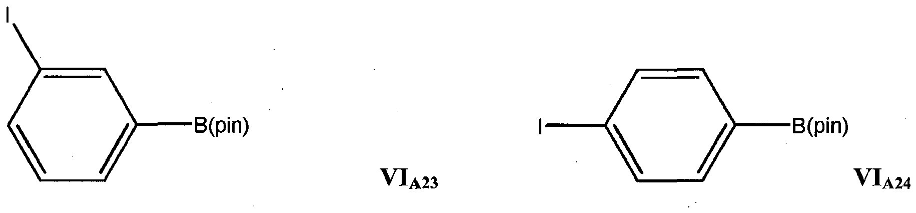 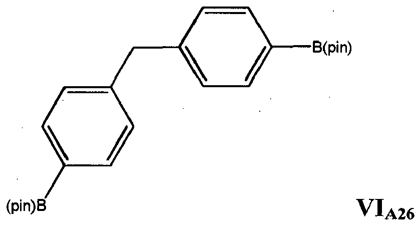 whererin -B(pin) represents:

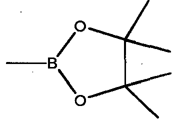

14. Process according to anyone of claims 2 to 13, comprising:
(1) a step of contacting an arenediazonium salt or a heteroarenediazonium salt with an organoboron compound in a reaction medium containing a solvent, in the absence of base, for the preparation of an aminoarylborane of formula **V** which is not isolated,
(2) a step of treatment of **V** obtained at step (1) by methanolysis, followed by a transesterification with pinacol,
for the preparation of an arylpinacolborane of formula **VIA,**
steps (1) and (2) being performed according to a one-pot synthesis,
in particular comprising:
(1) a step of contacting an arenediazonium salt or a heteroarenediazonium salt with an organoboron compound containing at least one B-H bond, in a reaction medium containing a solvent, in the absence of base,
in the presence of an activating agent, under continuous flow conditions,
in a tubular system including 2 tubings, wrapped in a circular-like form,
- one tubing being a prereactor R1, in which a solution of the arenediazonium salt or of the heteroarenediazonium salt and a solution of the activating agent, in acetonitrile, are injected to be mixed, at a temperature comprised between 10 °C to 60 °C, in particular comprised between 20 °C to 30 °C, preferably equal to about 25 °C,
- the second tubing being a reactor R2, in which the mixture containing the arenediazonium salt or the heteroarenediazonium salt and the activating agent is injected, as well as a solution of diisopropylaminoborane in acetonitrile, at the temperature of R1,
the two injections being performed under contineous flow conditions and with the same rate,
(2) a step of collection of the crude at the outlet of the reactor R2,
the crude being possibly methanolysed to give a boronic ester, which is possibly transesterified, in particular with pinacol, to give an arylpinacolborane, or hydrolysed to give an arylboronic acid.

15. Process according to anyone of claims 2 to 14, comprising a step of detection of an aniline possibly substituted by the same substituents as the ones of the arenediazonium salt.

## Patentansprüche

1. Verwendung eines Arendiazoniumsalzes oder eines Heteroarendiazoniumsalzes und einer bororganischen Verbindung, die mindestens eine Boron-WasserstoffBindung enthält, in Abwesenheit einer Base, zur Durchführung eines Verfahrens, das aus einer Arylierungsreaktion besteht, die zu einer Arylboranverbindung führt.

2. Verfahren zur Herstellung einer Arylboranverbindung, die mindestens eine B-H-Bindung enthält, durch Arylierung einer B-H-Bindung, das Folgendes umfasst:
(1) einen Schritt zum Inkontaktbringen eines Arendiazoniumsalzes oder eines Heteroarendiazoniumsalzes mit einer bororganischen Verbindung, die mindestens eine B-H-Bindung enthält, in einem Reaktionsmedium, das ein Lösemittel enthält, in Abwesenheit einer Base,
zur Herstellung einer Arylboranverbindung,
(2) einen optionalen Schritt zum Gewinnen und Reinigen der in Schritt (1) erhaltenen Arylboranverbindung.

3. Verfahren nach Anspruch 2 zur Herstellung einer Arylboranverbindung, wobei die Arylgruppe Ar 6 bis 26 Kohlenstoffatome aufweist,
wobei die Arylgruppe optional eine Heteroarylgruppe ist, die ein oder mehrere Heteroatom(e) enthält, ausgewählt aus O, N oder S, und die 4 bis 26 Kohlenstoffatome aufweist,
wobei das Arylboran insbesondere Folgendes ist:
▪ ein Aminoarylboran der folgenden Formel: 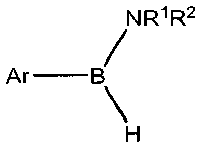 wobei die Aminogruppe eine -NP¹P²-Gruppe ist, wobei R¹ und R², gleich oder verschieden, für Folgendes stehen:
• lineare Alkyle mit 1 bis 20 Kohlenstoffatomen, verzweigte Alkyle mit 3 bis 20 Kohlenstoffatomen oder Cycloalkyle mit 3 bis 20 Kohlenstoffatomen,
• Benzyle mit 7 bis 20 Kohlenstoffatomen, wobei
- der aromatische Ring optional mit Halogen(en), Hydroxy-, Alkoxy-, Alkylgruppen mit 1 bis 10 Kohlenstoffatomen substituiert ist,
- und/oder das Kohlenstoffatom der Methylengruppe, die mit dem Stickstoffatom verknüpft ist, optional mit einer Alkylgruppe mit 1 bis 10 Kohlenstoffatomen, insbesondere mit einer Methylgruppe substituiert ist, wobei das Kohlenstoffatom optional chiral ist,
• Phenyle, die auf dem aromatischen Ring optional mit Halogen(en), Hydroxy-, Alkoxygruppen mit 1 bis 5 Kohlenstoffatomen substituiert sind,
• wobei R¹ und R² optional eine Alkylengruppe bilden, die der Formel -CR³R⁴-(CH₂)ₙ-CR⁵R⁶ entspricht, worin n im Bereich zwischen 0 und 4 liegt und die Substituenten R³ bis R⁶ unabhängig voneinander ausgewählt sind aus Wasserstoff- und Alkylgruppen mit 1 bis 20 Kohlenstoffatomen, wobei das Alkylen insbesondere 1,1,5,5-Tetramethylpentylen ist,
▪ ein Dialkoxyarylboran (Arylboronsäureester) der folgenden Formel: 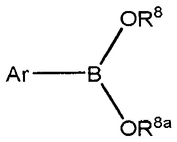 wobei die Alkoxygruppe -OR⁸ und -OR^{8a} sind, wobei R⁸ und R^{8a}, gleich oder verschieden, für Folgendes stehen:
- ein lineares Alkyl mit 1 bis 20 Kohlenstoffatomen,
- ein verzweigtes Alkyl mit 3 bis 20 Kohlenstoffatomen,
- ein Cycloalkyl mit 3 bis 20 Kohlenstoffatomen, das optional mit einem oder mehreren Halogenatom(en) substituiert ist,
- ein Phenyl, das optional mit Halogen(en), Hydroxy-, Alkoxygruppen mit 1 bis 5 Kohlenstoffatomen substituiert ist,
- ein Benzyl mit 7 bis 20 Kohlenstoffatomen, wobei
- der aromatische Ring optional mit Halogen(en), Hydroxy-, Alkoxy-, Alkylgruppen mit 1 bis 10 Kohlenstoffatomen substituiert ist,
- und/oder das Kohlenstoffatom der Methylengruppe, die mit dem Stickstoffatom verknüpft ist, optional mit einer Alkylgruppe mit 1 bis 10 Kohlenstoffatomen, insbesondere mit einer Methylgruppe substituiert ist, wobei das Kohlenstoffatom optional chiral ist,
- oder eine Acetoxygruppe mit 1 bis 20 Kohlenstoffatomen,
wobei die Alkoxygruppen -OR⁸ und -OR^{8a} insbesondere durch eine 2- bis 4-Kohlenstoffkette verbunden sind und optional einen 5- oder 6-gliedrigen Ring bilden, der das Boronatom und die beiden Sauerstoffatome einschließt, wobei der Ring daher ein 5- bis 7-gliedriger Ring ist, der aus einem Diol stammt, ausgewählt aus Ethan-1,2-diol, Propan-1,3-diol, 2,3-Dimethylbutan-2,3-diol (Pinacol), Pinandiol, 2-Methylbutan-2,3-diol, 1,2-Diphenylethan-1,2-diol, 2-Methylpentan-2,4-diol, 1,2-Dihydroxybenzol (Catechol), insbesondere Pinacol oder Pinandiol,
▪ ein Alkoxyaminoarylboran der folgenden Formel: 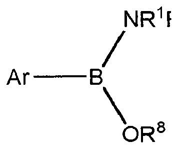 wobei
• die Aminogruppe eine -NR¹R²-Gruppe ist, R¹ und R² die oben genannten Bedeutungen aufweisen,
• die Alkoxygruppe eine -OR⁸-Gruppe ist, wobei R⁸ die oben genannten Bedeutungen aufweisen,
▪ ein Diaminoarylboran der folgenden Formel: 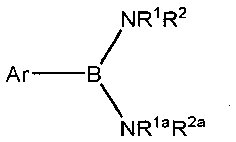 wobei die Aminogruppen -NR¹R²- und -NR^{1a}R^{2a}-Gruppen sind, R¹ und R² die oben genannten Bedeutungen aufweisen, R^{1a} gleich oder verschieden von R¹ ist und R^{2a} gleich oder verschieden von R² ist, R^{1a} und R^{2a} gleich oder verschieden sind,
wobei das Arylboran insbesondere ein Aminoarylboran oder ein cyclisches Diaminoarylboran ist.

4. Verfahren nach einem der Ansprüche 2 oder 3, das einen Schritt zum Inkontaktbringen eines Arendiazoniumsalzes oder eines Heteroarendiazoniumsalzes der Formel Ar-N₂A umfasst,
wobei
▪ A für ein Anion steht, ausgewählt aus Chlorid, Bromid, Iodid, Hexafluorphosphat, Bistrifluormethylsulfonylamid, Alkylsulfonaten, Arylsulfonaten, Alkylsulfaten, Alkylcarboxylaten, Trifluoracetat, Triflaten oder Tetrafluorborat, bevorzugt Tetrafluorboratanion,
▪ Ar ausgewählt ist aus den aromatischen Gruppen, einschließlich:
▪ einer Arylgruppe, bevorzugt einer Phenyl-, einer Naphtalenyl-, einer Anthracenyl-, einer Phenanthrenyl-, einer Biphenylgruppe, wobei die Arylgruppe optional einfach oder mehrfach substituiert ist, insbesondere zwei- oder dreifach substituiert, wobei die Substituenten, gleich oder verschieden, unabhängig voneinander ausgewählt sind,
▪ einer Heteroarylgruppe, bevorzugt Pyridin, Pyrazin, Imidazol, Pyrazol, Oxazol, Isochinolin, Thiophen, Benzothiophen, Furan, Benzofuran, Isoindol, die gegebenenfalls mindestens einen Substituenten tragen,
wobei der bzw. die Substituent(en), der bzw. die von der Aryl- oder von der Heteroarylgruppe getragen werden, ausgewählt sind aus:
□ -F, -Cl, -Br oder -I,
□ -SO₂-NH₂ oder einem Salz davon, -SO₂-R⁹,
□ -NO₂,
□ -CF₃,
□ -CN,
□ -R¹⁰, einem linearen Alkyl mit 1 -bis 20 Kohlenstoffatomen, einem verzweigten Alkyl mit 3 bis 20 Kohlenstoffatomen oder einem Cycloalkyl mit 3 bis 20 Kohlenstoffatomen,
□ einer Alkoxygruppe -OR¹¹,
□ -Osi^{t}BuPh₂ der folgenden Formel: 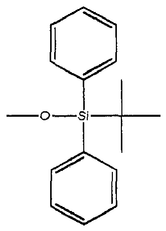
□ -Osi^{t}BuMe₂ der folgenden Formel: 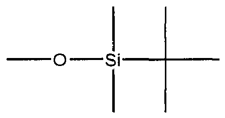
□ einer Alkylthiogruppe -SR¹²,
□ einer Carboxylgruppe -COOH oder einer Estergruppe -COOR¹³ oder einer Amidogruppe -CO-NH₂ oder einem Salz davon -CO-NR¹⁴R^{14a},
□ einer Ketogruppe -CO-R¹⁵, die optional als Acetal oder Thioacetal geschützt ist,
□ einer Aminogruppe -NR¹⁶R^{16a} oder einem Salz davon,
□ einer Aldehydgruppe, die optional als Acetal oder Thioacetal geschützt ist,
□ einer Trialkylsilylgruppe -SiR¹⁷₃,
□ einer Benzylgruppe mit 7 bis 20 Kohlenstoffatomen, wobei
- der aromatische Ring optional mit Halogen(en), Hydroxy-, Alkoxy-, Alkylgruppen mit 1 bis 10 Kohlenstoffatomen oder mit einer Amino- oder einer Diazoniumgruppe substituiert ist,
- und/oder das Kohlenstoffatom der Methylengruppe, die mit dem Stickstoffatom verknüpft ist, optional mit einer Alkylgruppe mit 1 bis 10 Kohlenstoffatomen, insbesondere mit einer Methylgruppe substituiert ist, wobei das Kohlenstoffatom optional chiral ist,
□ einer borylierten Gruppe, in der Boron ein B(III)-Boronatom (Oxidationsstufe III) ist, wobei die Gruppe insbesondere eine Dialkoxyborylgruppe der folgenden Formel ist: 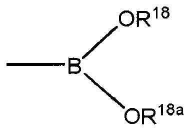 wobei
R¹⁸ und R^{18a}, gleich oder verschieden, für Folgendes stehen:
- lineare Alkyle mit 1 bis 20 Kohlenstoffatomen,
- verzweigte Alkyle mit 3 bis 20 Kohlenstoffatomen,
- ein Cycloalkyl mit 3 bis 20 Kohlenstoffatomen, das optional mit einem oder mehreren Halogenatom(en) substituiert ist,
- Phenyle, die optional mit Halogen(en), Hydroxy-, Alkoxygruppen mit 1 bis 5 Kohlenstoffatomen substituiert sind,
- Benzyle mit 7 bis 20 Kohlenstoffatomen, wobei
- der aromatische Ring optional mit Halogen(en), Hydroxy-, Alkoxy-, Alkylgruppen mit 1 bis 10 Kohlenstoffatomen substituiert ist,
- und/oder das Kohlenstoffatom der Methylengruppe, die mit dem Stickstoffatom verknüpft ist, optional mit einer Alkylgruppe mit 1 bis 10 Kohlenstoffatomen, insbesondere mit einer Methylgruppe substituiert ist, wobei das Kohlenstoffatom optional chiral ist,
- oder Acetoxygruppen mit 1 bis 20 Kohlenstoffatomen,
wobei die Alkoxygruppen -OR¹⁸ und -OR^{18a} insbesondere durch eine 2- bis 4-Kohlenstoffkette verbunden sind und optional einen Ring bilden, der das Boronatom und die beiden Sauerstoffatome einschließt, wobei der Ring daher ein 5- bis 7-gliedriger Ring ist, der aus einem Diol stammt, ausgewählt aus Ethan-1,2-diol, Propan-1,3-diol, 2,3-Dimethylbutan-2,3-diol (Pinacol), Pinandiol, 2-Methylbutan-2,3-diol, 1,2-Diphenylethan-1,2-diol, 2-Methylpentan-2,4-diol, 1,2-Dihydroxybenzol (Catechol).,
insbesondere Pinacol oder Pinandiol,
□ einer borylierten Gruppe, in der Boron ein B(IV)-Boronatom (Oxidationsstufe IV) ist, das insbesondere Folgendes ist:
▪ eine Trifluorboratgruppe,
▪ eine Trihydroxyboratgruppe,
▪ eine Trialkoxyboratgruppe -B(OR^{a})₃, wobei R^{a} eine Alkylgruppe mit 1 bis 10 Kohlenstoffatomen ist, (OR^{a})₃ optional zwei Ringe zwischen den drei Sauerstoffatomen bildet, die aus einem Triol stammen, ausgewählt aus 1,2,3-Propantriol (Glycerol) oder 1,1,1-Tris(hydroxymethyl)ethan-(2-(hydroxymethyl)-2-methyl-1,3-propandiol),
▪ einem Boratran, das aus einem Aminodiol erzeugt wird, das 3 bis 20 Kohlenstoffatome enthält, wobei das Aminodiol mit dem Boronatom Ringe mit 5 oder 6 Gliedern bildet und das Aminodiol ein N,N-Bis(hydroxyalkyl)alkylamin mit der Formel HO-R^{b}-NR^{c}-R^{b'}-OH ist,
wobei
R^{b} und R^{b'}, gleich oder verschieden, lineare Alkylengruppen mit 2 oder 3 Kohlenstoffatomen oder verzweigte Alkylengruppen mit 3 bis 5 Kohlenstoffatomen sind,
R^{c} ein Wasserstoffatom oder eine Alkylgruppe mit 1 bis 4 Kohlenstoffatomen ist,
▪ einer MIDA-Boratgruppe, die aus 2,2'-(Methylazandiyl)di-essigsäure stammt und die folgende Formel aufweist: 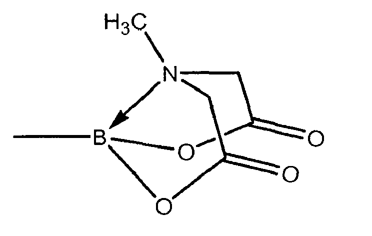
□ einer Kombination aus den oben genannten,
wobei
• R¹⁰ und R¹⁷ für lineare Alkyle mit 1 bis 20 Kohlenstoffatomen, verzweigte Alkyle mit 3 bis 20 Kohlenstoffatomen oder Cycloalkyle mit 3 bis 20 Kohlenstoffatomen stehen,
• R⁹, R¹¹, R¹², R¹³, R¹⁴, R^{14a}, R¹⁵, R¹⁶ und R^{16a} für lineare Alkyle mit 1 bis 20 Kohlenstoffatomen, verzweigte Alkyle mit 3 bis 20 Kohlenstoffatomen oder Cycloalkyle mit 3 bis 20 Kohlenstoffatomen, optional substituiert mit einem oder mehreren Halogenatom(en), oder Phenyle optional substituiert mit Halogen(en), Hydroxy-, Alkoxygruppen mit 1 bis 5 Kohlenstoffatomen, oder Benzyle mit 7 bis 20 Kohlenstoffatomen stehen, wobei der aromatische Ring optional mit Halogen(en), Hydroxy-, Alkoxy-, Alkylgruppen mit 1 bis 10 Kohlenstoffatomen substituiert ist, und/oder das Kohlenstoffatom der Methylengruppe, die mit dem Stickstoffatom verknüpft ist, optional mit einer Alkylgruppe mit 1 bis 10 Kohlenstoffatomen, insbesondere mit einer Methylgruppe substituiert ist, wobei das Kohlenstoffatom optional chiral ist, mit einer zu arylierenden bororganischen Verbindung, die mindestens eine Boron-Wasserstoff-Bindung enthält und die folgende allgemeine Formel I aufweist: 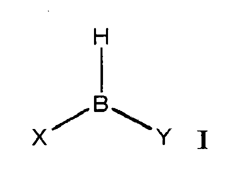 wobei
▪ X für Folgendes steht:
□ -H,
□ -NR¹R²,
□ -R⁷,
□ -OR⁸,
wobei
• R¹ und R², gleich oder verschieden, für Folgendes stehen:
- lineare Alkyle mit 1 bis 20 Kohlenstoffatomen, verzweigte Alkyle mit 3 bis 20 Kohlenstoffatomen oder Cycloalkyle mit 3 bis 20 Kohlenstoffatomen,
- Benzyle mit 7 bis 20 Kohlenstoffatomen, wobei
- der aromatische Ring optional mit Halogen(en), Hydroxy-, Alkoxy-, Alkylgruppen mit 1 bis 10 Kohlenstoffatomen substituiert ist,
- und/oder das Kohlenstoffatom der Methylengruppe, die mit dem Stickstoffatom verknüpft ist, optional mit einer Alkylgruppe mit 1 bis 10 Kohlenstoffatomen, insbesondere mit einer Methylgruppe substituiert ist, wobei das Kohlenstoffatom optional chiral ist,
- Phenyle, die auf dem aromatischen Ring optional mit Halogen(en), Hydroxy-, Alkoxygruppen mit 1 bis 5 Kohlenstoffatomen substituiert sind,
wobei R¹ und R² optional eine Alkylengruppe bilden, die der Formel -CR³R⁴- (CH2)ₙ- CR⁵R⁶ entspricht, worin n im Bereich zwischen 0 und 4 liegt und die Substituenten R³ bis R⁶ unabhängig voneinander ausgewählt sind aus Wasserstoff- und Alkylgruppen mit 1 bis 20 Kohlenstoffatomen, wobei das Alkylen insbesondere 1,1,5,5-Tetramethylpentylen ist,
• R⁷ für ein lineares Alkyl mit 1 bis 20 Kohlenstoffatomen, ein verzweigtes Alkyl mit 3 bis 20 Kohlenstoffatomen oder ein Cycloalkyl mit 3 bis 20 Kohlenstoffatomen steht,
• R⁸ für Folgendes steht:
- ein lineares Alkyl mit 1 bis 20 Kohlenstoffatomen,
- ein verzweigtes Alkyl mit 3 bis 20 Kohlenstoffatomen,
- ein Cycloalkyl mit 3 bis 20 Kohlenstoffatomen, das optional mit einem oder mehreren Halogenatom(en) substituiert ist,
- ein Phenyl, das optional mit Halogen(en), Hydroxy-, Alkoxygruppen mit 1 bis 5 Kohlenstoffatomen substituiert ist,
- ein Benzyl mit 7 bis 20 Kohlenstoffatomen, wobei
- der aromatische Ring optional mit Halogen(en), Hydroxy-, Alkoxy-, Alkylgruppen mit 1 bis 10 Kohlenstoffatomen substituiert ist,
- und/oder das Kohlenstoffatom der Methylengruppe, die mit dem Stickstoffatom verknüpft ist, optional mit einer Alkylgruppe mit 1 bis 10 Kohlenstoffatomen, insbesondere mit einer Methylgruppe substituiert ist, wobei das Kohlenstoffatom optional chiral ist,
- oder eine Acetoxygruppe mit 1 bis 20 Kohlenstoffatomen,
▪ Y für Folgendes steht:
□ -H,
□ -NR^{1a}R^{2a},
□ -R^{7a},
□ -OR^{8a},
wobei
• R^{1a} und R^{2a}, gleich oder verschieden, für Folgendes stehen:
- lineare Alkyle mit 1 bis 20 Kohlenstoffatomen, verzweigte Alkyle mit 3 bis 20 Kohlenstoffatomen oder Cycloalkyle mit 3 bis 20 Kohlenstoffatomen,
- Benzyle mit 7 bis 20 Kohlenstoffatomen, wobei
- der aromatische Ring optional mit Halogen(en), Hydroxy-, Alkoxy-, Alkylgruppen mit 1 bis 10 Kohlenstoffatomen substituiert ist,
- und/oder das Kohlenstoffatom der Methylengruppe, die mit dem Stickstoffatom verknüpft ist, optional mit einer Alkylgruppe mit 1 bis 10 Kohlenstoffatomen, insbesondere mit einer Methylgruppe substituiert ist, wobei das Kohlenstoffatom optional chiral ist,
- Phenyle, die auf dem aromatischen Ring optional mit Halogen(en), Hydroxy-, Alkoxygruppen mit 1 bis 5 Kohlenstoffatomen substituiert sind,
wobei R^{1a} und R^{2a} optional eine Alkylengruppe bilden, die der Formel -CR^{3a}R^{4a}- (CH₂)ₙ-CR^{5a}R^{6a} entspricht, worin n im Bereich zwischen 0 und 4 liegt und die Substituenten R^{3a} bis R^{6a} unabhängig voneinander ausgewählt sind aus Wasserstoff- und Alkylgruppen mit 1 bis 20 Kohlenstoffatomen, wobei das Alkylen insbesondere 1,1,5,5-Tetramethylpentylen ist,
• R^{7a} für ein lineares Alkyl mit 1 bis 20 Kohlenstoffatomen, ein verzweigtes Alkyl mit 3 bis 20 Kohlenstoffatomen oder ein Cycloalkyl mit 3 bis 20 Kohlenstoffatomen steht,
• R^{8a} für Folgendes steht:
- ein lineares Alkyl mit 1 bis 20 Kohlenstoffatomen,
- ein verzweigtes Alkyl mit 3 bis 20 Kohlenstoffatomen,
- ein Cycloalkyl mit 3 bis 20 Kohlenstoffatomen, das optional mit einem oder mehreren Halogenatom(en) substituiert ist,
- ein Phenyl, das optional mit Halogen(en), Hydroxy-, Alkoxygruppen mit 1 bis 5 Kohlenstoffatomen substituiert ist,
- ein Benzyl mit 7 bis 20 Kohlenstoffatomen, wobei
- der aromatische Ring optional mit Halogen(en), Hydroxy-, Alkoxy-, Alkylgruppen mit 1 bis 10 Kohlenstoffatomen substituiert ist,
- und/oder das Kohlenstoffatom der Methylengruppe, die mit dem Stickstoffatom verknüpft ist, optional mit einer Alkylgruppe mit 1 bis 10 Kohlenstoffatomen, insbesondere mit einer Methylgruppe substituiert ist, wobei das Kohlenstoffatom optional chiral ist,
- oder eine Acetoxygruppe mit 1 bis 20 Kohlenstoffatomen,
wobei X und Y unter der Voraussetzung unabhängig ausgewählt sind, dass gilt: wenn X=H, dann Y≠H,
und wenn X = -OR⁸ und Y = -OR^{8a}, die Alkoxygruppen -OR⁸ und -OR^{8a} dann insbesondere durch eine 2- bis 4-Kohlenstoffkette verbunden sind und optional einen Ring bilden, der das Boronatom und die beiden Sauerstoffatome einschließt, wobei der Ring daher ein 5- bis 7-gliedriger Ring ist, der aus einem Diol stammt, ausgewählt aus Ethan-1,2-diol, Propan-1,3-diol, 2,3-Dimethylbutan-2,3-diol (Pinacol), Pinandiol, 2-Methylbutan-2,3-diol, 1,2-Diphenylethan-1,2-diol, 2-Methylpentan-2,4-diol, 1,2-Dihydroxybenzol (Catechol), insbesondere Pinacol oder Pinandiol,
zur Herstellung eines Arylborans oder eines Heteroarylborans der folgenden Formel IV: 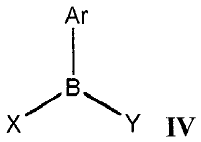
wobei
X, Y und Ar die oben genannten Bedeutungen aufweisen.

5. Verfahren nach einem der Ansprüche 2 bis 4, wobei die Arylierungsreaktion durch Aktivierungsmittel aktiviert wird oder nicht, wobei die Aktivierungsmittel ausgewählt sind aus:
• einem Aktivierungsmittel, bevorzugt einem Komplex aus einem Übergangsmetall oder einem Salz eines Übergangsmetalls oder einem Salz eines Übergangsmetallkomplexes, der ein Übergangsmetall enthält, das insbesondere zur Gruppe IV, VIII, IX, X oder XI gehört, das insbesondere ein Metallocen oder ein Salz davon ist, ausgewählt aus:
• einem Titanocen, insbesondere (tBuCp)₂TiCl₂, CpTiCl₃, Cp₂TiCl₂, Cp*₂TiCl₂, Cp*TiCl₃, Cp₂Ti(CO)₂, TiCp₂, bevorzugt Cp₂TiCl₂, wobei:
- tBu eine tert-Butylgruppe ist,
- Cp eine Cyclopentadienylgruppe ist, die gegebenenfalls mit einem Halogen, einer Alkylgruppe mit 1 bis 10 Kohlenstoffatomen, einer aromatischen oder heteroaromatischen Gruppe mit 5 bis 12 Kohlenstoffatomen, einer Vinylgruppe mit 2 bis 10 Kohlenstoffatomen, einer Allylgruppe mit 3 bis 10 Kohlenstoffatomen, einem Alkylammoniumsalz mit 1 bis 10 Kohlenstoffatomen substituiert ist,
- Cp* eine 1,2,3,4,5-Pentamethylcyclopentadienylgruppe ist,
• einem Zirconocen, insbesondere (Indenyl)₂ZrCl₂, Cp₂ZrHCl (Schwartz-Reagens), (tBuCp)₂ZrCl₂, bevorzugt Cp₂ZrHCl,
wobei Indenyl eine Benzocyclopentadienylgruppe ist,
• einem Ferrocen, insbesondere Cp₂Fe, BrCpFeCp, Cp*₂Fe, AcCpFeCp, n-BuCpFeCp, t-BuCpFeCp, VinylCpFeCp, bevorzugt Cp₂Fe,
• einem Ruthenocen, insbesondere Cp₂Ru, Cp*₂Ru, oder einem Rutheniumkomplex, insbesondere Ru(acac)₃, wobei acac für Acetylacetonat steht,
• einem Cobaltocen, insbesondere Cp₂Co, [Cp₂Co]PF₆ (Cobaltoceniumhexafluorphosphat), Cp*₂Co,
• einem Nickelocen, insbesondere Cp₂Ni, Cp*₂Ni,
• einem Kupferkomplex, insbesondere [Cu(OH)tmeda]₂, Cu(salen),
wobei
- tmeda für Tetramethylethylendiamin steht,
- salen für 2,2'-Ethylenbis(nitrilomethyliden)diphenol steht,
• einem Palladiumkomplex, insbesondere Pd(acac)₂ (Palladiumdiacetylacetonat), (CH₂=CH-CH₂PdCl)₂ (Allylpalladiumchlorid), einem Palladiumsalz, insbesondere Pd(OAc)₂, Pd(CN)₂,
wobei das Aktivierungsmittel bevorzugt ausgewählt ist aus Metallocenen, insbesondere Ferrocenen, Titanocenen oder Zirconocenen, bevorzugt Cp₂Fe, Cp₂TiCl₂ oder Cp₂ZrHCl,
• oder Radikalbildnern, bevorzugt mittels Lichtstrahlung, bevorzugt Ultraviolettlichtbestrahlung (UV), mit einer Wellenlänge im Bereich von 180 nm bis 400 nm, bevorzugt im Bereich von 200 nm bis 400 nm, insbesondere gleich etwa 254 nm, oder einem Radikalstarter, ausgewählt aus Azobisisobutyronitril (AIBN), 1,1-Azobiscyclohexancarbonitril (ABCN), Dilauroylperoxide (DLP).

6. Verfahren nach einem der Ansprüche 2 bis 5, wobei das aprotische und polare Lösemittel insbesondere ausgewählt ist aus Acetonitril, Propionitril, Butyronitril, Ethylacetat, Isopropylacetat, Dioxan, Dimethylacetamid (DMAc), Aceton, N-Methyl-2-pyrrolidon (NMP), 2-Methoxy-2-methylpropan (MTBE) oder Tetrahydrofuran (THF) oder einem Gemisch davon, insbesondere Acetonitril.

7. Verfahren nach einem der Ansprüche 2 bis 6 zur Herstellung einer Aminoarylboranverbindung, das Folgendes umfasst:
(1) einen Schritt zum Inkontaktbringen eines Arendiazoniumsalzes oder eines Heteroarendiazoniumsalzes mit einem Aminoboran der folgenden Formel II: 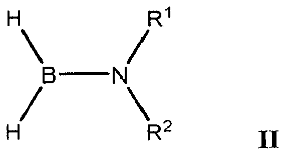 wobei R¹ und R², gleich oder verschieden, die in Anspruch 4 genannten Bedeutungen aufweisen, in einem Reaktionsmedium, das ein Lösemittel enthält, in Abwesenheit einer Base,
zur Herstellung einer Aminoarylboranverbindung der Formel V: 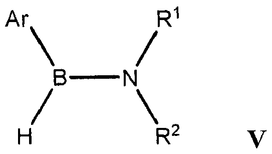 wobei Ar, R¹ und R² die in Anspruch 4 genannten Bedeutungen aufweisen,
R¹ und R² bevorzugt Isopropylgruppen sind,
(2) einen optionalen Schritt zum Gewinnen und Reinigen der Aminoarylboranverbindung der Formel V aus dem Reaktionsmedium,
▪ insbesondere zur Herstellung einer Diisopropylaminoarylboranverbindung, der Folgendes umfasst:
(1) einen Schritt zum Inkontaktbringen eines Arendiazoniumsalzes oder eines Heteroarendiazoniumsalzes mit dem Diisopropylaminoboran der folgenden Formel II_{A} : 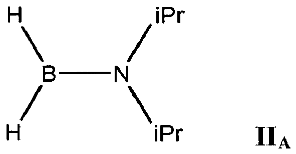 in einem Reaktionsmedium, das ein Lösemittel enthält, in Abwesenheit einer Base,
zur Herstellung einer Diisopropylaminoarylboranverbindung der Formel V_{A}: 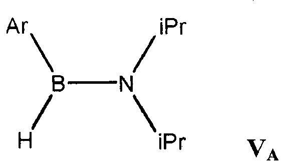 wobei Ar die in Anspruch 4 genannten Bedeutungen aufweist,
(2) einen optionalen Schritt zum Gewinnen und Reinigen der Diisopropylaminoarylboranverbindung der Formel V_{A} aus dem Reaktionsmedium,
▪ insbesondere zur Herstellung einer Diisopropylaminoarylboranverbindung, der Folgendes umfasst:
(1) einen Schritt zum Inkontaktbringen eines Arendiazoniumsalzes oder eines Heteroarendiazoniumsalzes mit dem Diisopropylaminoboran der folgenden Formel II_{A}: 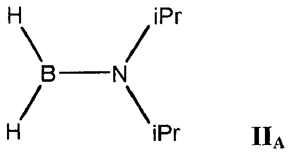 in einem Reaktionsmedium, das ein Lösemittel enthält, in Abwesenheit einer Base, in Gegenwart eines Aktivierungsmittels, bevorzugt ausgewählt aus Metallocenen, insbesondere Ferrocenen, Titanocenen oder Zirconocenen, bevorzugt Cp₂Fe, Cp₂TiCl₂ oder Cp₂ZrHCl,
zur Herstellung einer Diisopropylaminoarylboranverbindung der Formel V_{A}: 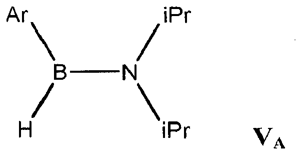 wobei Ar die in Anspruch 4 genannten Bedeutungen aufweist,
(2) einen optionalen Schritt zum Gewinnen und Reinigen der Diisopropylaminoarylboranverbindung der Formel V_{A} aus dem Reaktionsmedium.

8. Verfahren nach einem der Ansprüche 2 bis 6 zur Herstellung einer Dialkoxyarylboranverbindung, das Folgendes umfasst:
(1) einen Schritt zum Inkontaktbringen eines Arendiazoniumsalzes oder eines Heteroarendiazoniumsalzes mit dem Dialkoxyboran der folgenden Formel III: 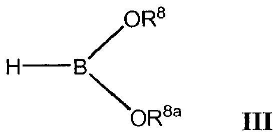 wobei R⁸ und R^{8a}, gleich oder verschieden, die gleichen Bedeutungen aufweisen, wie in Anspruch 4 genannt,
in einem Reaktionsmedium, das ein Lösemittel enthält, in Abwesenheit einer Base,
zur Herstellung einer Dialkoxyarylboranverbindung der Formel VI: 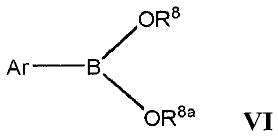 wobei R⁸, R^{8a} und Ar die in Anspruch 4 genannten Bedeutungen aufweisen,
(2) einen optionalen Schritt zum Gewinnen und Reinigen der Dialkoxyarylboranverbindung der Formel VI aus dem Reaktionsmedium,
▪ insbesondere zur Herstellung einer Arylpinacolboranverbindung, der Folgendes umfasst:
(1) einen Schritt zum Inkontaktbringen eines Arendiazoniumsalzes oder eines Heteroarendiazoniumsalzes mit dem Pinalcolboran der folgenden Formel III_{A}: 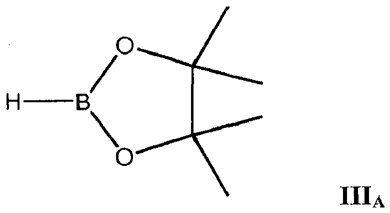 in einem Reaktionsmedium, das ein Lösemittel enthält, in Abwesenheit einer Base,
zur Herstellung einer Arylpinacolboranverbindung der Formel VI_{A}: 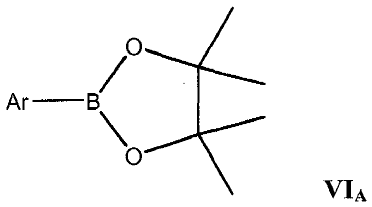 wobei Ar die in Anspruch 4 genannten Bedeutungen aufweist,
(2) einen optionalen Schritt zum Gewinnen und Reinigen der Arylpinacolboranverbindung der Formel VI_{A} aus dem Reaktionsmedium,
▪ insbesondere zur Herstellung einer Arylpinacolboranverbindung, der Folgendes umfasst:
(1) einen Schritt zum Inkontaktbringen eines Arendiazoniumsalzes oder eines Heteroarendiazoniumsalzes mit dem Pinalcolboran der folgenden Formel III_{A}: 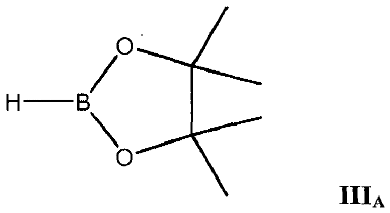 in einem Reaktionsmedium, das ein Lösemittel enthält, in Abwesenheit einer Base,
in Gegenwart eines Aktivierungsmittels, bevorzugt ausgewählt aus Metallocenen, insbesondere Ferrocenen, Titanocenen oder Zirconocenen,
bevorzugt Cp₂Fe, Cp₂TiCl₂ oder Cp₂ZrHCl, zur Herstellung einer Arylpinacolboranverbindung der Formel VI_{A}: 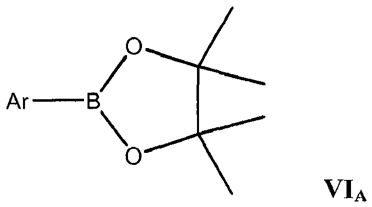 wobei Ar die in Anspruch 4 genannten Bedeutungen aufweist,
(2) einen optionalen Schritt zum Gewinnen und Reinigen der Arylpinacolboranverbindung der Formel VI_{A} aus dem Reaktionsmedium.

9. Verfahren nach Anspruch 7, wobei der Schritt zum Inkontaktbringen eines Arendiazoniumsalzes oder eines Heteroarendiazoniumsalzes mit einem Aminoboran in einem aprotischen, polaren Lösemittel, bevorzugt Acetonitril, durchgeführt wird,
bei einer Temperatur im Bereich von 10 °C bis 60 °C, insbesondere im Bereich von 18 °C bis 30 °C, bevorzugt gleich etwa 20 °C, im Verlauf eines Zeitraums, der zwischen 1 Std. und 3 Std. liegt, bevorzugt 2,5 Std., zur Herstellung eines Aminoarylborans,
oder wobei der Schritt zum Mischen eines Arendiazoniumsalzes oder eines Heteroarenazoniumsalzes mit einem Aminoboran in einem aprotischen, polaren Lösemittel, bevorzugt Acetonitril,
in Gegenwart eines Aktivierungsmittels, das ein Übergangsmetall enthält, wobei das Aktivierungsmittel bevorzugt ausgewählt ist aus Metallocenen, insbesondere Ferrocenen, Titanocenen oder Zirconocenen, bevorzugt Cp₂Fe, Cp₂TiCl₂ oder Cp₂ZrHCl,
mit einem Molprozentsatz, bezogen auf das Metall, im Bereich von 0,001 % bis 5 %, insbesondere im Bereich von 0,001 % bis 1 %, bevorzugt gleich etwa 0,001 %, oder etwa 0,01 % oder etwa 0,1 % oder etwa 1 %,
bei einer Temperatur im Bereich zwischen 10 °C bis 60 °C, insbesondere im Bereich zwischen 18 °C bis 30 °C, bevorzugt gleich etwa 20 °C, im Verlauf eines Zeitraums, der zwischen 1 Std. und 3 Std. liegt, bevorzugt 2,5 Std.,
zur Herstellung einer Aminoarylboranverbindung durchgeführt wird.

10. Verfahren nach Anspruch 8, wobei der Schritt zum Inkontaktbringen eines Arendiazoniumsalzes oder eines Heteroarendiazoniumsalzes mit einem Dialkoxyboran in einem aprotischen, polaren Lösemittel, bevorzugt Acetonitril,
bei einer Temperatur im Bereich zwischen 20 °C bis 50 °C, insbesondere im Bereich zwischen 20 °C bis 30 °C, bevorzugt gleich etwa 25 °C, im Verlauf eines Zeitraums, der zwischen 2 Std. und 4 Std. liegt, bevorzugt 2,5 Std.,
zur Herstellung eines Dialkoxyarylborans durchgeführt wird,
oder wobei der Schritt zum Mischen eines Arendiazoniumsalzes oder eines Heteroarenazoniumsalzes mit einem Alkoxyboran in einem aprotischen, polaren Lösemittel, bevorzugt Acetonitril,
in Gegenwart eines Aktivierungsmittels, das ein Übergangsmetall enthält, wobei das Aktivierungsmittel ausgewählt ist aus Metallocenen, insbesondere Ferrocenen, Titanocenen oder Zirconocenen, bevorzugt Cp₂Fe, Cp₂TiCl₂ oder Cp₂ZrHCl,
mit einem Molprozentsatz, bezogen auf das Metall, im Bereich von 0,001 % bis 5 %, insbesondere im Bereich von 0,001 % bis 1 %, bevorzugt gleich etwa 0,001 %, oder etwa 0,01 % oder etwa 0,1 % oder etwa 1 %,
bei einer Temperatur im Bereich zwischen 20 °C bis 50 °C, insbesondere im Bereich zwischen 20 °C bis 30 °C, bevorzugt gleich etwa 25 °C, im Verlauf eines Zeitraums, der zwischen 2 Std. und 4 Std. liegt, bevorzugt 2,5 Std.,
zur Herstellung einer Dialkoxyarylboranverbindung durchgeführt wird.

11. Verfahren nach einem der Ansprüche 2 bis 7 oder 9, das nach Schritt (1) oder (2) einen Schritt (3) zur Behandlung des in Schritt (1) oder (2) erhaltenen Aminoarylborans in ein Arylboran umfasst, das sich von dem in Schritt (1) oder (2) erhaltenen unterscheidet,
wobei es sich bei der Behandlung insbesondere um eine Alkoholyse handelt, bevorzugt mit einem ersten Alkohol, insbesondere Methanol, wobei auf die Alkoholyse optional Folgendes folgt:
• eine Umesterung mit einem zweiten Alkohol, bevorzugt einem Diol, ausgewählt aus Ethan-1,2-diol, Propan-1,3-diol, 2,3-Dimethylbutan-2,3-dicl (Pinacol), Pinandiol, 2-Methylbutan-2,3-diol, 1,2-Diphenylethan-1,2-diol, 2-Methylpentan-2,4-diol, 1,2-Dihydroxybenzol (Catechol), insbesondere Pinacol oder Pinandiol, zur Herstellung eines Arylboronsäureesters der folgenden Formel VI: 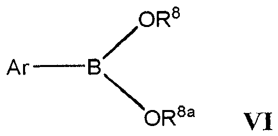 wobei R⁸, R^{8a} und Ar die in Anspruch 4 genannten Bedeutungen aufweisen,
insbesondere zur Herstellung eines cyclischen Aryldialkoxyborans,
bevorzugt zur Herstellung eines Arylpinacolborans der folgenden Formel VI_{A}: 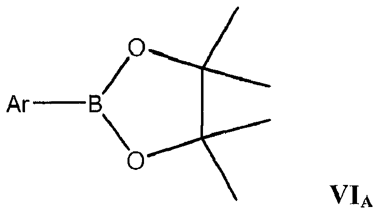 wobei Ar die oben genannten Bedeutungen aufweist,
• oder durch eine Hydrolyse, um eine Arylboronsäure der Formel VII zu erhalten: 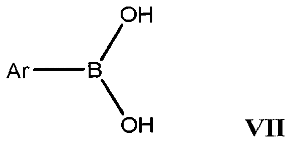 wobei Ar die oben genannten Bedeutungen aufweist.

12. Verfahren nach einem der Ansprüche 2 bis 7 oder 9,
zur Herstellung der Diisopropylaminoarylborane der nachfolgend dargestellten Formeln, wobei die Diisopropylaminoborane isoliert und gereinigt sind oder nicht:

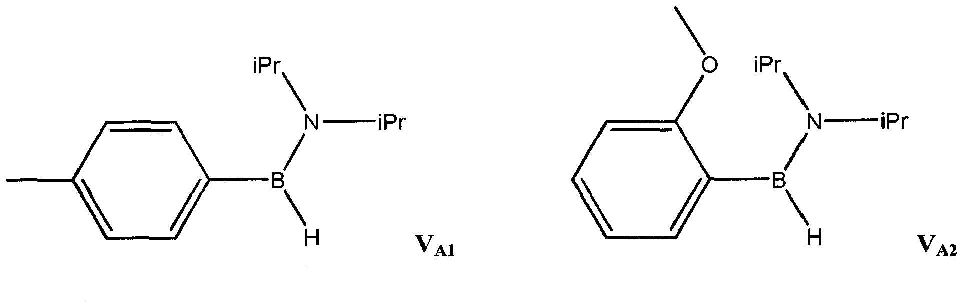

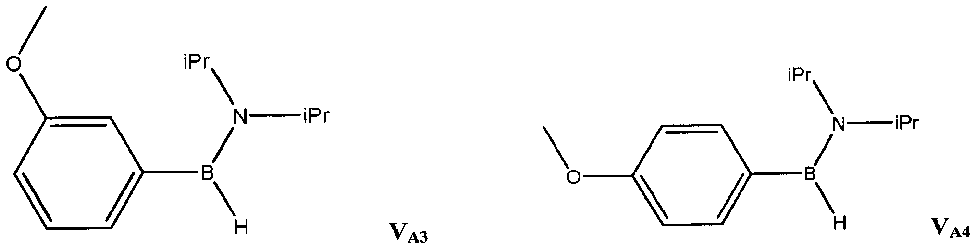

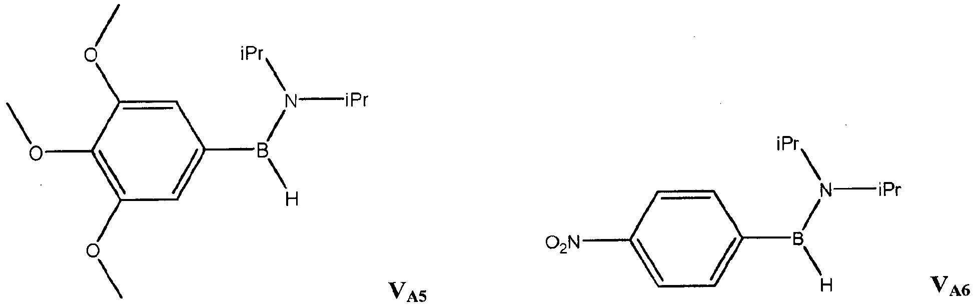

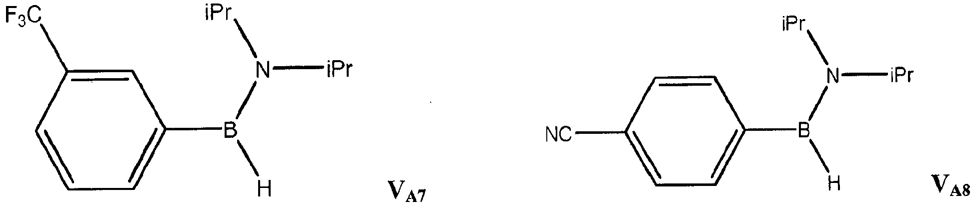

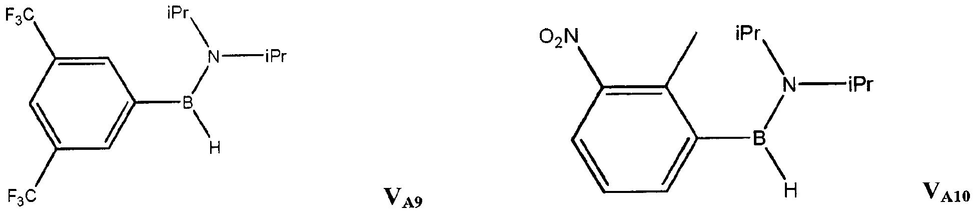

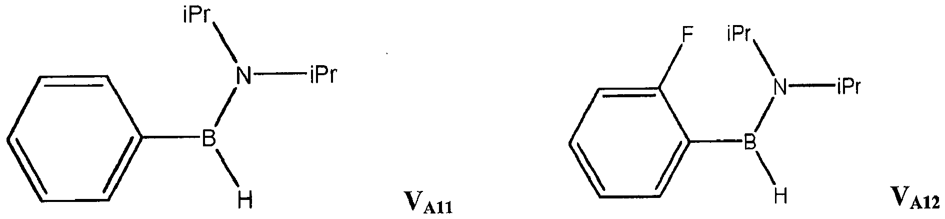

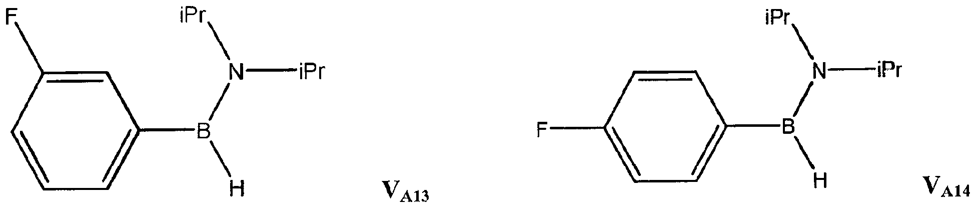

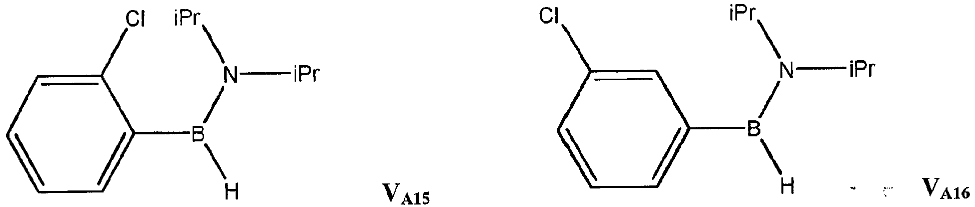

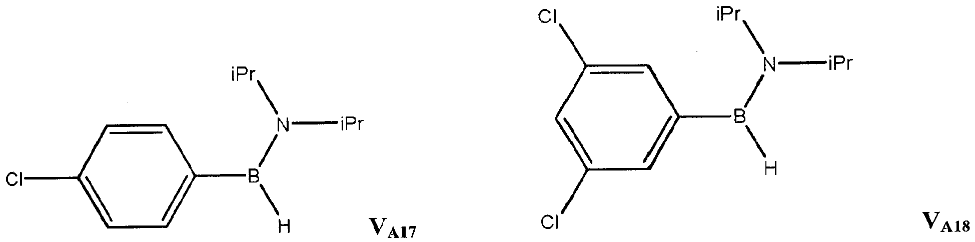

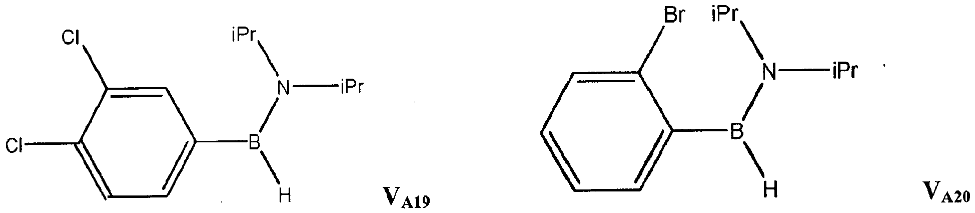

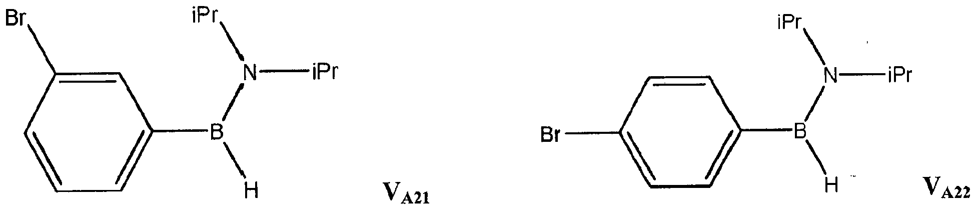

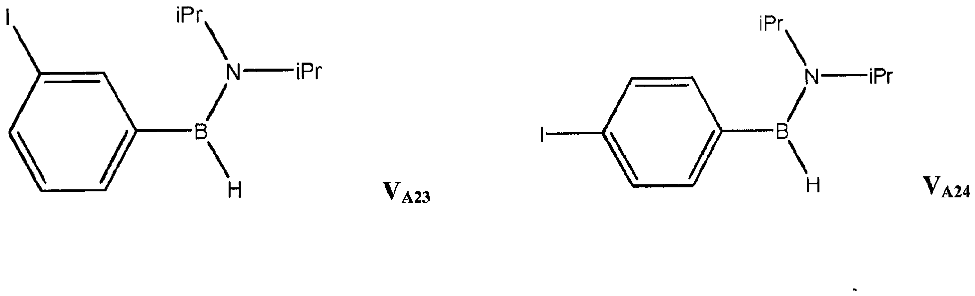

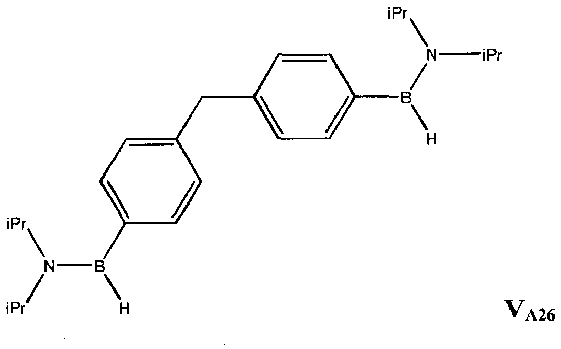

13. Verfahren nach Anspruch 12,
das Folgendes umfasst:
(1) einen Schritt zum Inkontaktbringen eines Arendiazoniumsalzes oder eines Heteroarendiazoniumsalzes mit dem Diisopropylaminoboran der folgenden Formel II_{A}: 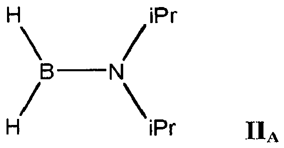 in einem Reaktionsmedium, das ein Lösemittel enthält, in Abwesenheit einer Base,
in Gegenwart von 0,1 % Cp₂Fe als Aktivierungsmittel,
zur Herstellung einer Diisopropylaminoarylboranverbindung der Formel V_{A}: 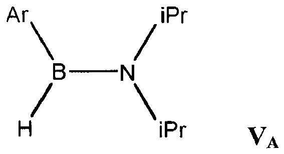 wobei Verbindung V_{A} die in Anspruch 12 genannten Bedeutungen aufweist,
(2) einen optionalen Schritt zum Gewinnen und zum Reinigen der Diisopropylaminoarylboranverbindung der in Schritt (1) erhaltenen Formel V_{A} aus dem Reaktionsmedium,
(3) einen Schritt zur Behandlung des Aminoarylborans der in Schritt (1) oder (2) erhaltenen Formel V_{A}, wobei es sich bei der Behandlung insbesondere um eine Alkoholyse, bevorzugt mit Methanol, handelt, auf die eine Umesterung mit Pinacol folgt,
zur Herstellung eines Arylpinacolborans mit einer der folgenden Formeln: 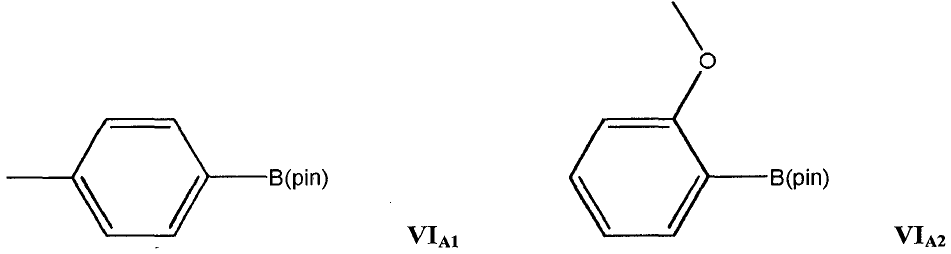 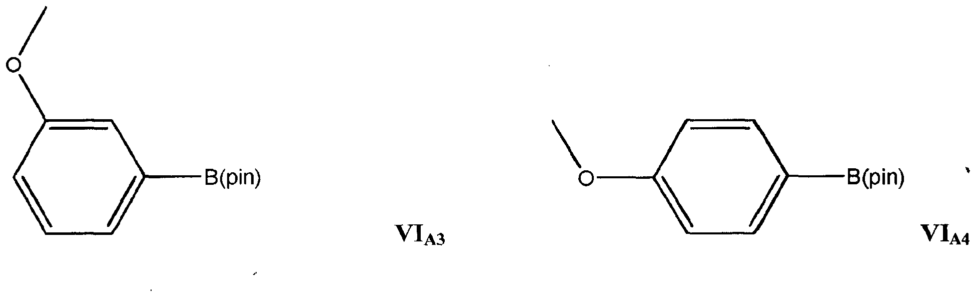 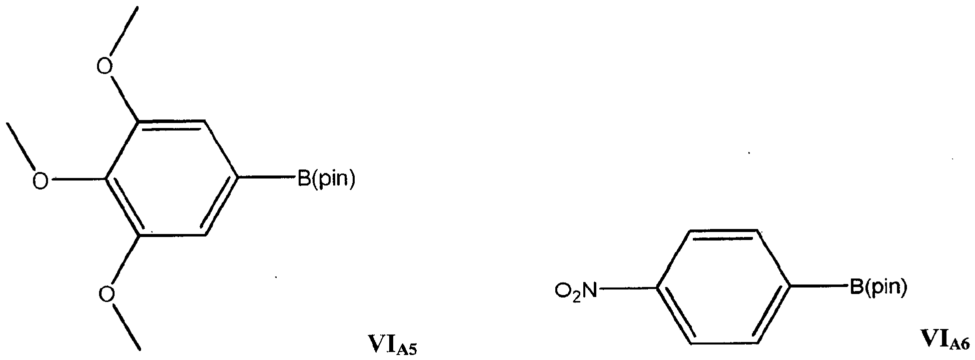 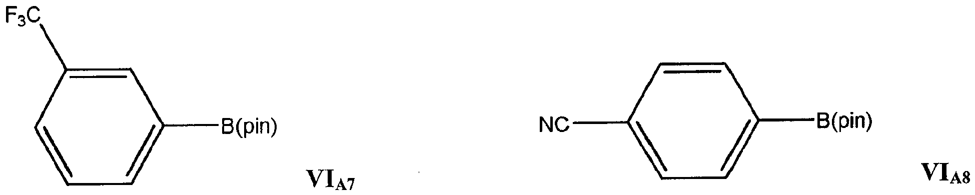 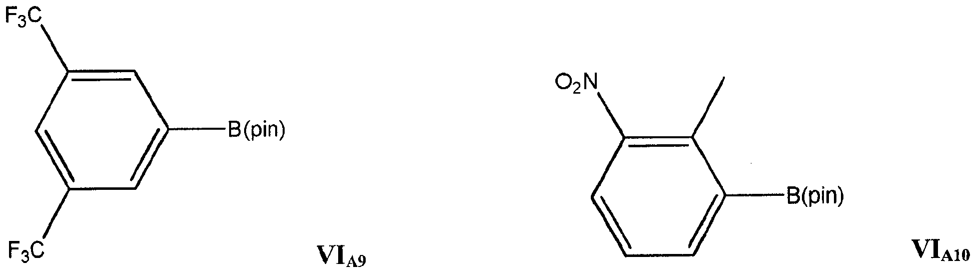 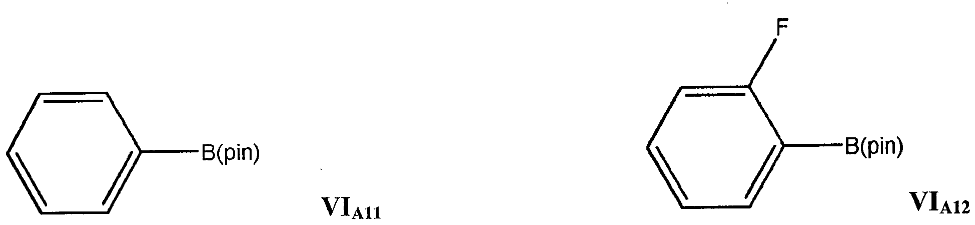 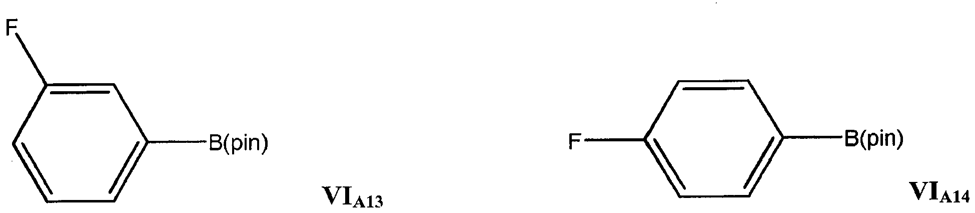 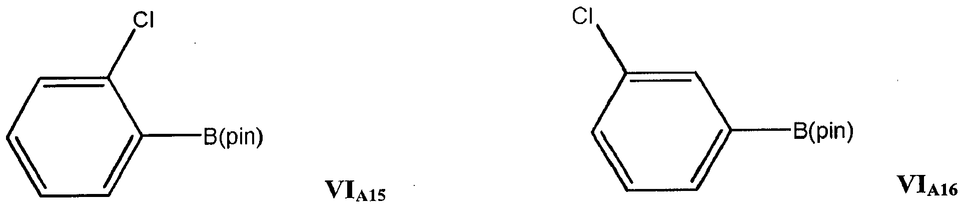 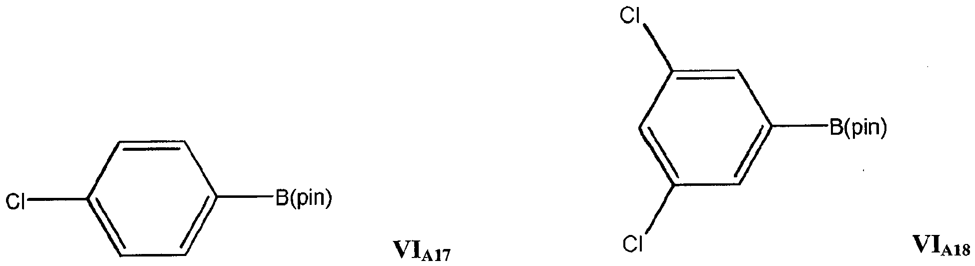 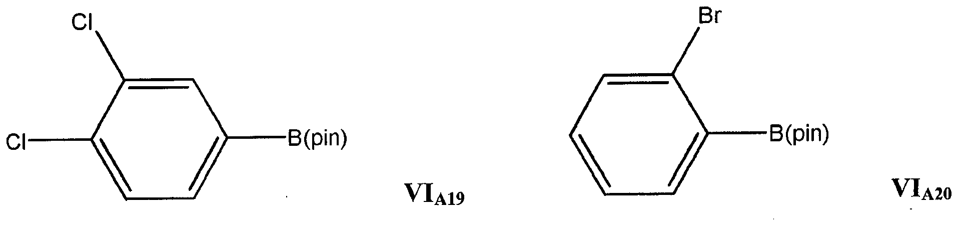 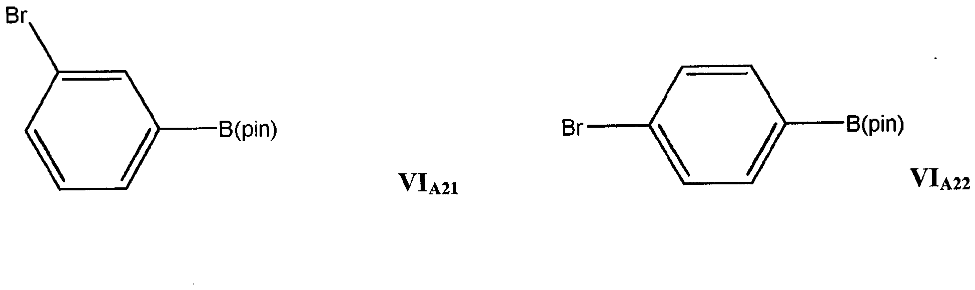 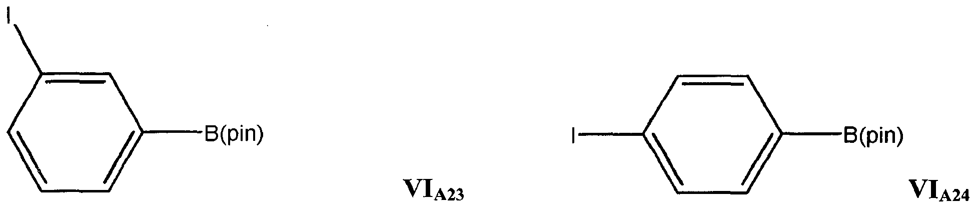 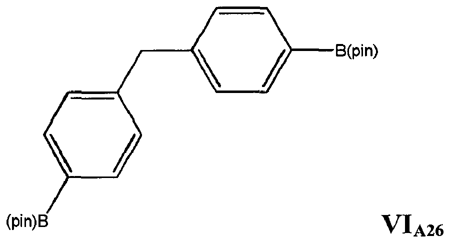 wobei -B(pin) für Folgendes steht:

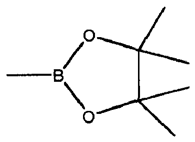

14. Verfahren nach einem der Ansprüche 2 bis 13, umfassend:
(1) einen Schritt zum Inkontaktbringen eines Arendiazoniumsalzes oder eines Heteroarendiazoniumsalzes mit einer bororganischen Verbindung in einem Reaktionsmedium, das ein Lösemittel enthält, in Abwesenheit einer Base, zur Herstellung eines Aminoarylborans der Formel V, das nicht isoliert ist,
(2) einen Schritt zum Behandeln der in Schritt (1) erhaltenen Verbindung V mittels Methanolyse, gefolgt von einer Umesterung mit Pinacol, zur Herstellung eines Arylpinacolborans der Formel VI_{A},
wobei die Schritte (1) und (2) gemäß einer Ein-Topf-Synthese durchgeführt werden,
insbesondere umfassend:
(1) einen Schritt zum Inkontaktbringen eines Arendiazoniumsalzes oder eines Heteroarendiazoniumsalzes mit einer bororganischen Verbindung, die mindestens eine B-H-Bindung enthält, in einem Reaktionsmedium, das ein Lösemittel enthält, in Abwesenheit einer Base,
in Gegenwart eines Aktivierungsmittels unter Bedingungen eines kontinuierlichen Stroms,
in einem Leitungssystem, das zwei Röhren umfasst, die in einer kreisförmigen Form gewickelt sind,
- wobei eine Röhre ein Vorreaktor R1 ist, in den eine Lösung aus dem Arendiazoniumsalz oder dem Heteroarendiazoniumsalz und eine Lösung aus dem Aktivierungsmittel in Acetonitril, injiziert werden, um bei einer Temperatur im Bereich zwischen 10 °C bis 60 °C, insbesondere im Bereich zwischen 20 °C bis 30 °C, bevorzugt gleich etwa 25 °C gemischt zu werden,
- wobei die zweite Röhre ein Reaktor R2 ist, in dem das Gemisch, das das Arendiazoniumsalz oder das Heteroarendiazoniumsalz und das Aktivierungsmittel sowie eine Lösung aus Diisopropylaminoboran in Acetonitril enthält, bei der Temperatur von R1 injiziert wird, wobei die beiden Injektionen unter Bedingungen eines kontinuierlichen Stroms und mit der gleichen Geschwindigkeit durchgeführt werden,
(2) einen Schritt zum Sammeln des Rohprodukts am Auslass des Reaktors R2,
wobei das Rohprodukt optional methanolysiert wird, um einen Boronsäureester zu ergeben, der optional, insbesondere mit Pinacol, umgeestert wird, um ein Arylpinacolboran zu ergeben, oder hydrolysiert wird, um eine Arylboronsäure zu ergeben.

15. Verfahren nach einem der Ansprüche 2 bis 14, das einen Schritt zum Nachweis eines Anilins umfasst, das optional mit den gleichen Substituenten wie das Arendiazoniumsalz substituiert ist.

## Revendications

1. Utilisation d'un sel d'arènediazonium ou d'un sel d'héteroarènediazonium et d'un composé organoboronique contenant au moins une liaison bore-hydrogène, en l'absence de base,
pour la mise en oeuvre d'un procédé impliquant une réaction d'arylation conduisant à un composé arylborane.

2. Procédé de préparation d'un composé arylborane contenant au moins une liaison bore-hydrogène, par arylation d'une liaison bore-hydrogène, comprenant:
(1) une étape de mise en contact d'un sel d'arènediazonium ou d'un sel d'héteroarènediazonium avec un composé organoboronique contenant au moins une liaison bore-hydrogène, dans un milieu réactionnel contenant un solvant, en l'absence de base,
pour la préparation d'un composé arylborane,
(2) une éventuelle étape de récupération
et purification dudit composé arylborane obtenu à l'étape (1).

3. Procédé selon la revendication 2, de préparation d'un composé arylborane,
dans lequel le groupe aryle Ar a de 6 à 26 atomes de carbone,
le groupe aryle étant éventuellement un groupement hétéroaryle contenant un ou plusieurs hétéroatome(s) choisi(s) parmi O, N ou S, et ayant de 4 à 26 atomes de carbone,
ledit arylborane étant en particulier:
▪ un aminoarylborane de formule suivante 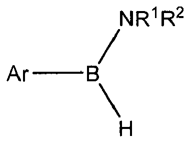 dans lequel le groupe amino est un groupe -NR¹R², dans lequel R¹ et R², identiques ou différents, représentent:
• des alkyles linéaires ayant de 1 à 20 atomes de carbone, des alkyles ramifiés ayant de 3 à 20 atomes de carbone ou des cycloalkyles ayant 3 à 20 atomes de carbone,
• des benzyles ayant de 7 à 20 atomes de carbone, dans lesquels
- le noyau aromatique est éventuellement substitué par un ou des halogène(s), des groupes alkyle, hydroxy, alcoxy ayant de 1 à 10 atomes de carbone,
- et/ou l'atome de carbone du groupe méthylène lié à l'atome d'azote, est éventuellement substitué par un groupe alkyle ayant de 1 à 10 atomes de carbone, en particulier par un groupe méthyle, ledit atome de carbone étant éventuellement chiral,
• des phényles éventuellement substitués sur le cycle aromatique par un ou des halogène(s), des groupes hydroxy, alcoxy ayant de 1 à 5 atomes de carbone,
• R¹ et R² pouvant former un groupe alkylène correspondant à la formule -CR³R⁴-(CH₂)ₙ-CR⁵R⁶, dans laquelle n est compris de 0 à 4, et les substituants R³ à R⁶ sont choisis, indépendamment les uns des autres, parmi l'hydrogène et les groupes alkyle ayant de 1 à 20 atomes de carbone, ledit groupe alkylène étant en particulier le 1,1,5,5-tetraméthylpentylène,
▪ un dialkoxyarylborane (ester arylboronique) de formule suivante 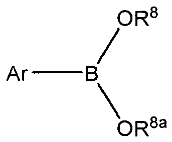 dans laquelle les groupes alcoxy sont -OR⁸ et -OR^{8a}, dans laquelle R⁸ et R^{8a}, identiques ou différents, représentent:
- un alkyle linéaire ayant de 1 à 20 atomes de carbone,
- un alkyle ramifié ayant de 3 à 20 atomes de carbone,
- un cycloalkyle ayant 3 à 20 atomes de carbone, éventuellement substitué par un ou plusieurs atome(s) d'halogène,
- un phényle éventuellement substitué par un ou des halogène(s), des groupes hydroxy, alcoxy ayant de 1 à 5 atomes de carbone,
- un benzyle ayant de 7 à 20 atomes de carbone, dans lequel
- le noyau aromatique est éventuellement substitué par un ou des halogène(s), des groupes alkyle, hydroxy, alcoxy ayant de 1 à 10 atomes de carbone,
- et/ou l'atome de carbone du groupe méthylène lié à l'atome d'azote, est éventuellement substitué par un groupe alkyle ayant de 1 à 10 atomes de carbone, en particulier par un groupe méthyle, ledit atome de carbone étant éventuellement chiral,
- ou un groupe acétoxy ayant de 1 à 20 atomes de carbone,
les groupes alcoxy en -OR⁸ et -OR^{8a} étant en particulier reliés par une chaîne de 2 à 4 atomes de carbone et formant éventuellement un cycle à 5 ou 6 chaînons comprenant l'atome de bore et les deux atomes d'oxygène, le cycle étant donc un cycle à 5 à 7 chaînons issu d' un diol choisi parmi l'éthane-1,2-diol, le propane-1,3-diol, le 2,3-diméthylbutane-2,3-diol (pinacol), le pinanediol, le 2-méthylbutane-2,3-diol, le 1,2 -diphényléthane-1,2-diol, le 2-méthylpentane-2,4-diol, le 1,2-dihydroxybenzène (catéchol), en particulier le pinacol ou le pinanediol,
▪ un alkoxyaminoarylborane de formule suivante 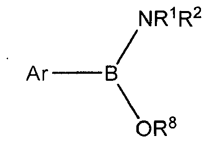 dans laquelle
▪ le groupe amino est un groupe -NR¹R², R¹ et R² ayant les significations mentionnées ci-dessus,
▪ le groupe alcoxy est un groupe -OR⁸, R⁸ ayant les significations mentionnées ci-dessus,
▪ une diaminoarylborane de formule suivante 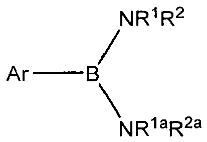 dans laquelle les groupes amino sont des groupes -NR¹R² et -NR^{1a}R^{2a}, R¹ et R² ayant les significations mentionnées ci-dessus, R^{1a} étant identique ou différent de R¹, et R^{2a} étant identique ou différent de R², R^{1a} et R^{2a} étant identiques ou différents,
ledit arylborane étant en particulier un aminoarylborane ou un diaminoarylborane cyclique.

4. Procédé selon l'une quelconque des revendications 2 ou 3, comprenant une étape de mise en contact d'un sel d'arènediazonium ou d'un sel d'héteroarènediazonium de formule Ar-N₂A,
dans laquelle
▪ A représente un anion choisi parmi le chlorure, le bromure, l'iodure, l'hexafluorophosphate, le bistrifluorométhylsulfonylamidure, les alkylsulfonates, les arylsulfonates, les alkylsulfates, les alkylcarboxylates, le trifluoroacétate, les triflates ou le tétrafluoroborate, de préférence l'anion tétrafluoroborate,
▪ Ar est choisi parmi les groupes aromatiques, y compris:
▪ un groupe aryle, de préférence un phényle, un naphtalényle, un anthracényle, un phénanthrényle, un groupe biphényle, ledit groupe aryle étant éventuellement mono- ou polysubstitué, en particulier di ou trisubstitué, les substituants, identiques ou différents, étant choisis indépendamment les uns des autres,
▪ un groupe hétéroaryle, de préférence la pyridine, la pyrazine, l'imidazole, le pyrazole, l'oxazole, l'isoquinoléine, le thiophène, le benzothiophène, le furane, le benzofurane, l'isoindole, portant optionnellement au moins un substituant,
le(s)dit(s) substituant(s) porté(s) par le groupe aryle ou le groupe hétéroaryle étant choisi parmi
□ - F, -Cl, -Br or -I,
□ -SO₂-NH₂, ou l'un de ses sels, -SO₂-R⁹,
□ -NO₂,
□ -CF₃,
□ -CN,
□ -R¹⁰, un alkyle linéaire ayant de 1 à 20 atomes de carbone, un alkyle ramifié ayant de 3 à 20 atomes de carbone ou un cycloalkyle ayant de 3 à 20 atomes de carbone,
□ un groupe alcoxy -OR¹¹,
□ -OSi^{t}BuPh₂ de formule suivante 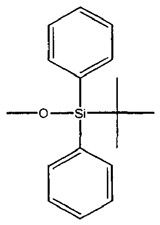
□ -OSi^{t}BuMe₂ de formule suivante 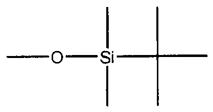
□ un groupe alkylthio -SR¹²,
□ un groupe carboxylique -COOH, ou un groupe ester -COOR¹³, ou un groupe amido -CO-NH₂ ou l'un de ses sels, -CO-NR¹⁴R^{14a},
□ un groupe céto -CO-R¹⁵, éventuellement protégé en tant qu'acétal ou thioacétal,
□ un groupe amino -NR¹⁶R^{16a} ou l'un de ses sels,
□ un groupe aldéhyde éventuellement protégé en tant qu'acétal ou thioacétal,
□ un groupe trialkylsilyle -SiR¹⁷₃,
□ un groupe benzyle ayant de 7 à 20 atomes de carbone, dans lequel
- le noyau aromatique est éventuellement substitué par un ou des halogène(s), des groupes alkyle, hydroxy, alcoxy ayant de 1 à 10 atomes de carbone, ou par une amine ou un groupe diazonium,
- et/ou l'atome de carbone du groupe méthylène lié à l'atome d'azote, est éventuellement substitué par un groupe alkyle ayant de 1 à 10 atomes de carbone, en particulier par un groupe méthyle, ledit atome de carbone étant éventuellement chiral,
□ un groupe borylé dans lequel le bore est un atome de bore B(III) (état d'oxydation III), ledit groupe étant en particulier un groupe dialkoxyboryle de formule 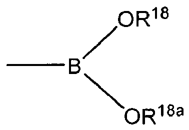 dans laquelle
R¹⁸ et R^{18a}, identiques ou différents, représentent:
- des alkyles linéaires ayant de 1 à 20 atomes de carbone,
- des alkyles ramifiés ayant de 3 à 20 atomes de carbone,
- des cycloalkyles ayant de 3 à 20 atomes de carbone, éventuellement substitués par un ou plusieurs atome(s) d'halogène,
- des phényles éventuellement substitués par un ou des halogène(s), des groupes hydroxy, alcoxy ayant de 1 à 5 atomes de carbone,
- des benzyles ayant de 7 à 20 atomes de carbone, dans lesquels
- le noyau aromatique est éventuellement substitué par un ou des halogène(s), des groupes alkyle, hydroxy, alcoxy ayant de 1 à 10 atomes de carbone,
- et/ou l'atome de carbone du groupe méthylène lié à l'atome d'azote, est éventuellement substitué par un groupe alkyle ayant de 1 à 10 atomes de carbone, en particulier par un groupe méthyle, ledit atome de carbone étant éventuellement chiral,
- ou des groupes acétoxy ayant de 1 à 20 atomes de carbone,
les groupes alcoxy en -OR⁸ et -OR^{8a} étant en particulier reliés par une chaîne de 2 à 4 atomes de carbone et formant éventuellement un cycle comprenant l'atome de bore et les deux atomes d'oxygène, le cycle étant donc un cycle à 5 à 7 chaînons issu d' un diol choisi parmi l'éthane-1,2-diol, le propane-1,3-diol, le 2,3-diméthylbutane-2,3-diol (pinacol), le pinanediol, le 2-méthylbutane-2,3-diol, le 1,2 -diphényléthane-1,2-diol, le 2-méthylpentane-2,4-diol, le 1,2-dihydroxybenzène (catéchol), en particulier le pinacol ou le pinanediol,
□ un groupe borylé dans lequel le bore est un atome de bore B (IV) (état d'oxydation IV), étant en particulier:
▪ un groupe trifluoroborate,
▪ un groupe trihydroxyborate,
▪ un groupe trialkoxyborate, -B(OR^{a})₃, dans lequel R^{a} est un groupe alkyle ayant de 1 à 10 atomes de carbone, (OR^{a})₃ pouvant former deux cycles entre les trois atomes d'oxygène, issu d'un triol choisi parmi le 1,2,3-propane triol (glycérol) ou le 1,1,1-tris(hydroxyméthyl)éthane (2-(hydroxyméthyl)-2-méthyl-1,3-propanediol),
▪ un boratrane généré à partir d'un aminodiol contenant de 3 à 20 atomes de carbone, ledit aminodiol formant, avec l'atome de bore, des cycles de 5 ou 6 chaînons et ledit aminodiol étant un N, N-bis (hydroxyalkyl)amine de formule HO-R^{b}-NR^{c}-R^{b'}-OH,
dans laquelle
R^{b} et R^{b'}, identiques ou différents, sont des groupes alkylène linéaires ayant 2 ou 3 atomes de carbone ou des groupes alkylène ramifiés, ayant de 3 à 5 atomes de carbone,
R^{c} est un atome d'hydrogène ou un groupe alkyle ayant 1 à 4 atomes de carbone,
▪ un groupe borate MIDA issu de l'acide 2,2'-(méthylazanediyl) diacétique et ayant la formule suivante 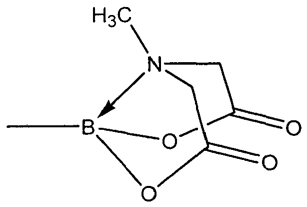
□ une combinaison de ce qui précède,
où
• R¹⁰ et R¹⁷ représentent des alkyles linéaires ayant de 1 à 20 atomes de carbone, des alkyles ramifiés ayant de 3 à 20 atomes de carbone ou des cycloalkyles ayant 3 à 20 atomes de carbone,
• R⁹, R¹¹, R¹², R¹³, R¹⁴, R^{14a}, R¹⁵, R¹⁶ et R^{16a} représentent des alkyles linéaires ayant de 1 à 20 atomes de carbone, des alkyles ramifiés ayant de 3 à 20 atomes de carbone ou des cycloalkyles ayant 3 à 20 atomes de carbone, éventuellement substitués par un ou plusieurs atome(s) d'halogène, ou des phényles éventuellement substitués par un ou des halogène(s), des groupes hydroxy, alcoxy ayant de 1 à 5 atomes de carbone, ou des benzyles ayant de 7 à 20 atomes de carbone, dans lesquels le noyau aromatique est éventuellement substitué par un ou des halogène(s), des groupes hydroxy, alcoxy, alkyle ayant de 1 à 10 atomes de carbone, et/ou l'atome de carbone du groupe méthylène lié à l'atome d'azote, est éventuellement substitué par un groupe alkyle ayant de 1 à 10 atomes de carbone, en particulier un groupe méthyle, ledit atome de carbone étant éventuellement chiral,
avec un composé organoboronique à aryler contenant au moins une liaison bore-hydrogène et ayant la formule générale I suivante 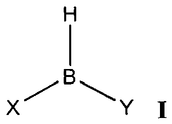 dans laquelle
▪ X représente:
□ -H,
□ -NR¹R²,
□ -R⁷,
□ -OR⁸,
où
• R¹ et R², identiques ou différents, représentent:
- des alkyles linéaires ayant de 1 à 20 atomes de carbone, des alkyles ramifiés ayant de 3 à 20 atomes de carbone ou des cycloalkyles ayant 3 à 20 atomes de carbone,
- des benzyles ayant de 7 à 20 atomes de carbone, dans lesquels
- le noyau aromatique est éventuellement substitué par un ou des halogène(s), des groupes hydroxy, alcoxy, alkyle ayant de 1 à 10 atomes de carbone,
- et/ou l'atome de carbone du groupe méthylène lié à l'atome d'azote, est éventuellement substitué par un groupe alkyle ayant de 1 à 10 atomes de carbone, en particulier par un groupe méthyle, ledit atome de carbone étant éventuellement chiral,
- des phényles éventuellement substitués sur le cycle aromatique par un ou des halogène(s), des groupes hydroxy, alcoxy ayant de 1 à 5 atomes de carbone,
R¹ et R² pouvant former un groupe alkylène correspondant à la formule -CR³R⁴-(CH₂)ₙ-R⁵R⁶, dans laquelle n est compris de 0 à 4, et les substituants R³ à R⁶ sont choisis, indépendamment les uns des autres, parmi l'hydrogène et les groupes alkyle ayant de 1 à 20 atomes de carbone, ledit groupe alkylène étant en particulier le 1,1,5,5-tetraméthylpentylène,
• R⁷ représente un alkyle linéaire ayant de 1 à 20 atomes de carbone, un groupe alkyle ramifié ayant de 3 à 20 atomes de carbone ou un cycloalkyle ayant de 3 à 20 atomes de carbone,
• R⁸ représente:
- un alkyle linéaire ayant de 1 à 20 atomes de carbone,
- un alkyle ramifié ayant de 3 à 20 atomes de carbone,
- un groupe cycloalkyle ayant 3 à 20 atomes de carbone, éventuellement substitué par un ou plusieurs atome (s) d'halogène,
- un groupe phényle éventuellement substitué par un ou des halogène(s), des groupes hydroxy, alcoxy ayant de 1 à 5 atomes de carbone,
- un benzyle ayant de 7 à 20 atomes de carbone, dans lequel
- le noyau aromatique est éventuellement substitué par un ou des halogène(s), des groupes hydroxy, alcoxy, alkyle ayant de 1 à 10 atomes de carbone,
- et/ou l'atome de carbone du groupe méthylène lié à l'atome d'azote, est éventuellement substitué par un groupe alkyle ayant de 1 à 10 atomes de carbone, en particulier par un groupe méthyle, ledit atome de carbone étant éventuellement chiral,
- ou un groupe acétoxy ayant de 1 à 20 atomes de carbone,
▪ Y représente:
□ -H,
□ -NR^{1a}R^{2a},
□ -R^{7a},
□ -OR^{8a},
où
• R^{1a} et R^{2a}, identiques ou différents, représentent:
- des alkyles linéaires ayant de 1 à 20 atomes de carbone, des alkyles ramifiés ayant de 3 à 20 atomes de carbone ou des cycloalkyles ayant 3 à 20 atomes de carbone,
- des benzyles ayant de 7 à 20 atomes de carbone, dans lesquels
- le noyau aromatique est éventuellement substitué par un ou des halogène(s), des groupes hydroxy, alcoxy, alkyle ayant de 1 à 10 atomes de carbone,
- et/ou l'atome de carbone du groupe méthylène lié à l'atome d'azote, est éventuellement substitué par un groupe alkyle ayant de 1 à 10 atomes de carbone, en particulier par un groupe méthyle, ledit atome de carbone étant éventuellement chiral,
- des phényles éventuellement substitués sur le cycle aromatique par un ou des halogène(s), des groupes hydroxy, alcoxy ayant de 1 à 5 atomes de carbone,
R^{1a} et R^{2a} pouvant former un groupe alkylène correspondant à la formule -CR^{3a}R^{4a}-(CH₂)ₙ CR^{5a}R^{6a}, dans laquelle n est compris de 0 à 4, et les substituants R^{3a} à R^{6a} sont choisis, indépendamment les uns des autres, parmi l'hydrogène et les groupes alkyle ayant de 1 à 20 atomes de carbone, ledit groupe alkylène étant en particulier le 1,1,5,5-tetraméthylpentylène,
• R^{7a} représente un alkyle linéaire ayant de 1 à 20 atomes de carbone, un groupe alkyle ramifié ayant de 3 à 20 atomes de carbone ou un cycloalkyle ayant de 3 à 20 atomes de carbone,
• R^{8a} représente:
- un alkyle linéaire ayant de 1 à 20 atomes de carbone,
- un alkyle ramifié ayant de 3 à 20 atomes de carbone,
- un groupe cycloalkyle ayant 3 à 20 atomes de carbone, éventuellement substitué par un ou plusieurs atome (s) d'halogène,
- un groupe phényle éventuellement substitué par un ou des halogène(s), des groupes hydroxy, alcoxy ayant de 1 à 5 atomes de carbone,
- un benzyle ayant de 7 à 20 atomes de carbone, dans lequel
- le noyau aromatique est éventuellement substitué par un ou des halogène(s), des groupes hydroxy, alcoxy, alkyle ayant de 1 à 10 atomes de carbone,
- et/ou l'atome de carbone du groupe méthylène lié à l'atome d'azote, est éventuellement substitué par un groupe alkyle ayant de 1 à 10 atomes de carbone, en particulier par un groupe méthyle, ledit atome de carbone étant éventuellement chiral,
- ou un groupe acétoxy ayant de 1 à 20 atomes de carbone,
X et Y étant choisis indépendamment, sous réserve que si X = H alors Y ≠ H,
et si X=-OR⁸ et Y=-OR^{8a}, alors les groupes alcoxy -OR⁸ et -OR^{8a} sont notamment reliés par une chaîne de 2 à 4 atomes de carbone et forment éventuellement un cycle incluant l'atome de bore et les deux atomes d'oxygène, le cycle étant par conséquent, un cycle à 5 à 7 éléments est issue d'un diol choisi parmi l'acide éthane-1,2-diol, le propane-1,3-diol, le 2,3-diméthylbutane-2,3-diol (pinacol), pinanediol, 2-methylbutane- 2,3-diol, le 1,2-diphényléthane-1,2-diol, le 2-méthylpentane-2,4-diol, le 1,2-dihydroxybenzène (catéchol), en particulier pinacol ou de pinanediol,
pour la préparation d'un arylborane ou d'un héteroarylborane de formule IV suivante 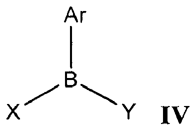 dans laquelle
X, Y et Ar ont les significations mentionnées ci-dessus.

5. Procédé selon l'une quelconque des revendications 2 à 4, dans lequel la réaction d'arylation est activée par des moyens d'activation ou non, dans lequel les moyens d'activation sont choisis parmi
• un agent d'activation, de préférence un complexe d'un métal de transition ou un sel d'un métal de transition ou un sel d'un complexe d'un métal de transition, contenant un métal de transition appartenant, en particulier, au groupe IV, VIII, IX, X ou XI, étant en particulier un métallocène ou un sel de celui-ci choisi parmi:
• un titanocène, en particulier (tBuCp)₂TiCl₂, CpTiCl₃, Cp₂TiCl₂, Cp*₂TiCl₂, Cp*TiCl₃, Cp₂Ti(CO)₂, TiCp₂, de préférence Cp₂TiCl₂,
où
- tBu est un groupe tertiobutyle,
- Cp est un groupe cyclopentadiényle, éventuellement substitué par un halogène, un groupe alkyle ayant 1 à 10 atomes de carbone, un groupe aromatique ou hétéroaromatique ayant 5 à 12 atomes de carbone, un groupe vinyle ayant 2 à 10 atomes de carbone, un groupe allyle ayant de 3 à 10 atomes de carbone, un sel d'alkylammonium ayant de 1 à 10 atomes de carbone,
- Cp * est un groupe 1,2,3,4,5-pentaméthylcyclopentadiényle,
• un zirconocène, en particulier (indényl)₂ZrCl₂, Cp₂ZrHCl (réactif de Schwartz), (tBuCp)₂ZrCl₂, de préférence Cp₂ZrHCl,
dans lequel l'indényle est un groupe benzocyclopentadiényle,
• un ferrocène, en particulier Cp₂Fe, BrCpFeCp, Cp*₂Fe, AcCpFeCp, *n*-BuCpFeCp, *t-*BuCpFeCp, vinylCpFeCp, de préférence Cp₂Fe,
• un ruthénocène, en particulier Cp₂Ru, Cp*₂Ru, ou un complexe de ruthénium, en particulier Ru(acac)₃, dans lequel acac représente l'acétylacétonate,
• un cobaltocène, notamment Cp₂Co, [Cp₂Co]PF₆ (cobaltocenium hexafluorophosphate), Cp*₂Co,
• un nickelocène, notamment Cp₂Ni, Cp*₂Ni,
• un complexe de cuivre, en particulier [Cu(OH)tmeda]₂, Cu(salen),
où
- tmeda représente la tétraméthyléthylènediamine,
- salen représente le 2,2'-éthylènebis(nitrilométhylidène) diphénol,
• un complexe de palladium, en particulier Pd(acac)₂ (diacetylacétonate de palladium), (CH₂=CH-CH₂PdCl)₂ (chlorure d'allylpalladium), un sel de palladium en particulier Pd(OAc)₂, Pd(CN)₂,
l'agent d'activation étant de préférence choisi parmi les métallocènes, en particulier les ferrocènes, titanocènes ou zirconocènes, de préférence Cp₂Fe, Cp₂TiCl₂ ou Cp₂ZrHCl,
• ou des moyens de génération de radicaux, de préférence par irradiation de lumière, de préférence l'irradiation de lumière ultraviolette (UV), à une longueur d'onde comprise de 180 nm à 400 nm, de préférence comprise de 200 nm à 400 nm, en particulier égale à environ 254 nm, ou un radical initiateur choisi parmi l'azobisisobutyronitrile (AIBN), le 1,1'-azobiscyclohexanecarbonitrile (ABCN), le peroxyde de dilauroyle (DLP).

6. Procédé selon l'une quelconque des revendications 2 à 5, dans lequel le solvant est aprotique et polaire, en particulier choisi parmi l'acétonitrile, le propionitrile, le butyronitrile, l'acétate d'éthyle, l'acétate d'isopropyle, le dioxanne, le diméthylacétamide (DMAc), l'acétone, la N-méthyl-2-pyrrolidone (NMP), le 2-méthoxy-2-méthylpropane (MTBE) ou le tétrahydrofuranne (THF), ou un mélange de ceux-ci,
en particulier l'acétonitrile.

7. Procédé selon l'une quelconque des revendications 2 à 6, pour la préparation d'un composé aminoarylborane comprenant:
(1) une étape de mise en contact d'un sel d'arènediazonium ou d'un sel d'hétéroarènediazonium avec un aminoborane de formule **II** suivante 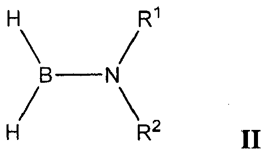 dans laquelle R¹ et R², identiques ou différents, ont les significations mentionnées dans la revendication 4,
dans un milieu réactionnel contenant un solvant, en l'absence d'une base,
pour la préparation d'un composé aminoarylborane de formule **V**, 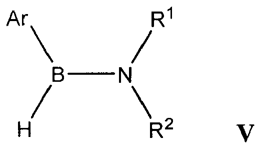 dans laquelle Ar, R¹ et R² ont les significations mentionnées dans la revendication 4, R¹ et R² étant de préférence des groupes *iso*propyle,
(2) une étape éventuelle de récupération et de purification du composé aminoarylborane de formule V du milieu réactionnel,
▪ en particulier pour la préparation d'un composé diisopropylaminoarylborane comprenant:
(1) une étape de mise en contact d'un sel d'arènediazonium ou un sel d'hétéroarènediazonium avec le diisopropylaminoborane de formule **II_{A}** suivante 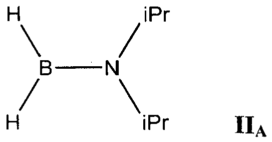 dans un milieu réactionnel contenant un solvant, en l'absence d'une base, pour la préparation d'un composé diisopropylaminoarylborane de formule **V_{A}**, 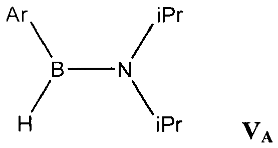 dans laquelle Ar a les significations mentionnées dans la revendication 4,
(2) une étape éventuelle de récupération et de purification du composé diisopropylaminoarylborane de formule **V_{A}** du milieu réactionnel,
▪ en particulier pour la préparation d'un composé diisopropylaminoarylborane comprenant:
(1) une étape de mise en contact d'un sel d'arènediazonium ou un sel d'hétéroarènediazonium avec le diisopropylaminoborane de formule **II_{A}** suivante 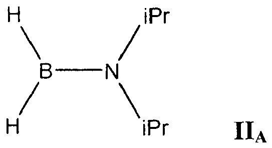 dans un milieu réactionnel contenant un solvant, en l'absence d'une base, en présence d'un agent d'activation choisi de préférence parmi les métallocènes, en particulier les ferrocènes, titanocènes, ou zirconocènes, de préférence Cp₂Fe, Cp₂TiCl₂ ou Cp₂ZrHCl,
pour la préparation d'un composé de formule diisopropylaminoarylborane **V_{A}**, 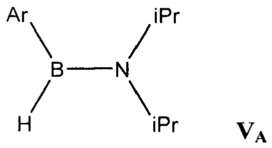 dans laquelle Ar a les significations mentionnées dans la revendication 4,
(2) une étape éventuelle de récupération et de purification du composé diisopropylaminoarylborane de formule **V_{A}** du milieu réactionnel.

8. Procédé selon l'une quelconque des revendications 2 à 6, pour la préparation d'un composé dialkoxyarylborane comprenant:
(1) une étape de mise en contact d'un sel d'arènediazonium ou d'un sel d'hétéroarènediazonium avec un dialkoxyborane de formule **III** suivante 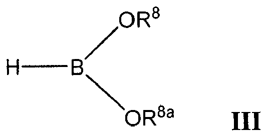 dans lequel R⁸ et R^{8a}, identiques ou différents, ont les significations mentionnées dans la revendication 4,
dans un milieu réactionnel contenant un solvant, en l'absence d'une base,
pour la préparation d'un composé dialkoxyarylborane de formule **VI**, 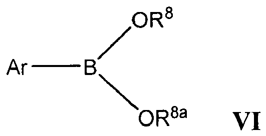 dans lequel R⁸, R^{8a} et Ar ont les significations mentionnées dans la revendication 4,
(2) une étape éventuelle de récupération et de purification du composé dialkoxyarylborane de formule **VI** du milieu réactionnel,
▪ en particulier pour la préparation d'un composé arylpinacolborane compremant:
(1) une étape de mise en contact d'un sel d'arènediazonium ou d'un sel d'hétéroarènediazonium avec le pinacolborane de formule **III_{A}** suivante 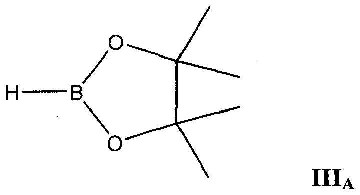 dans un milieu réactionnel contenant un solvant, en l'absence d'une base,
pour la préparation d'un composé arylpinacolborane de formule **VI_{A}**, 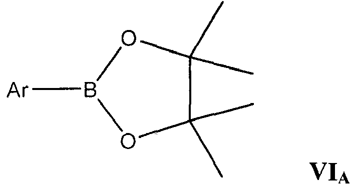 dans laquelle Ar a les significations mentionnées dans la revendication 4,
(2) une étape éventuelle de récupération et de purification du composé arylpinacolborane de formule **VIA** du milieu réactionnel,
▪ en particulier pour la préparation d'un composé arylpinacolborane comprenant:
(1) une étape de mise en contact d'un sel d'arènediazonium ou d'un sel d' hétéroarènediazonium avec le pinacolborane de formule suivante **III_{A}** 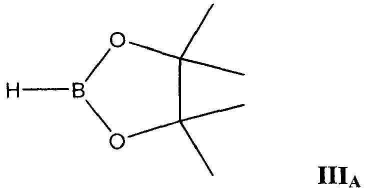 dans un milieu réactionnel contenant un solvant, en l'absence d'une base,
en présence d'un agent d'activation choisi de préférence parmi les métallocènes, en particulier les ferrocènes, titanocènes, ou zirconocènes, de préférence Cp₂Fe, Cp₂TiCl₂ or Cp₂ZrHCl, pour la préparation d'un composé arylpinacolborane de formule **VI_{A}**, 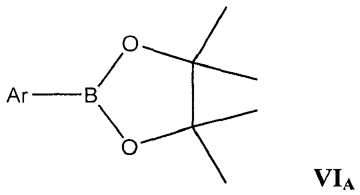 dans laquelle Ar a les significations mentionnées dans la revendication 4,
(2) une étape éventuelle de récupération et de purification du composé arylpinacolborane de formule **VI_{A}** du milieu réactionnel.

9. Procédé selon la revendication 7, dans lequel l'étape de mise en contact d'un sel d'arènediazonium ou d'un sel d'hétéroarènediazonium avec un aminoborane est effectuée dans un solvant polaire aprotique, de préférence l'acétonitrile,
à une température comprise de 10°C à 60°C, en particulier comprise de 18°C à 30°C, de préférence égale à environ 20°C, pendant une durée allant de 1 h à 3 h, de préférence 2,5 h, pour la préparation d'un aminoarylborane,
ou dans lequel l'étape de mélange d'un sel d'arènediazonium ou d'un sel d'hétéroarèneazonium avec un aminoborane est effectuée dans un solvant polaire aprotique, de préférence l'acétonitrile,
en présence d'un agent d'activation contenant un métal de transition, ledit agent d'activation étant de préférence choisi parmi les métallocènes, en particulier les ferrocènes, titanocènes, ou zirconccènes, de préférence Cp₂Fe, Cp₂TiCl₂ ou Cp₂ZrHCl,
avec un pourcentage molaire par rapport au métal compris de 0,001% à 5%, en particulier compris de 0,001% à 1%, de préférence égale à environ 0,001%, ou environ 0,01%, ou environ 0,1% ou environ 1% ,
à une température comprise de 10°C à 60°C, en particulier comprise de 18°C à 30°C, de préférence égale à environ 20°C, pendant une durée allant de 1 h à 3 h, de préférence 2,5 h, pour la préparation d'un composé aminoarylborane.

10. Procédé selon la revendication 8, dans lequel l'étape de mise en contact d'un sel d'arènediazonium ou d'un sel d'hétéroarènediazonium avec un dialkoxyborane est effectuée dans un solvant polaire aprotique, de préférence l'acétonitrile,
à une température comprise de 25°C à 50°C, en particulier comprise de 20°C à 30°C, de préférence égale à environ 25°C, pendant une durée allant de 2 h à 4 h, de préférence 2,5 h, pour la préparation d'un dialkoxyarylborane,
ou dans lequel l'étape de mélange d'un sel d'arènediazonium ou d'un sel d'hétéroarèneazonium avec un alkoxyborane est effectuée dans un solvant polaire aprotique, de préférence l'acétonitrile,
en présence d'un agent d'activation contenant un métal de transition, ledit agent d'activation étant de préférence choisi parmi les métallocènes, en particulier les ferrocènes, titanocènes, ou zirconocènes, de préférence Cp₂Fe, Cp₂TiCl₂ ou Cp₂ZrHCl,
avec un pourcentage molaire par rapport au métal compris de 0,001% à 5%, en particulier compris de 0,001% à 1%, de préférence égale à environ 0,001%, ou environ 0,01%, ou environ 0,1% ou environ 1% ,
à une température comprise de 20°C à 50°C, en particulier comprise de 20°C à 30°C, de préférence égale à environ 25°C, pendant une durée allant de 2 h à 4 h, de préférence 2,5 h, pour la préparation d'un composé dialkoxyarylborane.

11. Procédé selon l'une quelconque des revendications 2 à 7 ou 9, comprenant après l'étape (1) ou (2), une étape (3) de traitement de l'aminoarylborane obtenu à l'étape (1) ou (2), en un arylborane différent de celui obtenu à l'étape (1) ou (2),
ledit traitement étant en particulier une alcoolyse, de préférence avec un premier alcool, en particulier le méthanol, ladite alcoolyse étant éventuellement suivie
• par une transestérification avec un deuxième alcool, de préférence un diol choisi parmi l'acide éthane-1,2-diol, le propane-1,3-diol, le 2,3-diméthylbutane-2,3-diol (pinacol), pinanediol, le 2-méthylbutane -2,3-diol, le 1,2-diphényléthane-1,2-diol, le 2-méthylpentane-2,4-diol, le 1,2-dihydroxybenzène (catéchol), en particulier le pinacol ou le pinanediol,
pour la préparation d'un ester arylboronique de formule **VI** suivante 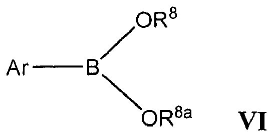 dans lequel R⁸, R^{8a} et Ar ont les significations indiquées dans la revendication 4, en particulier pour la préparation d'un aryldialkoxyborane cyclique,
de préférence pour la préparation d'un arylpinacolborane de formule **VI_{A}** suivante 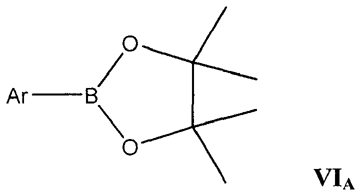 dans laquelle Ar a les significations mentionnées ci-dessus,
• ou par une hydrolyse pour obtenir un acide arylboronique de formule **VII** 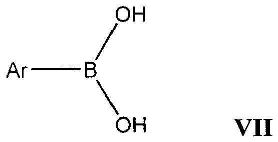
dans laquelle Ar a les significations mentionnées ci-dessus.

12. Procédé selon l'une quelconque des revendications 2 à 7 ou 9,
pour la préparation des diisopropylaminoarylboranes de formules représentées ci-dessous, lesdits diisopropylaminoboranes étant isolé et purifié, ou non:

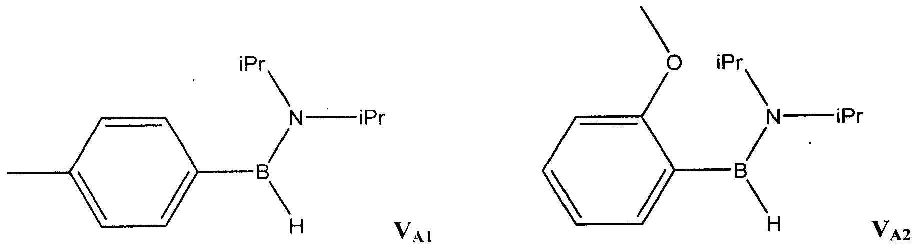

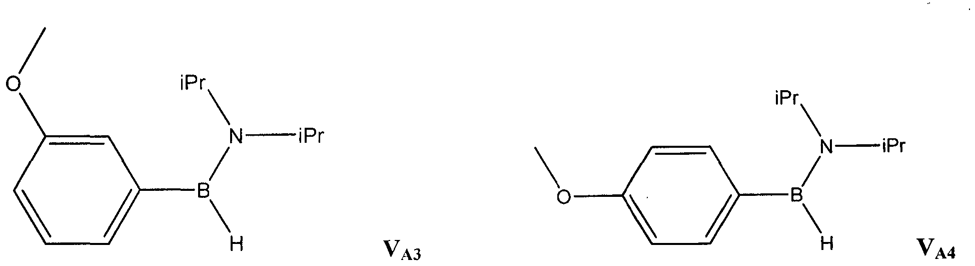

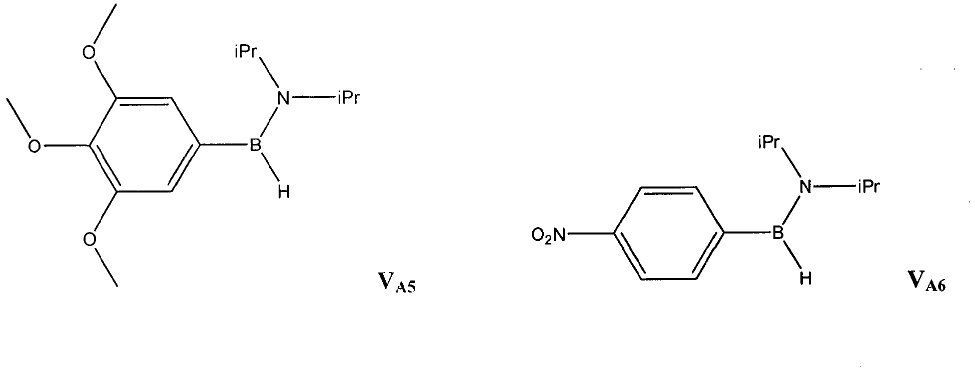

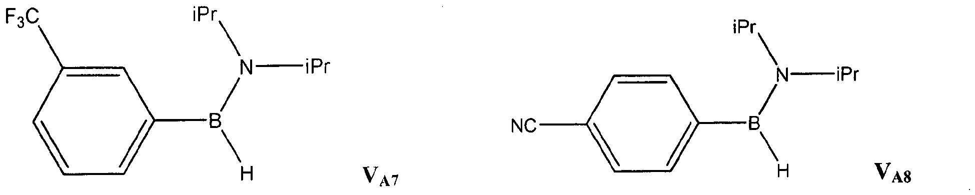

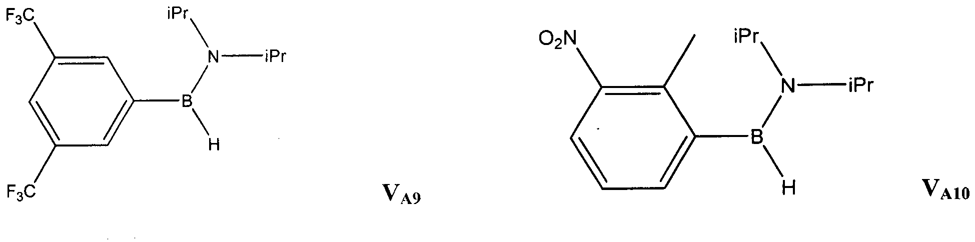

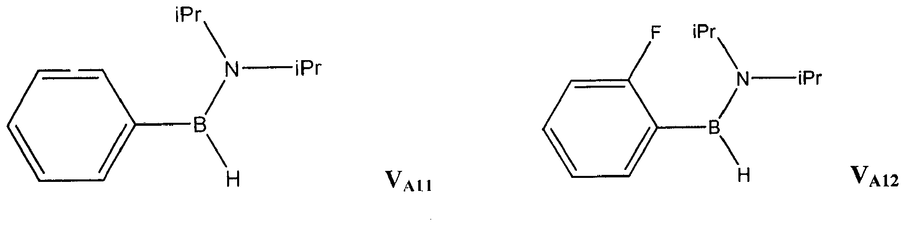

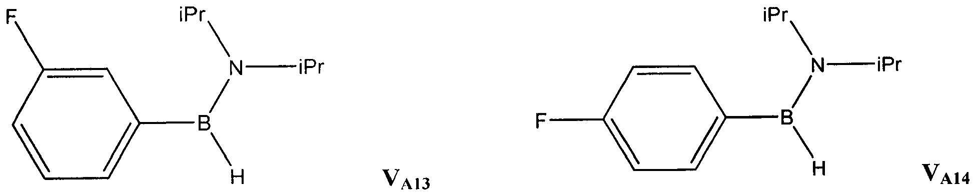

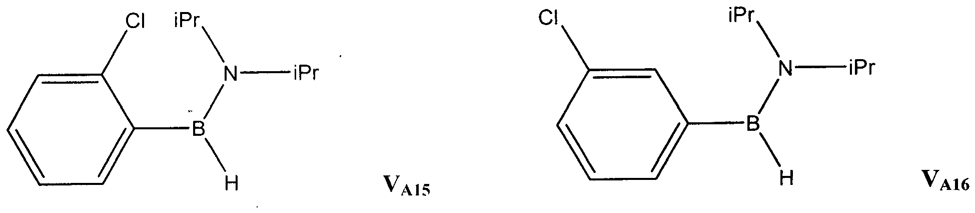

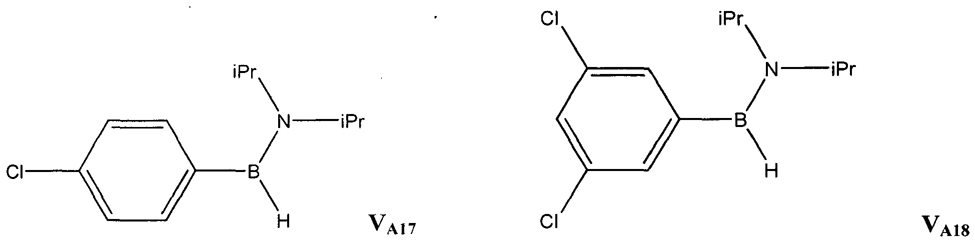

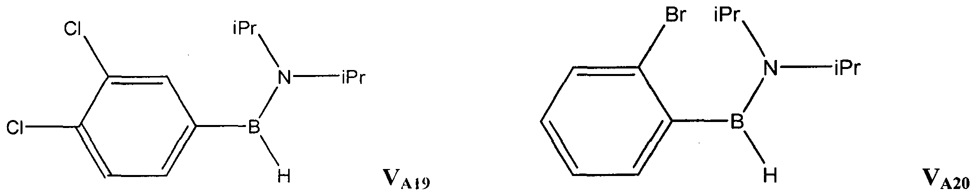

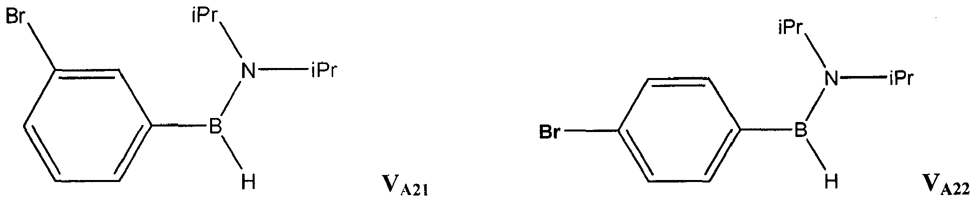

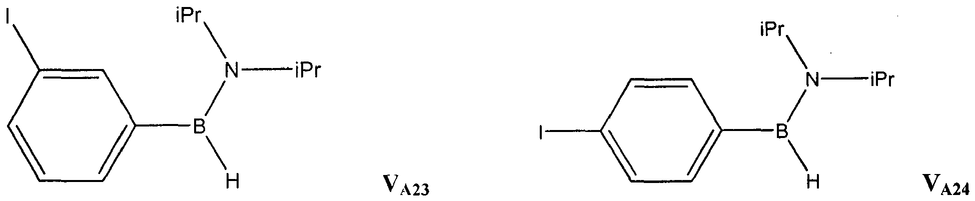

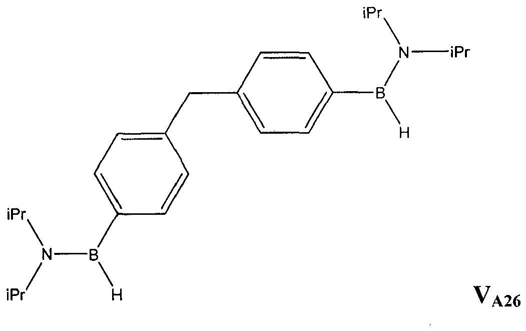

13. Procédé selon la revendication 12, comprenant:
(1) une étape de mise en contact d'un sel d'arènediazonium ou d'un sel d'hétéroarènediazonium avec le diisopropylaminoborane de formule **II_{A}** suivante 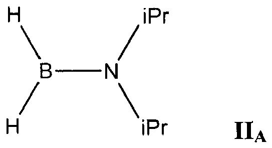 dans un milieu réactionnel contenant un solvant, en l'absence d'une base,
en présence de 0,1 % Cp₂Fe comme agent d'activation,
pour la préparation d'un composé diisopropylaminoarylborane de formule **V_{A}**, 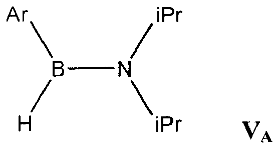 dans lequel le composé V_{A} a les significations mentionnées dans la revendication 12,
(2) une étape éventuelle de récupération et de purification du milieu de réaction, du composé diisopropylaminoarylborane de formule **VA** obtenu à l'étape (1),
(3) une étape de traitement de l'aminoarylborane de formule **V_{A}** obtenue à l'étape (1) ou (2)
ledit traitement étant en particulier une alcoolyse, de préférence avec du méthanol, suivie d'une transestérification avec du pinacol,
pour la préparation d'un arylpinacolborane ayant l'une des formules suivantes: 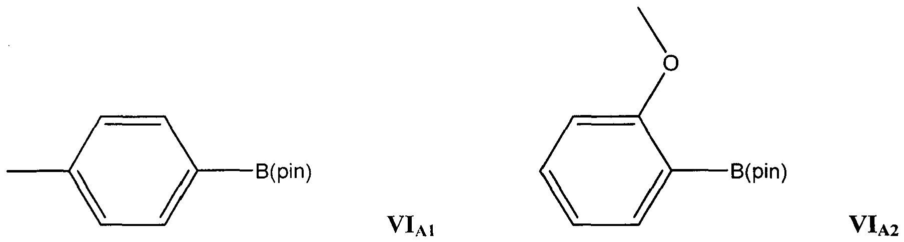 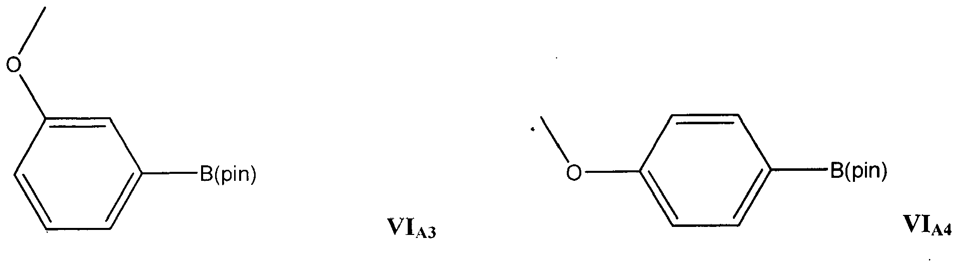 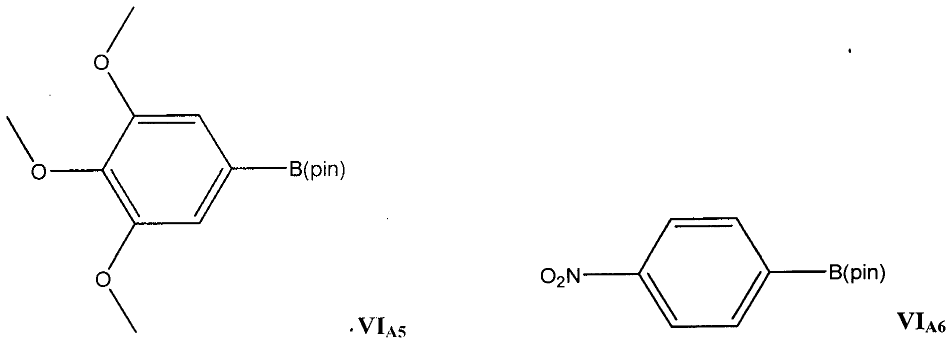 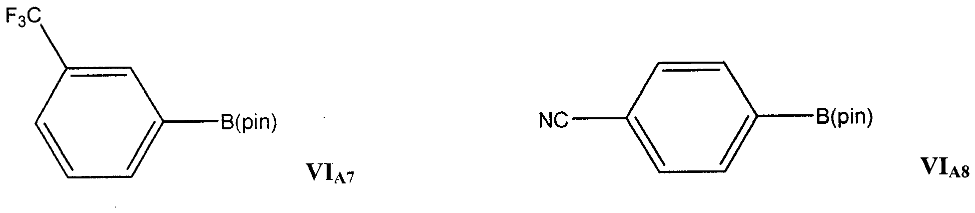 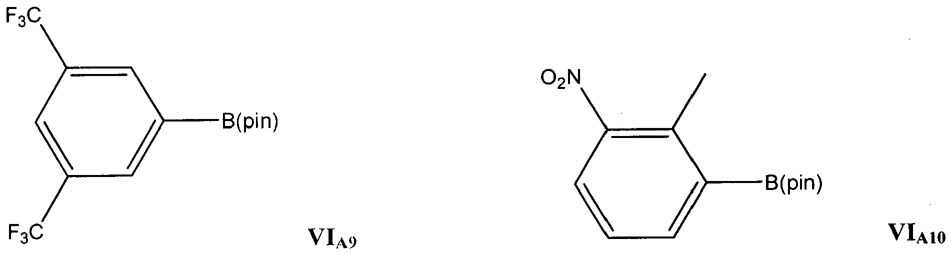 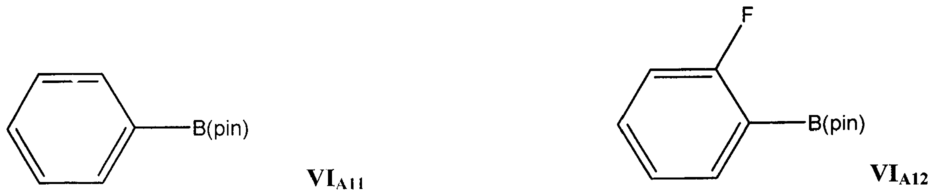 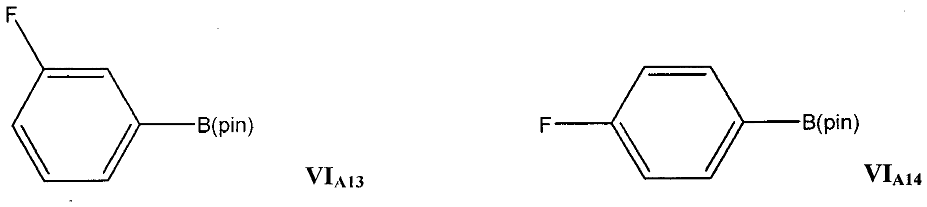 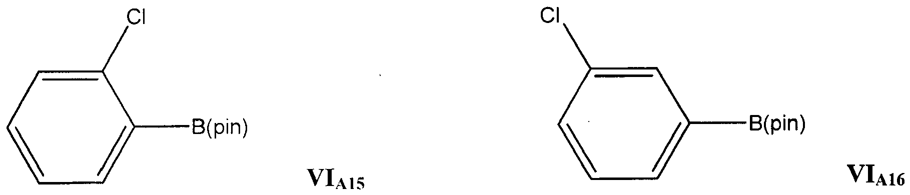 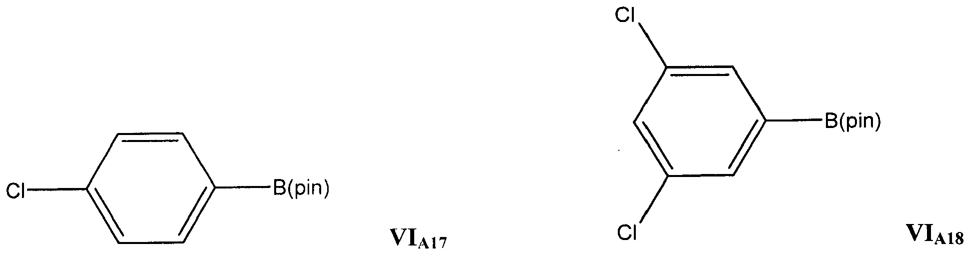 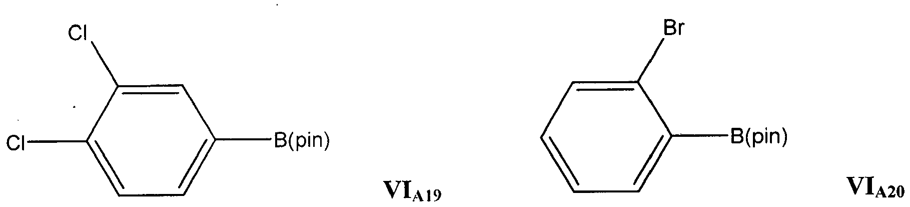 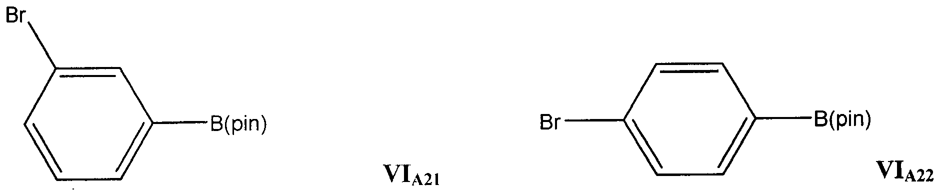 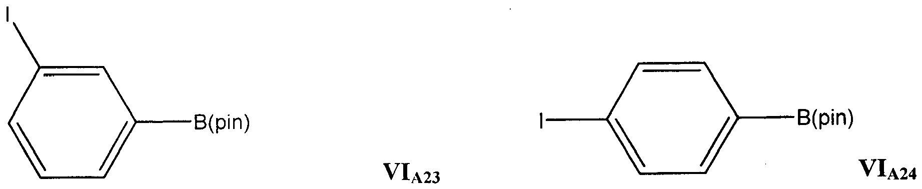 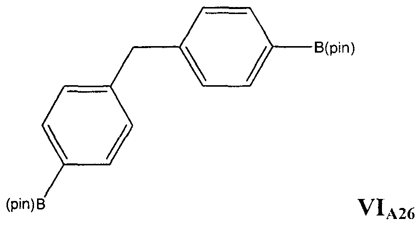 où -B(pin) représente:

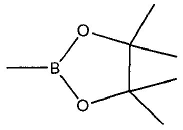

14. Procédé selon l'une quelconque des revendications 2 à 13, comprenant:
(1) une étape de mise en contact d'un sel d'arènediazonium ou d'un sel d'hétéroarènediazonium avec un composé organoboronique dans un milieu réactionnel contenant un solvant, en l'absence d'une base,
pour la préparation d'un aminoarylborane de formule **V** qui n'est pas isolé,
(2) une étape de traitement de **V** obtenu à l'étape (1) par méthanolyse, suivie d'une transestérification avec du pinacol,
pour la préparation d'un arylpinacolborane de formule **VI_{A}**,
les étapes (1) et (2) étant effectuées selon une synthèse monotope,
comprenant en particulier:
(1) une étape de mise en contact d'un sel d'arènediazonium ou d'un sel d'hétéroarènediazonium avec un composé organoborique contenant au moins une liaison B-H, dans un milieu réactionnel contenant un solvant, en l'absence d'une base,
en présence d'un agent d'activation, dans des conditions d'écoulement continu,
dans un système tubulaire comprenant deux tubulures, enveloppé dans une forme circulaire,
- une tubulure étant un pré-réacteur R1, dans lequel une solution du sel arènediazonium ou du sel d'hétéroarènediazonium et une solution de l'agent d'activation, dans l'acétonitrile, sont injectées pour être mélangées, à une température comprise de 10°C à 60°C , en particulier comprise de 20°C et 30°C, de préférence égale à environ 25°C,
- la seconde tubulure étant un réacteur R2, dans lequel le mélange contenant le sel d'arènediazonium ou le sel d'hétéroarènediazonium et de l'agent d'activation est injecté, ainsi que d'une solution de diisopropylaminoborane dans l'acétonitrile, à la température de R1, les deux injections étant effectuées dans des conditions d'écoulement continu et avec la même vitesse,
(2) une étape de collecte du brut à la sortie du réacteur R2,
le brut étant éventuellement méthanolysé pour donner un ester boronique, qui est éventuellement transestérifié, en particulier avec du pinacol, pour donner un arylpinacolborane, ou hydrolysé pour donner un acide arylboronique.

15. Procédé selon l'une quelconque des revendications 2 à 14, comprenant une étape de détection d'une aniline éventuellement substituée par les mêmes substituants que ceux du sel d'arènediazonium.
